# EUROPEAN PATENT APPLICATION

(11) **EP 1 458 178 A2**
(43) Date of publication of application: **15.09.2004**
(21) Application number: 04003178.3
(22) Date of filing: 12.02.2004
(51) Int. Cl.: H04N 1/405

(54) **Halftone dot conversion apparatus, halftone dot conversion program storage medium, and dot matrix**

(30) Priority: 13.02.2003 JP 2003034958; 24.03.2003 JP 2003080693; 24.03.2003 JP 2003080704; 19.12.2003 JP 2003423646
(71) Applicant: FUJI PHOTO FILM CO., LTD., Kanagawa-ken, 250-0193 (JP)
(72) Inventor: Sugizaki, Makoto, Fuji Photo Film Co., Ltd., Ashigarakami-gun Kanagawa 258-8538 (JP)
(74) Representative: Klunker . Schmitt-Nilson . Hirsch

(57) **Abstract**

There are disclosed a halftone dot conversion apparatus capable of creating a halftone dot image that is small in an interference between periodical noises occurred at the time of output and a periodical structure of halftone dots, and contributing to avoiding the graininess and prevention of the disorder in geometry on halftone dots; a halftone dot conversion program storage medium storing a halftone dot conversion program; and a dot matrix capable of readily creating the halftone dot image. A halftone dot conversion section forms the halftone dots by sets of drawing pixels number of which is associated with the tone values obtained by the tone value obtaining section, and scatters blanks of the drawing pixels about the halftone dots, on at least a predetermined range of tone values.

## Description

### BACKGROUND OF THE INVENTION

### Field of the Invention

The present invention relates to a halftone dot conversion apparatus for converting tone image data representative of an image with tone values into dot image data representative of a dot image consisting of binary values of an image part according to tone values and a non-image part, a halftone dot program storage medium storing a halftone dot program, and a dot matrix defining halftone dots used in the halftone dot conversion apparatus and the halftone dot program.

### Description of the Related Art

Recently, as resolution and image quality of an ink jet printer are improved, for example in a field of printing, in order that the ink jet printer is used in a proof system for performing a simulation of printing before printing, there is raised a demand that the ink jet printer is used to output a dot image.

According to the general dot image, an image is constructed of halftone dots, which are periodically arranged wherein sizes of the dots are associated with density of the image. In the event that a printing machine creates a printed matter, convex-concave of dots are formed on a printing plate, inks are adhered to concave portions or convex portions of the printing plate, and the inks are transferred to a printing paper so that a dot image is formed.

On the other hand, an ink jet printer is a device wherein ink particles, which are extremely minute as compared with the dots and even in size, are ejected on a paper to form ink dots, so that an image is outputted with a set of the ink dots. Usually, the ink dots are ejected with density according to density of the image, and whereby an image is outputted. In the event that such an ink jet printer is used to output a dot image, a size of dot geometry according to density of the image is reproduced with a set of ink dots. However, when the ink jet printer is used to output a dot image, it often happens that the output image involves various types of periodical noises due to paper feeding errors and positional errors in ink droplet dropping in the ink jet printer, and thus there is a possibility that image quality deterioration such as unevenness occurs through interference of such periodical noises with a periodical structure of halftone dots.

In order to avoid such image quality deterioration, there is proposed such a technology of reducing interference between the periodical noises and the periodical structure of halftone dots in such a manner that ink dots are dispersed to portions to which ink dots are not essentially adhered mutual among halftone dots drawn with ink dots (cf. for example, Japanese Patent Application Laid Open Gazette TokuKai. 2001-144959).

However, as in the technology proposed in TokuKai. 2001-144959, dispersion of ink dots to portions to which ink dots are not essentially adhered would cause inconveniences such as an occurrence of a so-called graininess wherein an outputted image becomes a grainy feeling of image in which highlight is created with ink dots in accordance with a so-called FM halftone processing and an error diffusion method, and an occurrence of a large disorder in geometry on each halftone dot. Such inconveniences become now a problem on the ink jet printer. However, such inconveniences does not always occur on the ink jet printer only, and may generally occur in the event that halftone dots structure is reproduced with minute dots.

### SUMMARY OF THE INVENTION

In view of the foregoing, it is an object of the present invention to provide a halftone dot conversion apparatus capable of creating a halftone dot image that is small in an interference between periodical noises occurred at the time of output and a periodical structure of halftone dots, and contributing to avoiding the graininess and prevention of the disorder in geometry on halftone dots; a halftone dot conversion program storage medium storing a halftone dot conversion program; and a dot matrix capable of readily creating the halftone dot image.

To achieve the above-mentioned object, the present invention provides a first halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters blanks of the drawing pixels about the halftone dots, on at least a predetermined range of tone values.

According to the first halftone dot conversion apparatus, blanks of the drawing pixels are scattered about the halftone dots constituting the halftone dot image. This feature makes it possible to reduce the contrast of the halftone dots and the periphery. Thus, the halftone dot image is small in an interference between periodical noises occurred at the time of output by the ink jet printer and a periodical structure of halftone dots, and it is possible to avoid the graininess and prevent the disorder in geometry on halftone dots.

In the first halftone dot conversion apparatus according to the present invention as mentioned above, it is acceptable that the halftone dot conversion section always scatters the blanks of the drawing pixels about the halftone dots, at associated positions, respectively, regardless of the tone values. Alternatively, it is acceptable that the halftone dot conversion section increases or decreases the number of blanks scattered about the halftone dots in accordance with the tone values.

The halftone dot conversion apparatus, in which the blanks of the drawing pixels are always scattered about the halftone dots, at the associated positions, respectively, is easy in creation. On the other hand, the feature that the halftone dot conversion section increases or decreases the number of blanks scattered about the halftone dots in accordance with the tone values makes it possible to set up a desired number of blanks according to the tone values. Thus, it is possible to contribute to improvement of an image quality.

In the first halftone dot conversion apparatus according to the present invention, it is acceptable that the halftone dot conversion section determines geometry of halftone dots using a dot matrix defining halftone dots by an arrangement of thresholds to be compared with the tone values.

Alternatively, in the first halftone dot conversion apparatus according to the present invention, it is acceptable that the halftone dot the halftone dot conversion section further comprises:
a set geometry determination section that determines geometry of the sets in accordance with the tone values obtained by the tone value obtaining section;
a blank position determination section that determines candidate positions for blanks scattered about the sets; and
a synthesizing section that synthesizes the geometry of the sets determined by the set geometry determination section with the candidate positions determined by the blank position determination section.

The feature that the dot matrix is used makes easy arithmetic operation for determining geometry of halftone dots and thus it possible to implement the halftone dot conversion apparatus with a simple circuit structure and program structure. On the other hand, the combination use of the set geometry determination section, the blank position determination section and the synthesizing section makes it possible to enhance a degree of freedom of the set geometry and the candidate positions for blanks.

In the first halftone dot conversion apparatus according to the present invention as mentioned above, it is acceptable that the tone image data represents with the tone values a plurality of color separation images in which a color image is color-separated with a plurality of colors, and
wherein the blank position determination section determines candidate positions for blanks in the color separation images, by means of using a blank position definition in which the candidate positions for blanks are defined on a unit area on an image and are repeatedly utilized on the image, and as the blank position definition, mutually different sizes of unit areas being applied for the plurality of color separation images.

A color image is formed by superposition of, for example, four sorts of color separation images wherein the color image is color-separated into CMYK four colors. In the event that periodical noises occur when an ink jet printer and the like outputs the color image, there is a possibility that periodical discrepancy occurs on the superposition of four sorts of color separation images. At that time, if the relation of blank positions is fixed among the four sorts of color separation images, the periodical discrepancy on the superposition of four sorts of color separation images may bring about periodical discrepancy on the mutual relation of the blank positions fixed among the color separation images. The discrepancy of the mutual relation among the blank positions is periodical, and thus there is a high possibility that it is visually recognized as image quality deterioration such as unevenness. In view of the foregoing, according to the halftone dot conversion apparatus for determining candidate positions for blanks on the color separation images by applying the blank position definition to the unit areas mutually different in size, on the plurality of color separation images, even if the four sorts of color separation images are superposed, the mutual relation of the blank positions among the color separation images is not fixed. Thus, the halftone dot conversion apparatus is hard to be affected by periodical noises in the ink jet printer and the like. Accordingly, it is possible to suppress occurrence of the above-mentioned image quality deterioration.

In the first halftone dot conversion apparatus according to the present invention as mentioned above, it is acceptable that the tone image data represents with the tone values a plurality of color separation images in which a color image is color-separated with a plurality of colors, and
wherein the halftone dot conversion section scatters blanks, in which arrangement patterns are mutually different from one another, about the halftone dots, for the plurality of color separation images.

Also according to the halftone dot conversion apparatus, when the four sorts of color separation images are superposed, the mutual relation of the blank positions among the color separation images is not fixed. Thus, the halftone dot conversion apparatus is hard to be affected by periodical noises in the ink jet printer and the like. Accordingly, it is possible to suppress occurrence of the above-mentioned image quality deterioration.

Further, in the first halftone dot conversion apparatus according to the present invention as mentioned above, it is preferable that the halftone dot conversion section has a plurality of halftone dot conversion systems including a first halftone dot conversion system that forms the halftone dots by sets of drawing pixels number of which is associated with the tone values obtained by the tone value obtaining section, and scatters blanks of the drawing pixels about the halftone dots, on at least predetermined range of tone values, and wherein the halftone dot conversion section uses the first halftone dot conversion system of the plurality of halftone dot conversion systems, on image data for an ink jet printer.

As mentioned above, the periodical noises are particularly problem in the ink jet printer. And it is desired to reduce the interference using the first halftone dot conversion system. On the other hand, for another type of output device, which principally brings about such periodical noises, it is preferable to use the conventional halftone dot conversion system.

To achieve the above-mentioned object, the present invention provides a second halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters drawing pixels out of the halftone dots, on tone values except for a predetermined range in highlight.

According to the second halftone dot conversion apparatus, halftone dots are formed by sets of drawing pixels number of which is associated with the tone values, and the drawing pixels are scattered out of the halftone dots. This feature makes it possible to reduce the contrast of the halftone dots and the periphery. Thus, the halftone dot image is small in an interference between periodical noises occurred at the time of output by the ink jet printer and a periodical structure of halftone dots. The "halftone dots having sizes according to the tone values" means the dot concentration type of halftone dots, and the drawing pixels are scattered out of the halftone dots only in the case other than the highlight. Thus, in case of the highlight, only the dot concentration type of halftone dots is formed. Accordingly, it is possible to avoid the graininess also in the light portion at the highlighting side.

In the second halftone dot conversion apparatus according to the present invention as mentioned above, it is preferable that the tone image data represents an image with tone values representative of dot% density of 0% to 100%, and
wherein the halftone dot conversion section uses, as the predetermined range, a range between lower limit 0% of the tone values and upper limit 5% to 15%.

The above-defined range makes it possible to suppress graininess in highlight and also sufficiently reduce the interference unevenness.

In the second halftone dot conversion apparatus according to the present invention as mentioned above, it is preferable that the halftone dot conversion section increases or decreases the number of drawing pixels scattered out of the halftone dots in accordance with the tone values.

This feature makes it possible to improve an image quality.

In the second halftone dot conversion apparatus according to the present invention as mentioned above, it is acceptable that the halftone dot conversion section determines geometry of the halftone dots using a dot matrix defining halftone dots by an arrangement of thresholds to be compared with the tone values.

Alternatively, in the second halftone dot conversion apparatus according to the present invention as mentioned above, it is acceptable that the halftone dot the halftone dot conversion section further comprises:
a set geometry determination section that determines geometry of the sets in accordance with the tone values obtained by the tone value obtaining section;
a scattering position determination section that determines candidate positions for drawing pixels scattered out of the sets; and
a synthesizing section that synthesizes the geometry of the sets determined by the set geometry determination section with the candidate positions determined by the scattering position determination section.

The feature that the dot matrix is used makes easy arithmetic operation for determining geometry of halftone dots and thus it possible to implement the halftone dot conversion apparatus with a simple circuit structure and program structure. On the other hand, the combination use of the set geometry determination section, the scattering position determination section and the synthesizing section makes it possible to enhance a degree of freedom of the set geometry and the candidate positions for blanks.

In the second halftone dot conversion apparatus according to the present invention as mentioned above, it is acceptable that the tone image data represents images of four colors of cyan, magenta, yellow, and black, and
wherein the halftone dot conversion section scatters drawing pixels out of the halftone dots, only when the color of the image is black.

In the second halftone dot conversion apparatus according to the present invention as mentioned above, it is acceptable that the tone image data represents images of four colors of cyan, magenta, yellow, and black, and
wherein the halftone dot conversion section scatters drawing pixels out of the halftone dots, only when the color of the image is another color except yellow.

Since the black is dark, it is easy to recognize interference between the periodical noises occurred on an output device such as the ink jet printers and the like and the periodical structure of halftone dots. To the contrary, yellow is light, and thus it is hard to recognize the interference.

To achieve the above-mentioned object, the present invention provides a third halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of a first drawing pixels number of which is associated with the tone values obtained by the tone value obtaining section, and scatters a second drawing pixels having a color lighter than a color of the first. drawing pixels out of the halftone dots.

According to the third halftone dot conversion apparatus, halftone dots are formed by sets of a first drawing pixels number of which is associated with the tone values, and the second drawing pixels are scattered out of the halftone dots. This feature makes it possible to reduce the contrast of the halftone dots and the periphery. Thus, the halftone dot image is small in an interference between periodical noises occurred at the time of output by the ink jet printer and a periodical structure of halftone dots. The color of the second drawing pixels is lighter than the color of the first drawing pixels, and thus it is not conspicuous. Accordingly, it is possible to suppress graininess in its entirety.

In the third halftone dot conversion apparatus according to the present invention as mentioned above, it is preferable that the halftone dot conversion section scatters the second drawing pixels out of the halftone dots, on tone values except for a predetermined range in highlight.

When the second drawing pixels are scattered out of the halftone dots in the highlight thin in density, graininess is particularly easy to be recognized. Accordingly, it is preferable that the second drawing pixels are scattered out of the halftone dots, on tone values except for a predetermined range in highlight.

In the third halftone dot conversion apparatus according to the present invention as mentioned above, it is preferable that the halftone dot conversion section increases or decreases the number of the second drawing pixels scattered out of the halftone dots in accordance with the tone values.

This feature makes it possible to improve an image quality.

In the third halftone dot conversion apparatus according to the present invention as mentioned above, it is preferable that the tone image data represents an image with tone values representative of dot% density of 0% to 100%, and
wherein the halftone dot conversion section uses, as the predetermined range, a range between lower limit 0% of the tone values and upper limit 5% to 15%.

The above-defined range makes it possible to suppress graininess in highlight and also sufficiently reduce the interference unevenness.

In the third halftone dot conversion apparatus according to the present invention as mentioned above, it is acceptable that the tone image data represents images of four colors of cyan, magenta, yellow, and black, and
wherein the halftone dot conversion section scatters the second drawing pixels out of the halftone dots, only when the color of the image is black.

In the third halftone dot conversion apparatus according to the present invention as mentioned above, it is acceptable that the tone image data represents images of four colors of cyan, magenta, yellow, and black, and wherein the halftone dot conversion section scatters the second drawing pixels out of the halftone dots, only when the color of the image is another color except yellow.

Since the black is dark, it is easy to recognize interference between the periodical noises occurred on an output device such as the ink jet printers and the like and the periodical structure of halftone dots. To the contrary, yellow is light, and thus it is hard to recognize the interference.

To achieve the above-mentioned object, the present invention provides a first halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters blanks of the drawing pixels about the halftone dots, on at least a predetermined range of tone values.

To achieve the above-mentioned object, the present invention provides a second halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters drawing pixels out of the halftone dots, on tone values except for a predetermined range in highlight.

To achieve the above-mentioned object, the present invention provides a third halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of a first drawing pixels number of which is associated with the tone values obtained by the tone value obtaining section, and scatters a second drawing pixels having a color lighter than a color of the first drawing pixels out of the halftone dots.

With respect the halftone dot conversion program related to the present invention, only the basic aspects are disclosed here. It is noted that the halftone dot conversion program related to the present invention includes not only the basic aspects, but also various aspects corresponding to the above-mentioned aspects of the halftone dot conversion apparatus.

While the similar names are applied to the structural elements in the halftone dot conversion apparatus and the halftone dot conversion program storage medium, those structural elements mean the hardware and the software in the halftone dot conversion apparatus, and mean only the software in the halftone dot conversion program storage medium.

With respect to the structural elements such as the tone value obtaining section constituting the half tone dot conversion program related to the present invention, it is acceptable that function of one structural element is implemented by one program part, function of one structural element is implemented by a plurality of program parts, or alternatively functions of a plurality structural elements are implemented by one program part. Further, it is acceptable that those structural elements are executed by oneself or by instruction to another program or program parts incorporated into a computer.

To achieve the above-mentioned object, the present invention provides a first dot matrix defining halftone dots consisting of sets of drawing pixels number of which is associated with tone values by an arrangement of thresholds to be compared with the tone values, the dot matrix comprising:
a first threshold group defining a set geometry according to the tone values; and
a second threshold group defining blanks scattering inside the set geometry defined by the first threshold group on tone values in at least a predetermined range.

To achieve the above-mentioned object, the present invention provides a second dot matrix defining halftone dots consisting of sets of drawing pixels number of which is associated with tone values by an arrangement of thresholds to be compared with the tone values, the dot matrix comprising:
a first threshold group defining a set geometry according to the tone values; and
a second threshold group defining drawing pixels scattering outside the set geometry defined by the first threshold group on tone values except for a predetermined range in highlight.

### BRIEF DESCRIPTION OF THE DRAWINGS

Fig. 1 is a perspective view showing a printing system and a proof system to which a halftone dot conversion apparatus according to an embodiment of the present invention is applied.
Fig. 2 is a hardware structural view of a computer system.
Fig. 3 is a view showing embodiments of a halftone dot conversion program and a dot matrix of the present invention.
Fig. 4 is a functional block diagram of a halftone dot conversion apparatus according to a first embodiment of the present invention.
Fig. 5 is a view showing an example of a dot matrix that is a model when a dot matrix 650, which is used in the halftone dot conversion processing according to the present embodiment, is created.
Fig. 6 is a view useful for understanding a state that a set of drawing pixels grows as dot% values are increased.
Fig. 7 is a view showing a mask for scattering blanks about a set of drawing pixels.
Fig. 8 is a view useful for understanding algorithm for a filter processing.
Fig. 9 is a view showing results of the filter processing.
Fig. 10 is a view useful for understanding a state that the drawing pixels based on the dot matrix shown in Fig. 9 vary as dot% values are increased.
Fig. 11 is a view showing another mask different from a mask 661 shown in Fig. 7.
Fig. 12 is a view useful for understanding another algorithm for a filter processing.
Fig. 13 is a view showing results of the filter processing using another mask and another algorithm.
Fig. 14 is an explanatory view useful for understanding how the halftone dot conversion processing is varied in accordance with colors.
Fig. 15 is an explanatory view useful for understanding a modification as to how the halftone dot conversion processing is varied in accordance with colors.
Fig. 16 is a view showing a halftone dot conversion program stored in a second embodiment of a halftone dot conversion program storage medium of the present invention.
Fig. 17 is a functional block diagram of a second embodiment of a halftone dot conversion apparatus of the present invention.
Fig. 18 is an illustration showing an example of AM binary value image data.
Fig. 19 is an illustration showing an example of a dot pattern of FM halftone dots.
Fig. 20 is an illustration showing an example of output use binary value image data.
Fig. 21 is an illustration of an example of a dot matrix defining FM halftone dots.
Fig. 22 is an illustration showing an improved dot matrix.
Fig. 23 is a view useful for understanding a state that the drawing pixels of the FM halftone dots defined by the dot matrix shown in Fig. 22 are increased as dot% values are increased.
Fig. 24 is a view showing a dot matrix obtained by the filter processing.
Fig. 25 is an illustration showing drawing pixels formed in accordance with the dot matrix shown in Fig. 24.
Fig. 26 is an illustration showing a dot matrix in which thresholds are allocated over again.
Fig. 27 is a view showing a halftone dot conversion program stored in a fourth embodiment of a halftone dot conversion program storage medium of the present invention.
Fig. 28 is a functional block diagram of a fourth embodiment of a halftone dot conversion apparatus of the present invention.
Fig. 29 is a view showing an example of a dot matrix defining AM halftone dots used in cyan (C), on one super cell, in a fifth embodiment.
Fig. 30 is a view showing an example of a dot matrix defining FM halftone dots, for defining an arrangement pattern for blanks provided at halftone dots of cyan in the fifth embodiment, on one super cell.
Fig. 31 a view showing an arrangement pattern of halftone dots for cyan provided with blanks, with a dot matrix defining the halftone dots on one super cell, in a fifth embodiment.
Fig. 32 is a view showing an example of a dot matrix defining AM halftone dots used in magenta, on one super cell, in a fifth embodiment.
Fig. 33 is a view showing an example of a dot matrix defining FM halftone dots, for defining an arrangement pattern for blanks provided at halftone dots of magenta in the fifth embodiment, on one super cell.
Fig. 34 a view showing an arrangement pattern of halftone dots for magenta provided with blanks, with a dot matrix defining the halftone dots on one super cell, in a fifth embodiment.
Fig. 35 is a view showing an example of a dot matrix defining AM halftone dots used in yellow, on one super cell, in a fifth embodiment.
Fig. 36 is a view showing an example of a dot matrix defining FM halftone dots, for defining an arrangement pattern for blanks provided at halftone dots of yellow in the fifth embodiment, on one super cell.
Fig. 37 a view showing an arrangement pattern of halftone dots for yellow provided with blanks, with a dot matrix defining the halftone dots on one super cell, in a fifth embodiment.
Fig. 38 is a view showing a halftone dot conversion program and a dot matrix according to a sixth embodiment of the present invention.
Fig. 39 is a functional block diagram of a halftone dot conversion apparatus according to the sixth embodiment of the present invention.
Fig. 40 is a view showing an example of a dot matrix that is a model when a dot matrix 1650, which is used in the halftone dot conversion processing according to the sixth embodiment, is created.
Fig. 41 is a view useful for understanding a state that a set of pixels grows as dot% values are increased.
Fig. 42 is an illustration of an example of a dot matrix defining FM halftone dots.
Fig. 43 is an illustration showing an improved FM dot matrix.
Fig. 44 is a view useful for understanding a state that the pixels of the FM halftone dots defined by the dot matrix shown in Fig. 43 are increased as dot% values are increased.
Fig. 45 is a view useful for understanding algorithm for an AM and FM synthetic processing.
Fig. 46 is a view showing results of the AM and FM synthetic processing.
Fig. 47 is an illustration showing drawing pixels formed in accordance with the dot matrix shown in Fig. 46.
Fig. 48 is an illustration showing a dot matrix in which thresholds are allocated over again.
Fig. 49 is an explanatory view useful for understanding how the halftone dot conversion is varied in accordance with colors.
Fig. 50 is an explanatory view useful for understanding a modification as to how the halftone dot conversion is varied in accordance with colors.
Fig. 51 is a view showing a halftone dot conversion program stored in a seventh embodiment of a halftone dot conversion program storage medium of the present invention.
Fig. 52 is a functional block diagram of a seventh embodiment of a halftone dot conversion apparatus of the present invention.
Fig. 53 is an illustration showing an example of AM binary value image data.
Fig. 54 is an illustration showing an example of a dot pattern of FM halftone dots.
Fig. 55 is an illustration showing an example of output use binary value image data.
Fig. 56 is a view showing a halftone dot conversion program according to an eighth embodiment of the present invention.
Fig. 57 is a functional block diagram of a halftone dot conversion apparatus according to the eighth embodiment of the present invention.
Fig. 58 is a view showing an example of a dot matrix, which is used in the AM halftone processing section.
Fig. 59 is a view useful for understanding a state that a set of pixels grows as dot% values are increased.
Fig. 60 is an illustration of an example of a dot matrix defining FM halftone dots.
Fig. 61 is an illustration showing an improved dot matrix.
Fig. 62 is a view useful for understanding a state that the pixels of the FM halftone dots defined by the dot matrix shown in Fig. 61 are increased as dot% values are increased.
Fig. 63 is a view showing a result in which AM halftone dots represented by AM binary value data and FM halftone dots represented by FM binary value data are outputted.
Fig. 64 is a view showing an example of an image for dark ink.
Fig. 65 is a view showing an example of an image for light ink.
Fig. 66 is a view showing an example of a halftone dot image.
Fig. 67 is an explanatory view useful for understanding how the halftone dot conversion is varied in accordance with colors.
Fig. 68 is an explanatory view useful for understanding a modification as to how the halftone dot conversion is varied in accordance with colors.
Fig. 69 is a functional block diagram of a ninth embodiment of a halftone dot conversion apparatus of the present invention.

### DETAILED DESCRIPTION OF PREFERRED EMBODIMENTS

Embodiments of the present invention will be described with reference to the accompanying drawings.

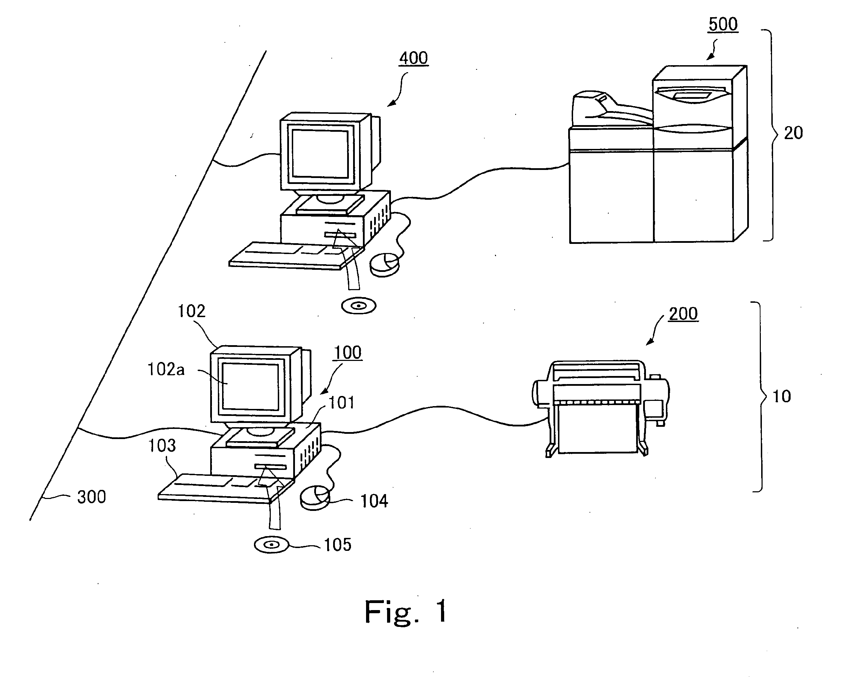

Fig. 1 is a perspective view showing a printing system and a proof system to which a halftone dot conversion apparatus according to an embodiment of the present invention is applied.

Fig. 1 shows a proof system 10 comprising a computer system 100 and a large scale ink jet printer 200, and a printing system 20 comprising a computer system 400, a CTP 500, and a printing machine (not illustrated). The computer system 100 and the computer system 400 are connected to each other via a communication network 300. The communication network 300 is connected also to an external computer system (not illustrated) other than the computer systems 100 and 400.

The computer system 400 of the printing system 20 shown in Fig. 1 receives image data representative of a page of the edited printed matter from the external computer via the communication network 300. As an example of the image data, here, there are used dot% data for each plate of C, M, Y, K in which an image is represented by a set of pixels having dot% values of anyone of 0% to 100%. The dot% values correspond to an example of the tone values referred to in the present invention. It is noted that the pixels as mentioned above are different from the drawing pixels referred to in the present invention in concept. It is acceptable that the dot% data of the respective plates are fed via a storage medium such as CD-R(Compact Disk Recordable) and MO (magneto-optical disk) other than the communication network 300. The dot% data fed to the computer system 400 are subjected to the halftone dot processing by the computer system 400 to create halftone dot for printing representative of a halftone dot image constructed of halftone dots of the size according to the dot% values.

The halftone dot for printing, which is created by the computer system 400, is transferred to the CTP 500 to create a printing plate to which a halftone dot image represented by the halftone dot thus transferred is directly printed. The printing plate created by the CTP 500 is wound up on a drum, if the printing machine has the drum, so that the printing machine applies ink to the printing plate on the drum to perform a continued printing for the halftone dot image. It is acceptable that the printing plate is one created in such a manner that an image represented by the halftone dot image is formed on a film by a so-called film setter so that the printing plate is created based on the formed film.

As seen from the above-description, a series of works for printing by the printing system 20 is of a large scale and takes a lot of cost. For this reason, prior to the actual printing works, an operator creates a proof image by the proof system 10 in the manner as set forth below, and refers to the proof image, so that the operator can confirm beforehand the finish of an image to be printed by the printing system 20.

The computer system 100 of the proof system 10 receives, similar to the computer system 400, dot% data for CMYK colors which are the same as those fed to the computer system 400, via the communication network 300 or via the storage medium such as CD-R and MO. The computer system 100 serves as the halftone dot apparatus of the present embodiment. The computer system 100 converts the entered dot% data to halftone dot data for a proof. The converted halftone dot data for a proof is fed to the large-scale ink jet printer 200. The large-scale ink jet printer 200 receives the halftone dot data for a proof and outputs a proof image on a recording paper in accordance with the received halftone dot data. The proof image thus outputted is an image in which the image printed by the printing machine is reproduced as to not only colors but also a halftone dot pattern.

The proof image is not restricted to one outputted on only the recording paper, and it is acceptable that the proof image is outputted on for example, a display of the computer system 100. In the event that the proof image is outputted on the display, the computer system 100 serves as the proof system by itself. However, while the embodiment wherein the proof image is outputted on the display is also an embodiment of a halftone dot apparatus of the present invention, this embodiment is not a preferable embodiment which is particularly effective in the functional effect of the present invention. Thus, hereinafter, there will be continued the explanation on condition that the large-scale ink jet printer 200 outputs the proof image.

In the event that the computer systems 100 and 400 are provided with a RIP (Raster Image Processor) for converting page description data describing pages by postscript language and the like in form of an arrangement of objects such as images, characters and illustrations into bit map data representative of a page in form of a set of pixels as in the dot% data, it is acceptable that as the image data to be entered to the computer systems 100 and 400, the page description data is used instead of the dot% data. When the computer systems 100 and 400 receive the same page description data, the computer systems 100 and 400 generate the same dot% data and convert the dot% data into the associated halftone dot data, respectively.

An aspect of the embodiment of the present invention in the computer system 100 resides in the processing contents to be executed by the computer system 100 when the computer system 100 serves as the halftone dot conversion apparatus. Hereinafter, there will be explained the computer system 100 in detail. The computer system 400 used in the printing system 20 also has the same structure as the computer system 100 used in the proof system 10 on a hardware basis.

The computer system 100 comprises: a main frame 101 including a CPU, a hard disk, a communication board, and so forth; a CRT display 102 for performing a display of pictures and characters on a display screen 102a in accordance with an instruction from the main frame 101; a keyboard 103 for entering a user's instruction and character information to the computer system; and a mouse 104 for entering an instruction according to an icon or the like displayed at a designated position on the display screen 102a.

The hardware structure of the computer system 100 is as follows.

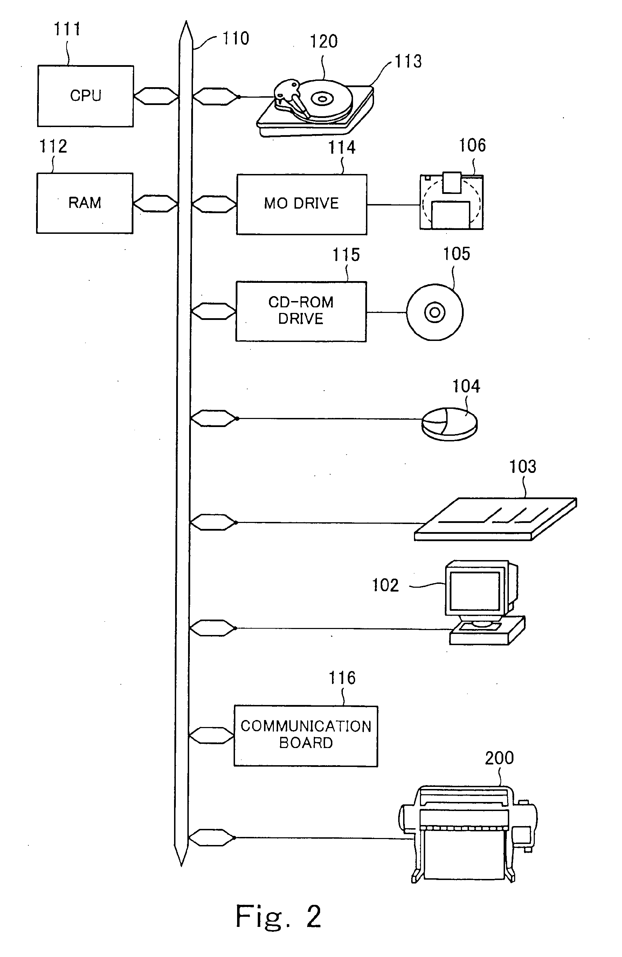

Fig. 2 is a hardware structural view of a computer system.

In the hardware structural view, there are shown a CPU (central processing unit) 111, RAM 112, HDD (a hard disk drive) 113, an MO drive 114, a CD-ROM drive 115 and a communication drive 116.

The HDD 113 incorporates therein a hard disk 120, which is a recording medium, and performs a recording reproduction for the magnetic disk 120.

The communication board 116 is connected to a communication line such as an LAN. The computer system 100 shown in Fig. 1 is able to perform a communication of data with a computer system 400 and other computer system as well by a communication network 300 connected via the communication board 116.

Further, Fig. 2 shows a mouse 104, a keyboard 103, a CRT display 102, and a large-scale ink jet printer 200, which are connected via a plurality of I/O interfaces (not illustrated) to a bus 110. With respect to the computer system 100 shown in Fig. 1, a CTP 500 instead of the large-scale ink jet printer 200 is connected via an I/O interface (not illustrated) to the bus 110.

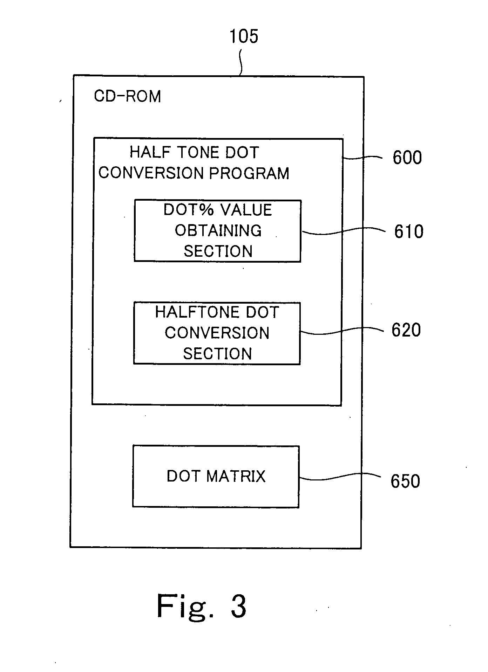

Fig. 3 is a view showing embodiments of a halftone dot conversion program and a dot matrix of the present invention.

As mentioned above, according to the present embodiment, the CD-ROM 105 stores therein a halftone dot conversion program 600 and a dot matrix 650. The CD-ROM 105 is simply an example of a storage medium for storing the halftone dot conversion program 600 and the dot matrix 650. It is acceptable that a halftone dot conversion program and a dot matrix of the present invention are stored in another storage medium such as a hard disk (HD), a flexible disk (FD), a magneto-optical (MO) disk and a DVD.

The halftone dot conversion program 600 shown in Fig. 3 causes the computer system 100 shown in Fig. 1 to serve as a halftone dot conversion apparatus for creating halftone dot data from dot% data using the dot matrix 650, when the halftone dot conversion program 600 is executed by the computer system 100. The halftone dot conversion program 600 comprises a dot% value obtaining section 610 and a halftone dot conversion section 620. The dot% value obtaining section 610 and the halftone dot conversion section 620 correspond to examples of the tone value obtaining section and the halftone dot conversion section in the halftone dot conversion program related to the present invention, respectively.

Functions of the elements of the halftone dot conversion program 600 and details of the dot matrix 650 will be described later.

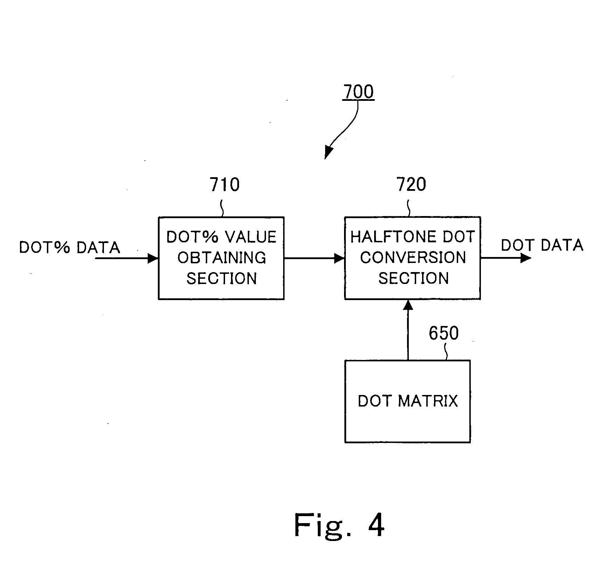

Fig. 4 is a functional block diagram of a halftone dot conversion apparatus according to a first embodiment of the present invention.

A halftone dot conversion apparatus 700 is constructed in such a manner that the halftone dot conversion program 600 of Fig. 3 is installed into the computer system 100 shown in Fig. 1 and is executed. The halftone dot conversion apparatus 700 comprises a dot% value obtaining section 710 and a halftone dot conversion section 720. The dot% value obtaining section 710 and the halftone dot conversion section 720 correspond to the dot% value obtaining section 610 and the halftone dot conversion section 620, respectively, which constitute the halftone dot conversion program 600 of Fig. 3. The structural elements of the halftone dot conversion apparatus 700 are constructed of the combination of hardware of the computer system 100 shown in Fig. 1 and the OS and the application program which are executed in the personal computer 100. On the other hand, the structural elements of the halftone dot conversion program 600 of Fig. 3 are constructed of only the application program.

The dot% value obtaining section 710 and the halftone dot conversion section 720 correspond to examples of the dot% value obtaining section and the halftone dot conversion section in the halftone dot conversion apparatus of the present invention, respectively.

Hereinafter, there will be explained the structural elements of the halftone dot conversion apparatus 700 shown in Fig. 4 and the structural elements of the halftone dot conversion program 600 shown in Fig. 3 as well.

The dot% value obtaining section 710, which constitutes the halftone dot conversion apparatus 700 shown in Fig. 4, obtains dot% data via the communication network 300 shown in Fig. 1. The halftone dot conversion section 720 creates halftone dot data in such a manner that a halftone dot conversion is applied to the dot% data obtained by the dot% value obtaining section 710 in accordance with the dot matrix 650, and outputs the halftone dot data thus created to the large scale ink jet printer 200 shown in Fig. 1. The halftone dot conversion section 720 is provided with a plurality of dot matrixes 650 associated with a plurality of halftone dot conversion processing schemes, respectively, and has a function of choosing the dot matrixes 650 in accordance with destinations of output of the halftone dot data.

The plurality of dot matrixes 650 include a dot matrix for an ink jet printer. In the event that the large scale ink jet printer 200 shown in Fig. 1 is connected to the computer system 100, the dot matrix for an ink jet printer is used to execute the halftone dot conversion processing. The dot matrixes other than the dot matrix for an ink jet printer are ones according to the conventional halftone dot conversion processing system. In the event that those other dot matrixes are used, the same halftone dot conversion processing as the conventional halftone dot conversion processing is executed. Those other dot matrixes and the halftone dot conversion processing using the other dot matrixes are different from the subject of the present invention, and thus the further explanation will be omitted.

Hereinafter, there will be explained a method of creating the dot matrix for an ink jet printer and the halftone dot conversion processing method based on the dot matrix for an ink jet printer.

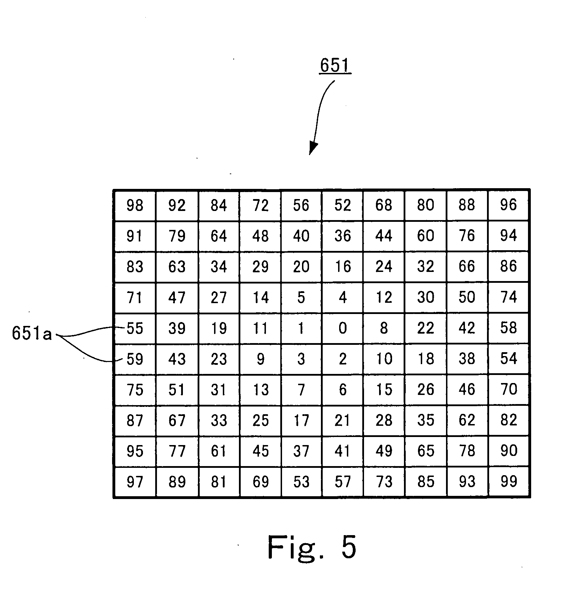

Fig. 5 is a view showing an example of a dot matrix that is a model when a dot matrix 650, which is used in the halftone dot conversion processing according to the present embodiment, is created.

A dot matrix 651 of a model as shown in Fig. 5 defines geometry of a halftone dot of which a size depends on the dot% value.

The dot matrix 651 shown in Fig. 5 is one in which thresholds 651a to be compared with dot% values are arranged in form of 10 x 10. The thresholds 651a correspond to output points in an output device (here the large scale ink jet printer 200 shown in Fig. 1) for forming an image by a set of a large number of output points, such as ink dots, on a one-for-one basis.

Here, there will be explained a halftone dot conversion processing method according to the dot matrix raising an example in which the dot matrix 651 shown in Fig. 5 is used in the halftone dot conversion section 720 shown in Fig. 4. The halftone dot conversion section 720 determines one dot% value, which is to be applied to the dot matrix 651 in its entirety, in accordance with the dot% value represented by the halftone dot data, so that the dot% value thus determined is compared with the values of the respective thresholds 651a. And as a result, in the event that the dot% value is larger than the value of the threshold 651a, the position associated with the threshold 651a is determined as an output point to which ink is ejected by an output device. The output point to which ink is ejected corresponds to an example of the drawing pixel referred to in the present invention, and thus the output point is referred to as the drawing pixel hereinafter. Halftone dots are formed by a set of the drawing pixels.

The dot matrix 651 shown in Fig. 5 represents a set of drawing pixels each increasing a magnitude as the dot% value increases, and defines the conventional typical halftone dots.

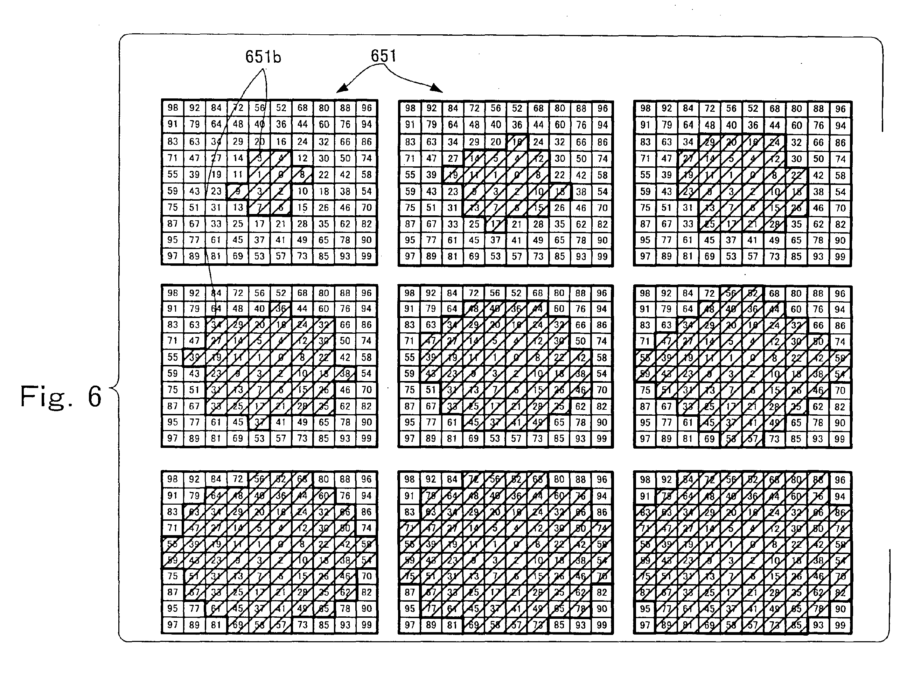

Fig. 6 is a view useful for understanding a state that a set of drawing pixels grows as dot% values are increased.

Fig. 6 shows nine dot matrixes 651 also shown in Fig. 5. In the dot matrixes 651, the upper left is associated with the dot% value of 10%, the upper center the dot% value of 20%, the upper right the dot% value of 30%, the middle left the dot% value of 40%, ..., and the lower right the dot% value of 90%. Areas 651b depicted with slanting lines in the dot matrixes 651 each represents a set of drawing pixels, that is, the area 651b represents a geometry of a halftone dot.

The area 651b associated with the dot% value of 10% indicates a set of ten pieces of drawing pixels. Likely, the areas 651b associated with the dot% values of 20%, ..., 90% indicate a set of twenty pieces of drawing pixels, ..., and a set of ninety pieces of drawing pixels, respectively.

According to the dot matrixes 651 of the model as shown in Fig. 6, the sets of drawing pixels are covered with drawing pixels. On the other hand, according to the dot matrixes used in the halftone dot conversion processing of the present embodiment, which are created from this model, as will be described hereinafter, there are scattered blanks of drawing pixels about a set of drawing pixels.

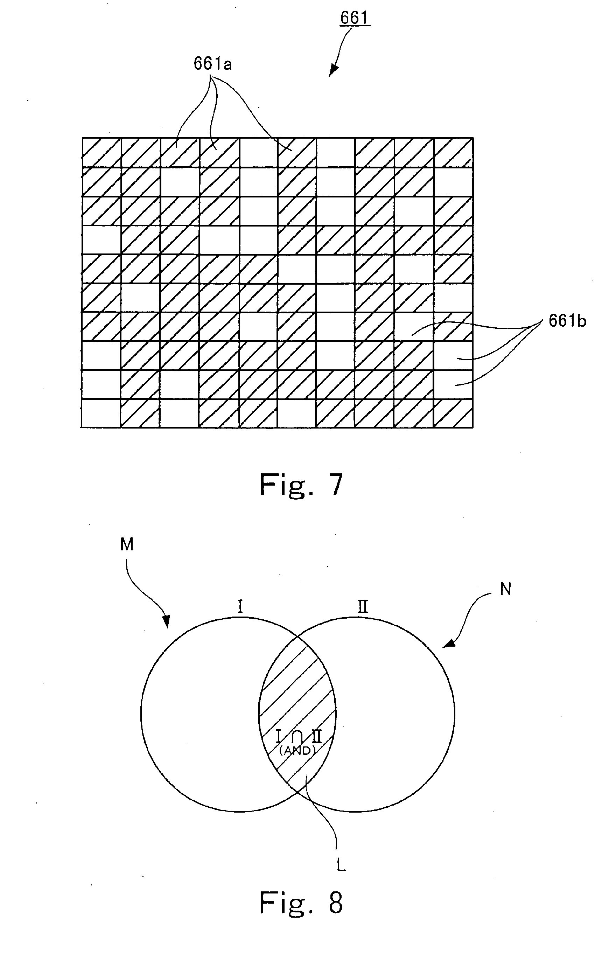

Fig. 7 is a view showing a mask for scattering blanks about a set of drawing pixels.

Fig. 7 shows a mask 661 in which turn-on points 661a and turn-off points 661b are arranged in form of 10 x 10, associated with the thresholds of 10 x 10 constituting the above-mentioned model of dot matrix. The turn-on points 661a are permitted that inks or the like are ejected and the turn-off points 661b are inhibited that inks or the like are ejected. The ratio of the turn-on points 661a and the turn-off points 661b is 7 to 3.

While the mask 661 can be implemented in such a manner that the turn-on points 661a and the turn-off points 661b are arranged at random in a ratio of 7 to 3, it is preferable that the turn-off points 661b are scattered as much as possible. Thus, the mask 661 is created in application of a so-called FM halftone dot technology, which is well known as technology for outputting a continuous tone of image by ink jet printers and the like. The FM halftone dot technology is concerned with a technology in which drawing pixels are formed so that mutual interval of the drawing pixels broadens as much as possible, at density according to the tone value. In order to distinguish the FM halftone dot from the conventional halftone dot as exemplarily shown in Fig. 6, it may happen that the conventional halftone dot is expressed by AM halftone dot hereinafter.

According to the mask 661 shown in Fig. 7, a position of the drawing pixel is expressed by the turn-on point 661a and a position of non-drawing pixel is expressed by the turn-off point 661b, using a drawing pixel pattern of the FM halftone dot wherein the dot% value is 70%.

When the dot matrix 651 of a model as shown in Fig. 5 is superposed on the mask 661 shown in Fig. 7, and a filter processing, which will be explained hereinafter, is applied, a dot matrix to be used in the halftone dot conversion processing of the present embodiment can be obtained.

Fig. 8 is a view useful for understanding algorithm for a filter processing.

A first set M represents, of the thresholds 651a constituting the dot matrix 651 of a model as shown in Fig. 5, the thresholds 651a in the areas 651b shown in Fig. 6. A second set N represents the turn-on points 661a in the mask 661 shown in Fig. 7. The filter processing corresponds to the determination of a product set L of the first set M times the second set N. Assuming that the turn-on points 661a in the mask 661 shown in Fig. 7 are interpreted as thresholds of the value "0", and the turn-off points 661b are interpreted as thresholds of the value "100", the determination of the product set L corresponds to such processing that the larger thresholds are adopted.

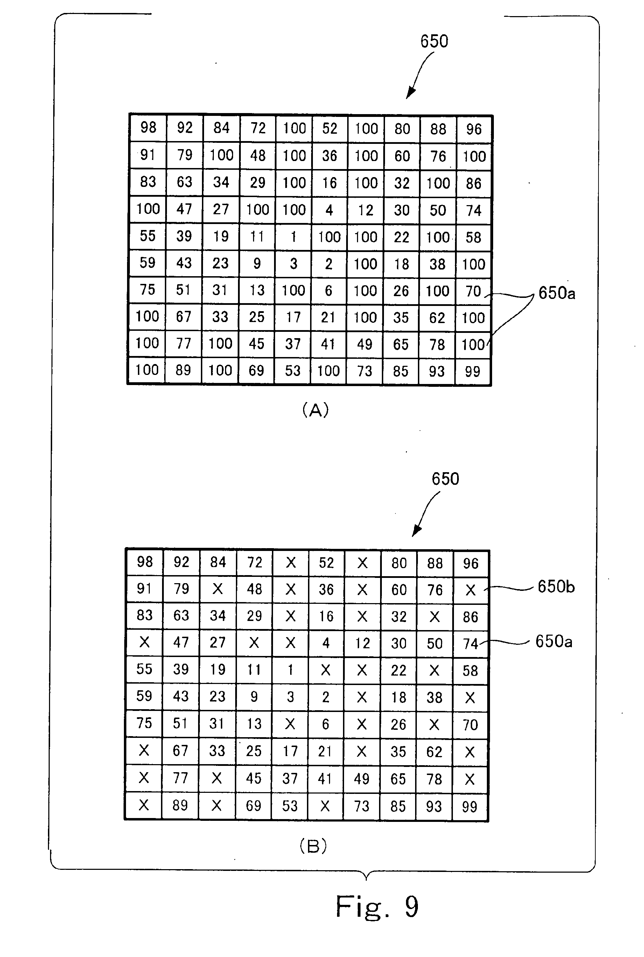

Fig. 9 is a view showing results of the filter processing.

Fig. 9 shows, in two types of expression form, dot matrixes 650 used in the halftone dot conversion processing of the present embodiment, which are obtained by the filter processing from the dot matrix 651 of a model as shown in Fig. 5 and the mask 661 shown in Fig. 7.

A part (A) of Fig. 9 shows the dot matrix 650 in the expression form in which as the thresholds 650a constituting the dot matrix 650, the above-mentioned "larger thresholds" are described as they are. Of the thresholds 650a, thresholds having values other than the value "100" constitute a first threshold group in the dot matrix of the present invention, and thresholds having the value "100" constitute a second threshold group in the dot matrix of the present invention.

A part (B) of Fig. 9 shows the dot matrix 650 in the expression form in which at the positions associated with the turn-on points 661a in the mask 661 shown in Fig. 7, as positions which are able to be used as drawing pixels, thresholds 650a having the same values as the thresholds 651a constituting the dot matrix 651 of a model as shown in Fig. 5 are described, and at the positions associated with the turn-off points 661b, as positions which are not used as the drawing pixels, symbols 650b are described.

Even if the halftone dot conversion section 720 constituting the halftone dot conversion apparatus 700 shown in Fig. 4 adopts any one of those two types of expression form, the same halftone dot conversion processing is carried out. That is, the values of the thresholds 650a constituting the dot matrix 650 are compared with the dot% values, and as a result, the positions, wherein the dot% values exceed the values of the thresholds 650a, are provided as drawing pixels.

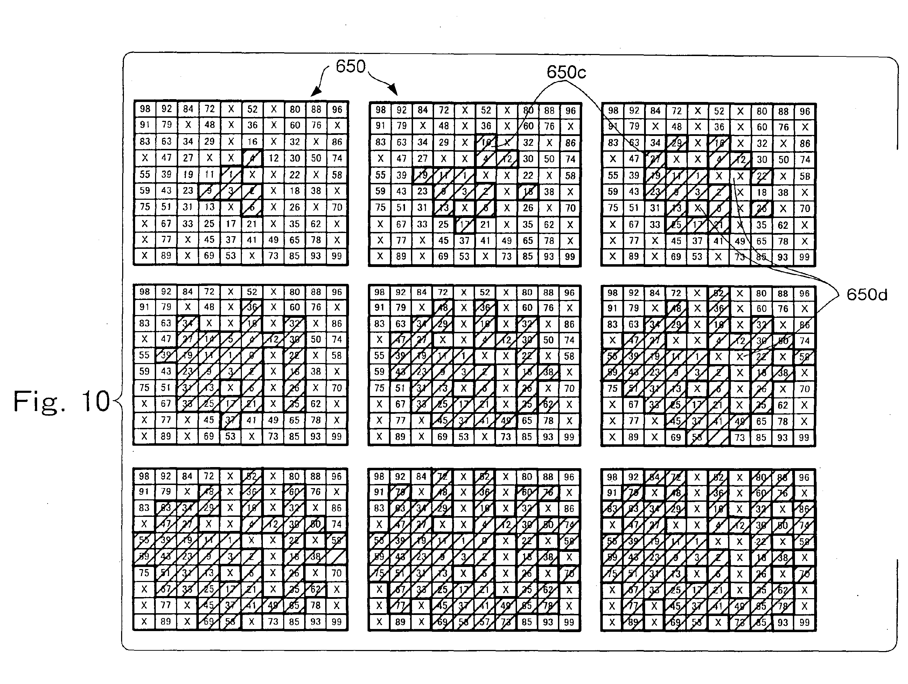

Fig. 10 is a view useful for understanding a state that the drawing pixels based on the dot matrix 650 shown in Fig. 9 vary as dot% values are increased.

Fig. 10 shows nine dot matrixes 650 also shown in the part (B) of Fig. 9. The dot matrixes 650 are associated with dot% values of 10%, 20%, ..., 90%, respectively. Areas 650c depicted with slanting lines in the dot matrixes 650 each represents a set of drawing pixels, that is, the area 650c represents a geometry of a halftone dot. Each the area 650c representative of the set of drawing pixels forms a block in its entirety on any dot% value. An external form of the block is coincident with the form of the respective area 651b shown in Fig. 6.

According to the halftone dot conversion processing using the dot matrixes 650, blanks 650d of drawing pixels on the order of 30% or so are scattered in the areas 650c corresponding to the set of drawing pixels. Thus, scattering of the blanks 650d reduces the contrast between the halftone dot and the periphery. As a result, even if periodical noises occur when ink jet printer and the like output halftone dot images, an interference between the periodical noises and the periodical structure of the halftone dots would be small. Further, no ink dot is ejected on the periphery of the halftone dots and thus it is possible to avoid graininess. Geometry of the areas 650c shown in Fig. 10 apparently looks like a distortion of geometry of the areas 651b shown in Fig. 6. However, in the event that ink dots are actually ejected on a paper in geometry of the areas 650c shown in Fig. 10, blanks of the drawing pixels would be crushed because bleeding of ink dots occur. Thus, it is possible to avoid the distortion of geometry of halftone dots. An effect of reduction of the contrast by scattering of the blanks 650d of drawing pixels as shown in Fig. 10 is available even if the bleeding crushes the blanks.

Next, there will be explained a method of creating a dot matrix to be used in a halftone dot conversion processing of the present embodiment, using a mask different from the mask 661 shown in Fig. 7 to apply a filter processing different from the above-mentioned filter processing to the dot matrix 651 of a model as shown in Fig. 5.

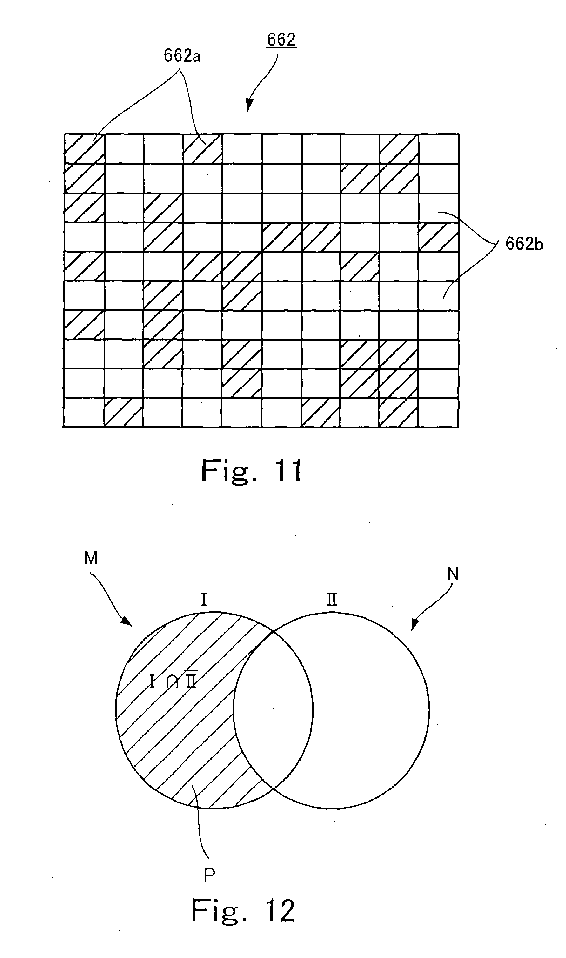

Fig. 11 is a view showing another mask different from the mask 661 shown in Fig. 7.

A mask 662 shown in Fig. 11 comprises turn-on points 662a and turn-off points 662b, which are similar to turn-on points 661a and turn-off points 661b shown in Fig. 7. Here, the ratio of the turn-on points 662a and the turn-off points 662b is 3 to 7. The mask 662 can be obtained in such a manner that the drawing pixel pattern, wherein the dot% value is 70% at the above-mentioned FM halftone dot, is used, so that positions for the drawing pixels are established as the turn-on points 662a and positions for non-drawing pixels are established as the turn-off points 662b.

Fig. 12 is a view useful for understanding another algorithm for a filter processing.

Fig. 12 shows again the first set M and the second set N also as shown in Fig. 6. The algorithm for a filter processing, wherein the mask 662 shown in Fig. 11 is used, corresponds to determination of the product set P of the first set M times a complementary set of the second set N.

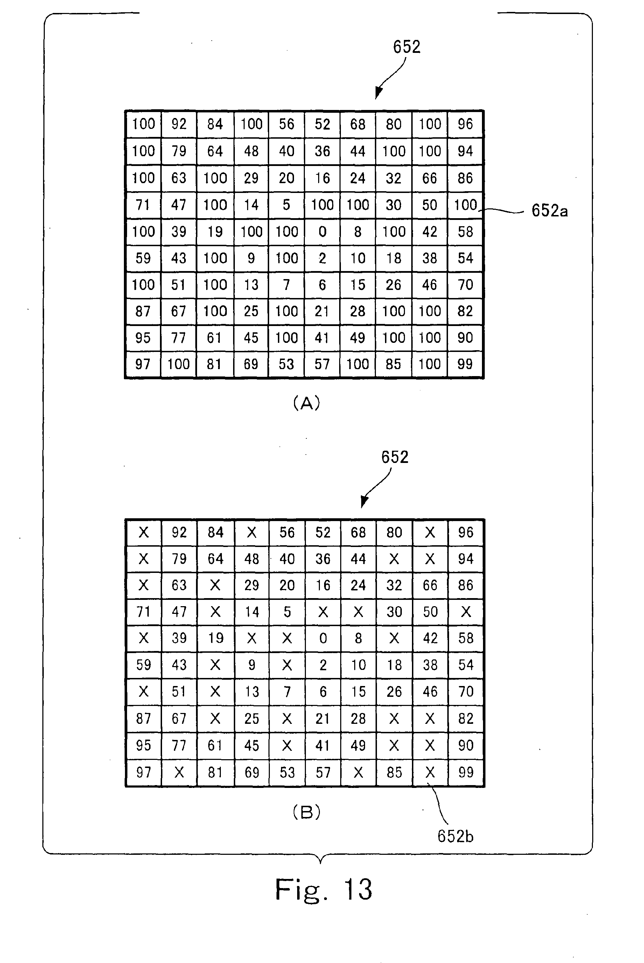

Fig. 13 is a view showing results of the filter processing using another mask 662 shown in Fig. 11 and another algorithm shown in Fig. 12.

Fig. 13 also shows, in two types of expression form, dot matrixes 652, which are obtained by the filter processing.

A part (A) of Fig. 13 shows the dot matrix 652 in the expression form similar to the part (A) of Fig. 9. A part (B) of Fig. 13 shows the dot matrix 650 in the expression form similar to the part (B) of Fig. 9. In Fig. 13, however, thresholds 652a of the value "100" or symbols 652b are described at the positions associated with the turn-off points 662b shown in Fig. 11.

Also in the event that those dot matrixes 652 are used in the halftone dot conversion processing, blanks occur in a set of drawing pixels and thus it is possible to expect the same effect as mentioned above.

The above-mentioned description is concerned with an explanation in which one color of CMYK four colors is taken into consideration, and it is acceptable that the above-mentioned halftone dot conversion processing is applied to dot% data for each of CMYK four colors. However, according to the halftone dot conversion section of the present embodiment, as will be explained hereinafter, the halftone dot conversion processing is varied in accordance with colors.

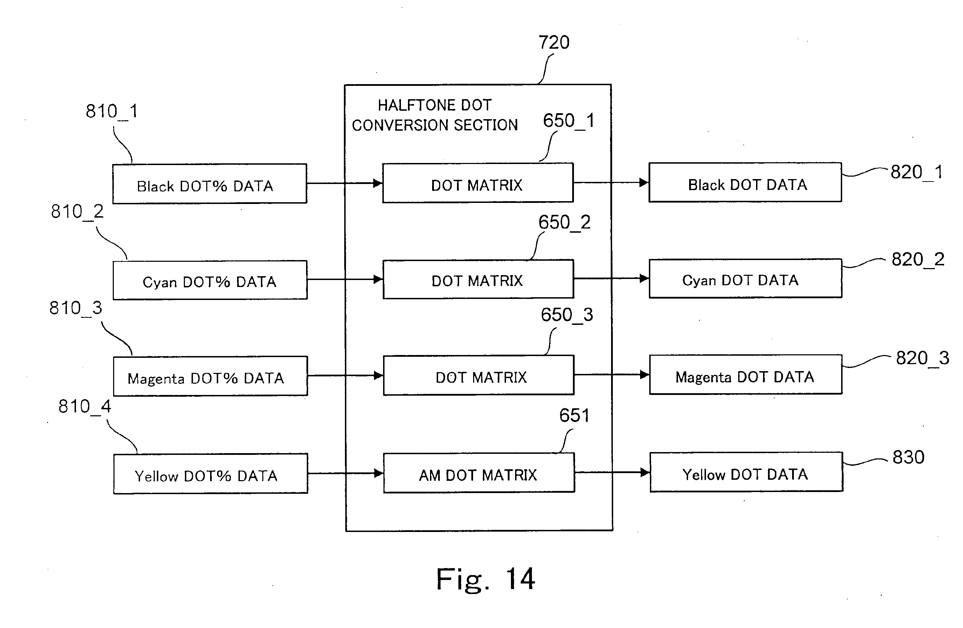

Fig. 14 is an explanatory view useful for understanding how the halftone dot conversion processing is varied in accordance with colors.

A halftone dot conversion section 720 receives dot% data 810_1, 810_2, 810_3, and 810_4 for CMYK four colors to apply the halftone dot conversion processing to the respective dot% data. According to the halftone dot conversion processing for dot% data 810_1, 810_2, and 810_3 for CMK three colors, of the CMYK four colors, there are used dot matrixes 650_1, 650_2, and 650_3, with which blanks occur in a set of drawing pixels, similar to dot matrixes 650 shown in Figs. 9 and 10. On the other hand, according to the halftone dot conversion processing for dot% data 810_4 for Y color, of the CMYK four colors, there is used dot matrix 651 defining the AM halftone dot, as shown in Fig. 5.

As the halftone dot conversion processing is varied in accordance with colors by the halftone dot conversion section 720, halftone dot data 820_1, 820_2, and 820_3 for CMK three colors, which are representative of images constituted of halftone dots involved in blanks of the drawing pixels, can be obtained, and halftone dot data 830 for Y color, which is representative of an image constituted of AM halftone dots, can be obtained.

As compared with density of CMK three colors, density of Y color is lower, and thus the interference between the periodical noises occurred on ink jet printers and the like and the periodical structure of halftone dots is hard to occur on Y color. And it is possible for Y color to use AM halftone dots to be essentially reproduced as it is. Accordingly, it is preferable that the above-mentioned use of different halftone dot conversion processing according to colors is performed.

Next, there will be explained a modification as to how the halftone dot conversion processing is varied in accordance with colors.

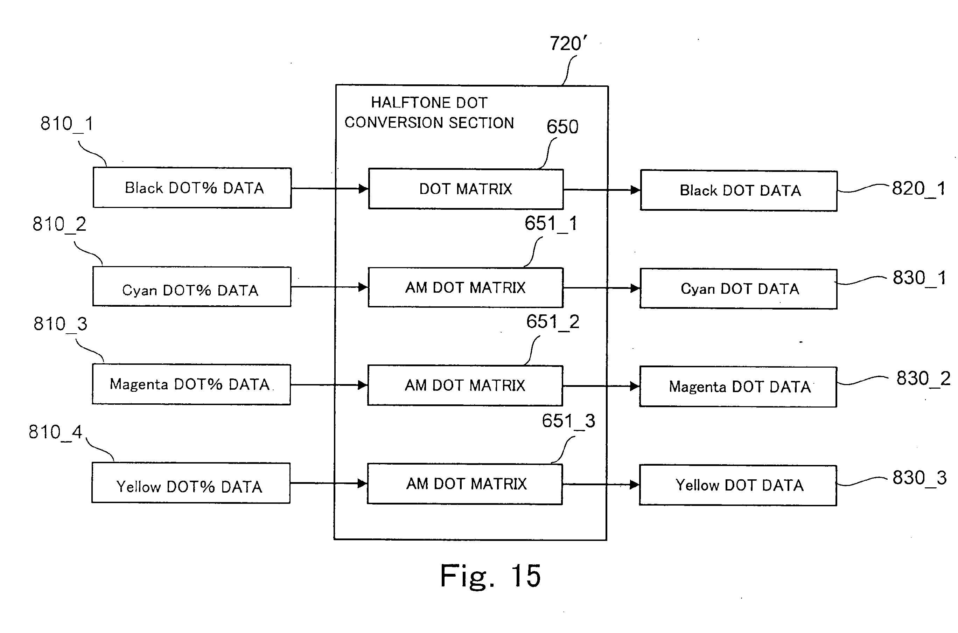

Fig. 15 is an explanatory view useful for understanding a modification as to how the halftone dot conversion processing is varied in accordance with colors.

Here, it is assumed that the halftone dot conversion section 720 shown in Fig. 14 is replaced by a halftone dot conversion section 720' for performing another use of different halftone dot conversion processing according to colors. The halftone dot conversion section 720' also receives dot% data 810_1, 810_2, 810_3, and 810_4 for CMYK four colors to apply the halftone dot conversion processing to the respective dot% data. According to the halftone dot conversion processing for dot% data 810_1 for K color, of the CMYK four colors, there is used dot matrixes 650 shown in Figs. 9 and 10. On the other hand, according to the halftone dot conversion processing for dot% data 810_2, 810_3, and 810_4 for CMY three colors, of the CMYK four colors, there are used dot matrixes 650_1, 650_2, and 650_3, which are similar to dot matrixes 650 defining the AM halftone dot, as shown in Fig. 5.

As the halftone dot conversion processing is varied in accordance with colors by the halftone dot conversion section 720', halftone dot data 820_1 for K color, which is representative of an image constituted of halftone dots involved in blanks of the drawing pixels, can be obtained, and halftone dot data 830_1, 830_2, and 830_3 for CMY three colors, which are representative of images constituted of AM halftone dots, can be obtained.

As compared with density of CMY three colors, density of K color is lower, and thus the interference between the periodical noises occurred on ink jet printers and the like and the structure of halftone dots occurs extremely on K color. Thus, it is preferable that the above-mentioned use of different halftone dot conversion processing according to colors is performed in such a manner that the halftone dots involved in blanks of the drawing pixels are used for only the halftone dot conversion processing for K color, of the CMYK four colors, and the AM halftone dots to be essentially reproduced are used for halftone dot conversion processing for CMY three colors.

Hereinafter, there will be explained various embodiments different from the above-mentioned embodiments. The various embodiments, which will be explained hereinafter, also have a plurality of halftone dot conversion processing systems, in a similar fashion to that of the above-mentioned embodiments, and have functions of selecting the halftone dot conversion processing systems in accordance with the output destination of the halftone dot data. However, for the sake of convenience, hereinafter, the explanation will be made taking into consideration only the halftone dot conversion processing systems for an ink jet printer, and the explanation for other halftone dot conversion processing systems will be omitted.

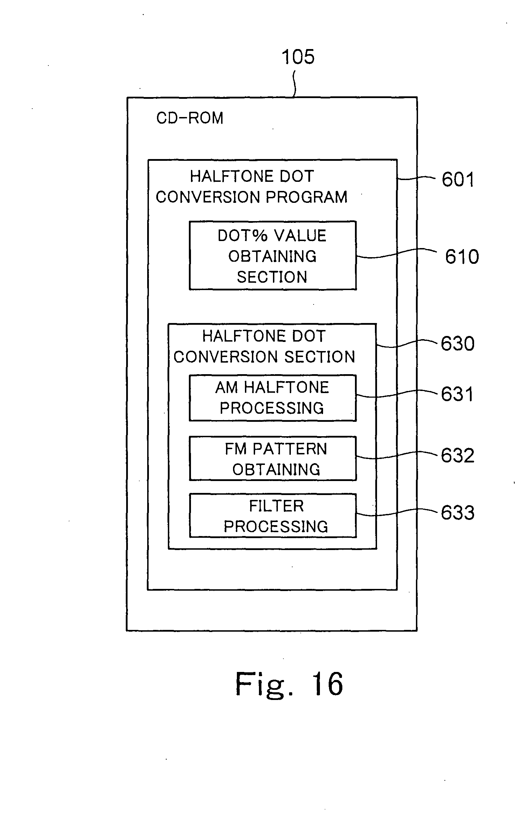

Fig. 16 is a view showing a halftone dot conversion program stored in a second embodiment of a halftone dot conversion program storage medium of the present invention.

The CD-ROM 105 stores therein a halftone dot conversion program 601. The halftone dot conversion program 601 shown in Fig. 16 has, instead of the halftone dot conversion section 620 of the halftone dot conversion program 600 shown in Fig. 3, a halftone dot conversion section 630 comprising an AM halftone processing section 631, an FM pattern obtaining section 632, and a filter processing section 633. The AM halftone processing section 631, the FM pattern obtaining section 632, and the filter processing section 633 correspond to examples of the set geometry determination section, the blank position determination section, and the synthesizing section referred to in the present invention, respectively.

When the halftone dot conversion program 601 is executed in the computer system 100 shown in Fig. 1, the computer system 100 serves as the halftone dot conversion apparatus according to the second embodiment of the preset invention.

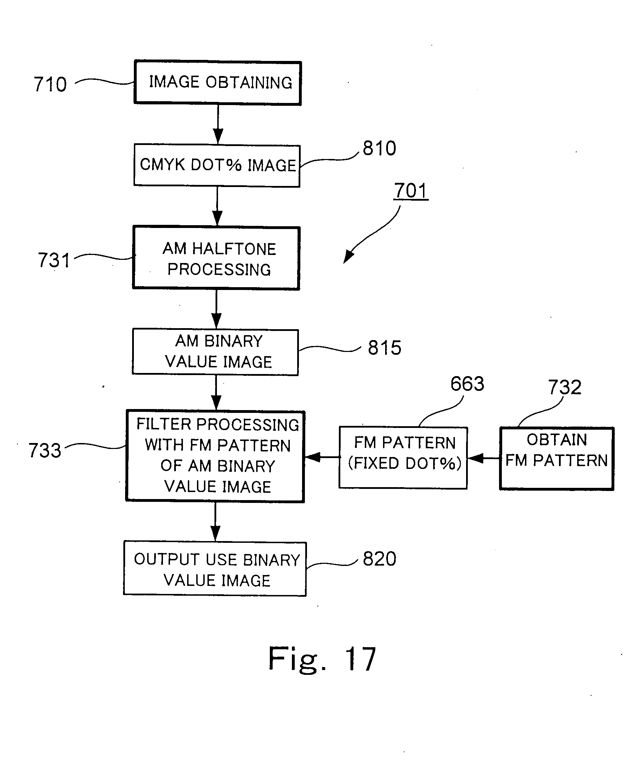

Fig. 17 is a functional block diagram of a second embodiment of a halftone dot conversion apparatus of the present invention.

A halftone dot conversion apparatus 701 shown in Fig. 17 comprises a dot% value obtaining section 710, an AM halftone processing section 731, an FM pattern obtaining section 732, and a filter processing section 733. The dot% value obtaining section 710, the AM halftone processing section 731, the FM pattern obtaining section 732, and the filter processing section 733 correspond to the dot% value obtaining section 610, the AM halftone processing section 631, the FM pattern obtaining section 632, and the filter processing section 633, as shown in Fig. 16, respectively. The structural elements of the halftone dot conversion apparatus 701 are constructed of the combination of hardware of the computer system 100 shown in Fig. 1 and the OS and the application program which are executed in the personal computer 100. On the other hand, the structural elements of the halftone dot conversion program 601 of Fig. 16 are constructed of only the application program.

Hereinafter, there will be explained the structural elements of the halftone dot conversion apparatus 701 shown in Fig. 17 and the structural elements of the halftone dot conversion program 601 shown in Fig. 16 as well.

The dot% value obtaining section 710, which constitutes the halftone dot conversion apparatus 701 shown in Fig. 17, obtains dot% data 810 via the communication network 300 shown in Fig. 1 and transmits the thus obtained dot% data 810 to the AM halftone processing section 731. Upon receipt of the dot% data 810, the AM halftone processing section 731 converts the dot% data 810 into AM binary value image data 815 representative of an image consisting of AM halftone dots using a dot matrix of AM halftone dots, such as the dot matrix 651 shown in Fig. 5.

The FM pattern obtaining section 732 obtains a dot pattern 633 of an FM halftone dot associated with a predetermined dot% value, such as the mask 661 shown in Fig. 7, and transmits the dot pattern 633 to the filter processing section 733.

The filter processing section 733 applies to the AM binary value image data 815 a filter processing using the dot pattern 633 of an FM halftone dot, and creates and outputs output use binary value image data 820 representative of an image consisting of halftone dots having blanks of drawing pixels. The algorithm of the filter processing at that time is the same as the algorithm shown in Fig. 8.

As described above, according to the second embodiment of the present invention, the synthesis of geometry of the AM halftone dots and the blank positions of the drawing pixels is executed in the halftone dot conversion section without using the dot matrixes 650 as shown in Figs. 9 and 10. However, the result of the halftone dot conversion processing is the same as the processing result in the first embodiment of the present invention as mentioned above.

Here, there will be shown examples of the AM binary value image data 815, the dot pattern 633 of an FM halftone dot, and the output use binary value image data 820 which is the synthesis of the AM binary value image data 815 and the dot pattern 633 of an FM halftone dot.

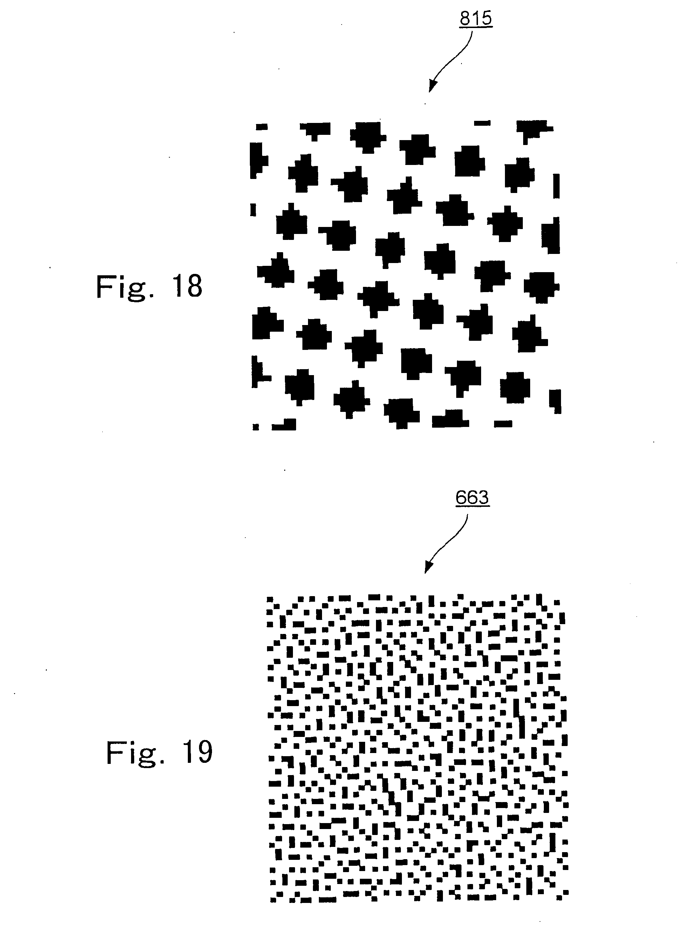

Fig. 18 is an illustration showing an example of AM binary value image data. The AM binary value image data 815 represents an image constructed of AM halftone dots periodically arranged.

Fig. 19 is an illustration showing an example of a dot pattern of FM halftone dots. The dot pattern 663 of FM halftone dots is a pattern of drawing pixels irregularly arranged.

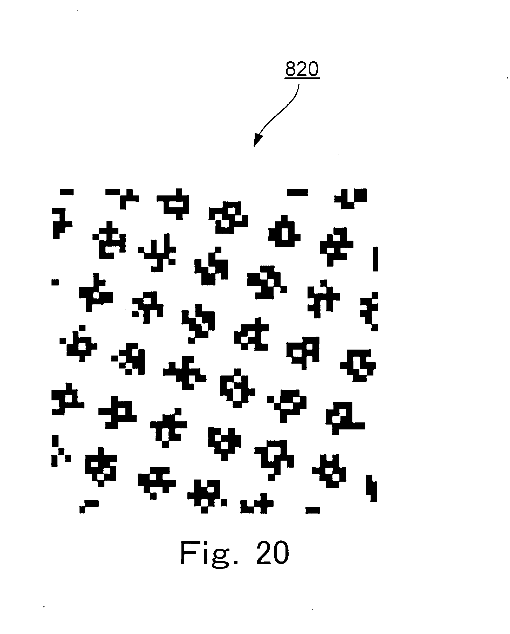

Fig. 20 is an illustration showing an example of output use binary value image data. The output use binary value image data 820 represents an image constructed of halftone dots involved in blanks of drawing pixels. When an ink jet printer or the like actually outputs an image in accordance with the output use binary value image data 820, the blanks of drawing pixels are crushed, so that the completely same halftone dot structure as the AM halftone dots periodically arranged as shown in Fig. 18 can be obtained.

Next, there will be explained a third embodiment of the present invention. According to the third embodiment, in a similar fashion to that of the first embodiment of the present invention as described first, the halftone dot conversion processing using the dot matrix is executed. While the third embodiment uses the dot matrix different from the first embodiment, the third embodiment is the same as the first embodiment except for this point. Thus, hereinafter, there will be explained the dot matrix used in the third embodiment and a method of creating the dot matrix.

According to the method of creating the dot matrix used in the third embodiment, in a similar fashion to that of the method of creating the dot matrix used in the first embodiment, the dot matrix 651 of a model as shown in Fig. 5 is used, and the dot matrix defining the FM halftone dots is used instead of the mask 661 shown in Fig. 7.

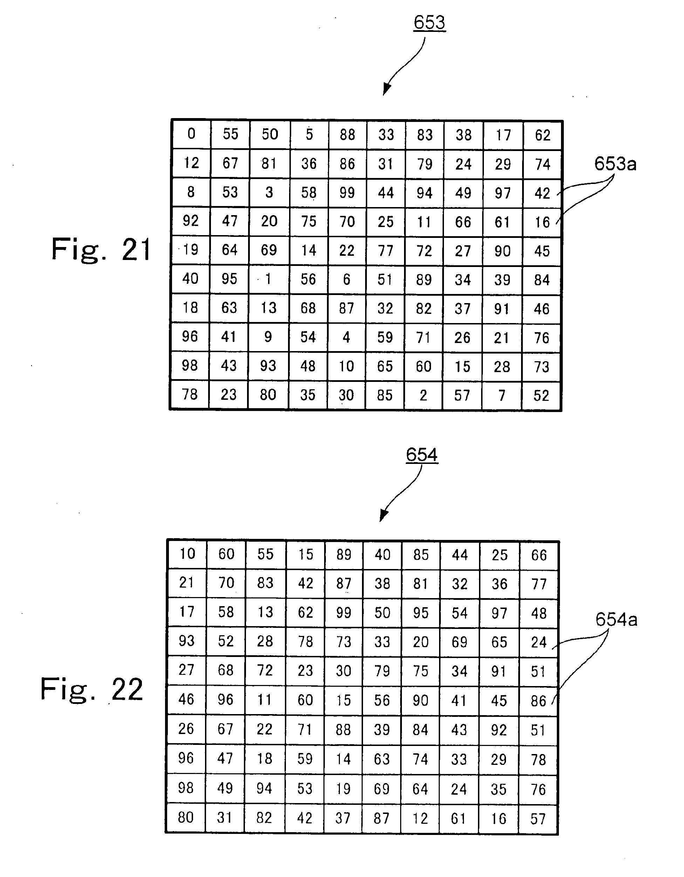

Fig. 21 is an illustration of an example of a dot matrix defining FM halftone dots.

A dot matrix 653 shown in Fig. 21 is also one in which thresholds 653a to be compared with dot% values are arranged in form of 10 x 10. The dot matrix 653 defines the FM halftone dots in the state that the drawing pixels are scattered. The dot matrix used, instead of the mask 661 shown in Fig. 7, is one in which the dot matrix 653 shown in Fig. 21 is improved.

Fig. 22 is an illustration showing an improved dot matrix of the dot matrix shown in Fig. 21.

While the dot matrix 653 shown in Fig. 21 is constructed of the thresholds 653a from the value "0" to the value "99", a dot matrix 654 shown in Fig. 22 is constructed of the thresholds 654a from the value "10" to the value "99" (partially overlapped).

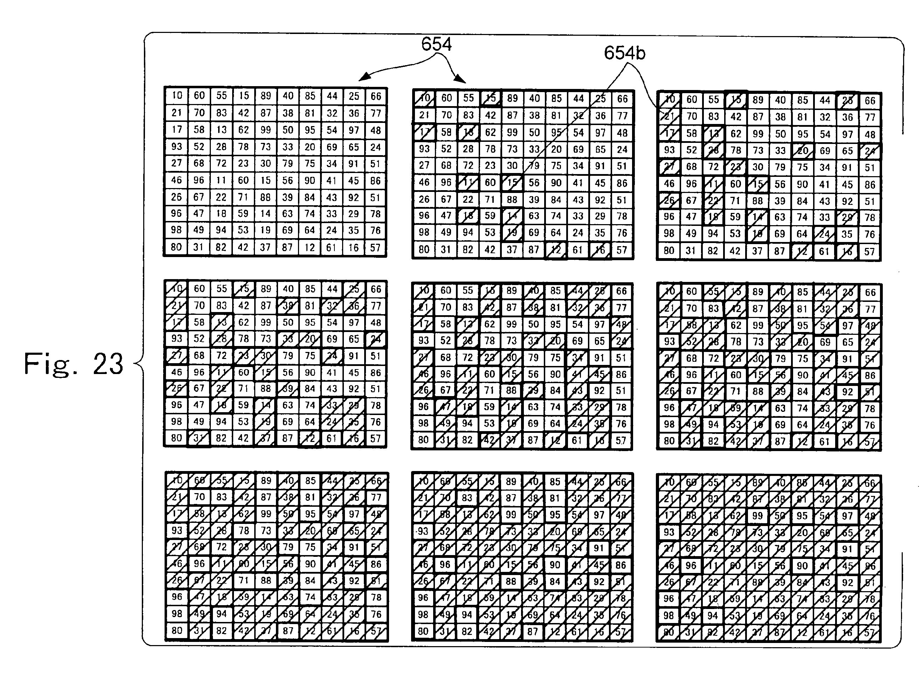

Fig. 23 is a view useful for understanding a state that the drawing pixels of the FM halftone dots defined by the dot matrix shown in Fig. 22 are increased as dot% values are increased.

Fig. 23 shows nine dot matrixes 654, each of which is also shown in Fig. 22. The nine dot matrixes 654 are associated with dot% values of 10%, 20%, ..., 90%, respectively. Areas 654b depicted with slanting lines in the dot matrixes 654 each represents a position of drawing pixels to be applied.

As shown in Fig. 23, the areas 654b to which the drawing pixels to be applied are absent for the dot% value of 10%, and are increased in the state of scattering as the dot% value is increased.

Those dot matrixes 654 are superposed with the dot matrix 651 of a model as shown in Fig. 5, so that a filter processing is performed in accordance with the algorithm shown in Fig. 8. That is, there are created a dot matrix adopting larger thresholds between the thresholds 654a constituting the dot matrixes 654 shown in Fig. 23 and the thresholds constituting the dot matrix 651 of a model. However, of the thresholds 651a constituting the dot matrix 651 of a model, thresholds 651a not larger than the value "9" are adopted as they are without the filter processing according to the algorithm shown in Fig. 8.

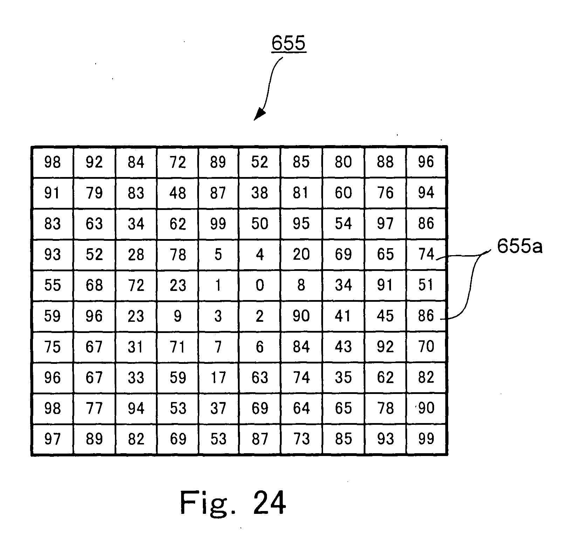

Fig. 24 is a view showing a dot matrix obtained by the filter processing.

Thresholds 655a constituting a dot matrix 655 shown in Fig. 24 are very irregular. Thresholds from the value "0" to "9" are concentrated to the center of the dot matrix 655. And on the periphery there are arranged the thresholds 655a not less than the value "17" occurring blanks and the overlapping of the values.

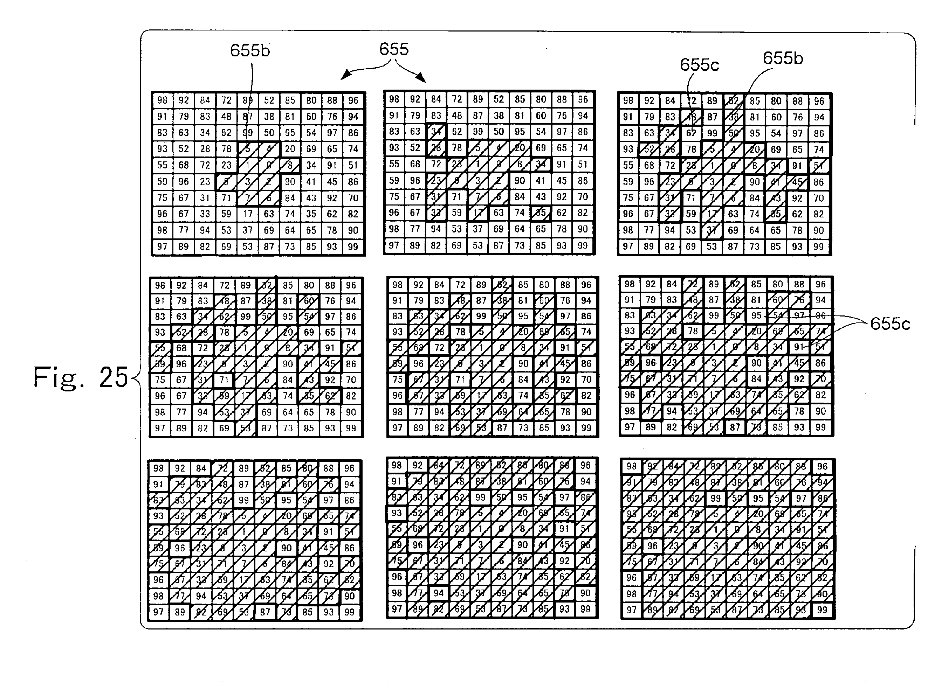

Fig. 25 is an illustration showing drawing pixels formed in accordance with the dot matrix shown in Fig. 24.

Fig. 25 shows nine dot matrixes 655, each of which is also shown in Fig. 24. In the nine dot matrixes 655, the upper left represents the state of ten drawing pixels, the upper center twenty drawing pixels, the upper right thirty drawing pixels, the middle left forty drawing pixels, ..., the lower right ninety drawing pixels.

Areas 655b depicted with slanting lines in the dot matrixes 655 each represents a position of drawing pixels to be applied. Up to ten drawing pixels is the same geometry as that of the AM halftone dots. When the number of drawing pixels is increased, the area 655b representative of the set of drawing pixels forms a block in its entirety. In the set of drawing pixels of the block, blanks 655c of the drawing pixels are scattered. The blanks 655c of the drawing pixels becomes the maximum when the number of the drawing pixels is 40 to 50, and is reduced gradually as the number of the drawing pixels is increased. In this manner, according to the third embodiment, the blanks 655c of the drawing pixels are increased or decreased in accordance with the growth of the set of drawing pixels.

In the event that the blanks 655c exist in the set of drawing pixels where the set of drawing pixels of the block is constructed with a small number of drawing pixels, for example, not more than 10, in some arrangement of the blanks 655c, dispersion of the number of drawing pixels for each set of drawing pixels becomes obvious in such an extent that the dispersion of the number of drawing pixels can be visually recognized. And thus there is a possibility that graininess occurs on an image. Accordingly, in the event that the number of drawing pixels constructing the set of drawing pixels is small, it is desired that no blank 655c exist in the set of drawing pixels.

Strength of interference between the halftone dot structure and the periodical noises becomes a peak when the number of drawing pixels is 40 to 50. Thus, at that time, it is desired that many blanks 655c exist in the set of drawing pixels.

According to the present embodiment, as mentioned above, when the number of drawing pixels is 40 to 50, the number of blanks 655c becomes maximum, and when the number of sets of drawing pixels is not above than 10, no blanks 655c exist. This feature makes it possible to contribute to balance between the reduction of the interference and the better reproduction of the halftone dot structure such as suppression of occurrence of graininess in a case where the number of drawing pixels is little as described above.

Incidentally, in the dot matrixes 655 shown in Figs. 24 and 25, the thresholds 655a are irregular, and thus it is difficult to use the dot matrixes 655 for the halftone dot conversion processing per se. For this reason, according to the present embodiment, the thresholds 655a constituting the dot matrixes 655 are allocated over again to the thresholds from the value "0" to the value "99".

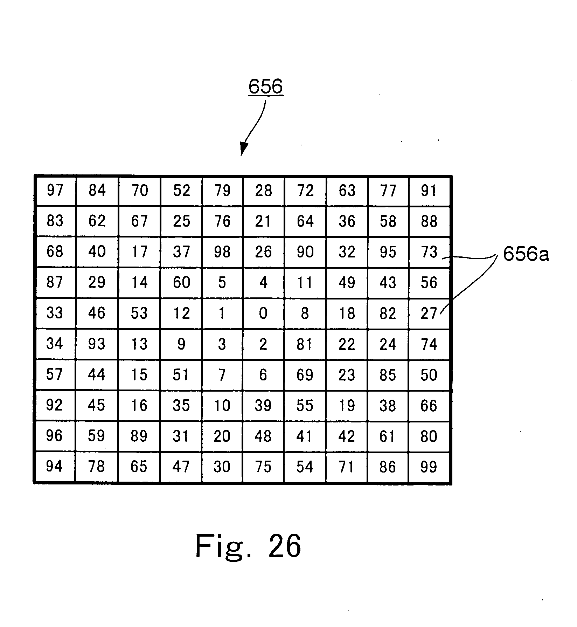

Fig. 26 is an illustration showing a dot matrix in which thresholds are allocated over again.

A dot matrix 656 shown in Fig. 26 is one in which the thresholds 655a constituting the dot matrixes 655 shown in Fig. 24 are allocated over again to the thresholds 656a from the value "0" to the value "99" in the order of the smaller value. The use of the dot matrix 656 shown in Fig. 26 causes the drawing pixels to increase with the pattern shown in Fig. 25 to dot% values of 10%, 20%, ..., 90%. The dot matrix 656 in which the thresholds are allocated over again corresponds to an embodiment of a dot matrix of the present invention.

Next, there will be explained a fourth embodiment of a halftone dot conversion program storage medium of the present invention.

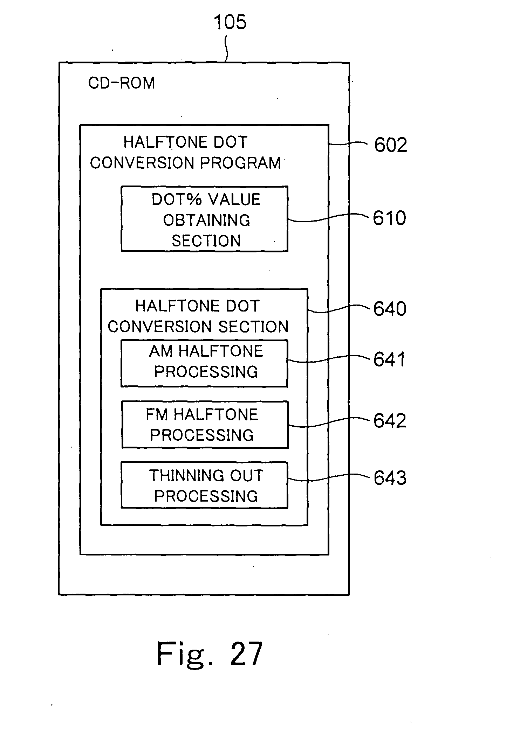

Fig. 27 is a view showing a halftone dot conversion program stored in a fourth embodiment of a halftone dot conversion program storage medium of the present invention.

The CD-ROM 105 stores therein a halftone dot conversion program 602. The halftone dot conversion program 602 shown in Fig. 27 has, instead of the halftone dot conversion section 620 of the halftone dot conversion program 600 shown in Fig. 3, a halftone dot conversion section 640 comprising an AM halftone processing section 641, an FM pattern obtaining section 642, and a thinning out processing section 643. The AM halftone processing section 641, the FM pattern obtaining section 642, and the thinning out processing section 643 correspond to examples of the set geometry determination section, the blank position determination section, and the synthesizing section referred to in the present invention, respectively.

When the halftone dot conversion program 602 is executed in the computer system 100 shown in Fig. 1, the computer system 100 serves as the halftone dot conversion apparatus according to the fourth embodiment of the preset invention.

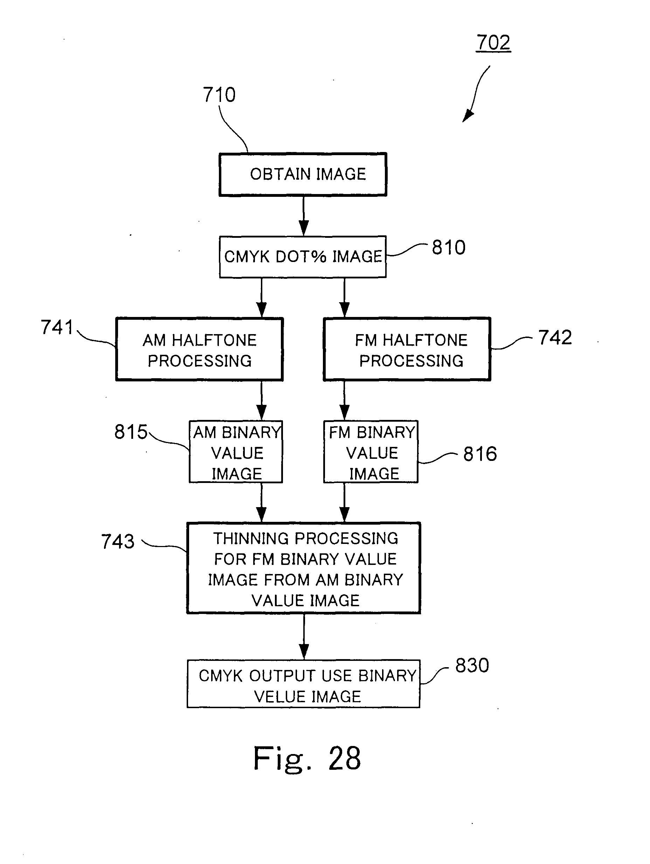

Fig. 28 is a functional block diagram of a fourth embodiment of a halftone dot conversion apparatus of the present invention.

A halftone dot conversion apparatus 702 shown in Fig. 28 comprises a dot% value obtaining section 710, an AM halftone processing section 741, an FM pattern obtaining section 742, and a thinning out processing section 743. The dot% value obtaining section 710, the AM halftone processing section 741, the FM pattern obtaining section 742, and the thinning out processing section 743 correspond to the dot% value obtaining section 610, the AM halftone processing section 641, the FM pattern obtaining section 642, and the thinning out processing section 643, as shown in Fig. 27, respectively. The structural elements of the halftone dot conversion apparatus 702 are constructed of the combination of hardware of the computer system 100 shown in Fig. 1 and the OS and the application program which are executed in the personal computer 100. On the other hand, the structural elements of the halftone dot conversion program 602 of Fig. 27 are constructed of only the application program.

Hereinafter, there will be explained the structural elements of the halftone dot conversion apparatus 702 shown in Fig. 28 and the structural elements of the halftone dot conversion program 602 shown in Fig. 27 as well.

The dot% value obtaining section 710, which constitutes the halftone dot conversion apparatus 702 shown in Fig. 28, obtains dot% data 810 via the communication network 300 shown in Fig. 1 and transmits the thus obtained dot% data 810 to both the AM halftone processing section 741 and the FM pattern obtaining section 742.

Upon receipt of the dot% data 810, the AM halftone processing section 741 converts the dot% data 810 into AM binary value image data 815 representative of an image consisting of AM halftone dots using a dot matrix of AM halftone dots, such as the dot matrix 651 shown in Fig. 5.

The FM pattern obtaining section 742 converts the dot% data 810 into FM binary value image data 816 representative of an image consisting of FM halftone dots using a dot matrix of FM halftone dots, such as the dot matrix 654 shown in Fig. 22.

The thinning out processing section 743 thins out drawing pixels from the drawing pixels represented by the AM binary value image data 815 in accordance with the FM binary value image data 816. The algorithm of the processing in the FM binary value image data 816 is the same as the algorithm used in synthesis of the dot matrixes in the third embodiment. In this manner, the thinning out processing section 743 thins out drawing pixels, and creates and outputs output use binary value image data 830 representative of an image consisting of halftone dots having blanks of drawing pixels.

Next, there will be explained a fifth embodiment of the present invention. The fifth embodiment sets an application to a printing apparatus for particularly printing color images forth as a premise.

For example, in an ink jet printer for printing a color image in which CMYK four colors of halftone dot images are superposed on one another, in order to suppress occurrence of a so-called moire or the like owing to interference among periodical structures of halftone dots for the respective colors, there is considered a device that an arrangement direction of halftone dots in a halftone dot image is changed for each color.

In such ink jet printers for printing the color images, there is a type that a halftone dot image is represented by an arrangement of unit areas including a plurality of halftone dots (hereinafter, the unit area is referred to as a super cell). According to such a type of ink jet printer, a variation of the arrangement direction of halftone dots in a halftone dot image for each color is implemented by changing the arrangement direction of halftone dots in one super cell for each color. In such a type of ink jet printer, an application of the second embodiment of the present invention explained referring to for example Fig. 17 makes it possible to create a dot matrix defining an arrangement pattern for blanks for the above-mentioned super cell. When it is assumed that for example, sizes of the super cells among the halftone dot images for the respective colors are the same as one another, and as a dot matrix defining an arrangement pattern of blanks in the super cell, there is prepared one dot matrix common to the whole colors, such a one dot matrix involves a possibility of occurrence of the following inconvenience.

The arrangement pattern of blanks defined by such a one dot matrix offers the same pattern among the halftone images for the respective colors. As mentioned above, outputs of the halftone images using the ink jet printer often involve occurrence of various types of periodical noises due to paper feeding errors and ink droplet dropping positional errors in the ink jet printer. The occurrence of such noises brings about the periodical discrepancy on superposition of the halftone dot images for the respective colors. At that time, as described above, when there are provided blanks in the same pattern in the halftone dot images for the respective colors, the blanks to be provided originally on the same pattern periodically get out of position for each color in accordance with the periodical discrepancy on superposition of the halftone dot images. Such a positional discrepancy of blanks brings about unevenness on color, so that there is a high possibility that the unevenness on color is visually recognized as image quality deterioration such as moire or the like, since the unevenness on color is periodical.

In view of the foregoing, according to the fifth embodiment, in order that the halftone dot image is provided with blanks at the different positions for each color, the dot matrix defining positions of blanks in the super cell is created changing the arrangement pattern of blanks for each color.

Further, according to the fifth embodiment, not only the arrangement pattern of blanks in the super cell but also the size of the super cell and the size of the dot matrix defining positions of blanks in the super cell are changed for each color. Variation of the super cell for each color causes an arrangement period of super cells in a halftone dot image to be varied for each color, so that it is possible to expect an effect that the arrangement pattern of blanks in the halftone dot image in its entirety is varied for each color. In other words, variation of the size of the dot matrix defining positions of blanks for each color as well as the arrangement pattern of blanks makes it possible to enhance effects of suppression of image quality deterioration such as the above-mentioned moire and the like.

According to the fifth embodiment, in a similar fashion to that of the second embodiment, as the dot matrix defining positions of blanks, there is used the dot matrix defining the FM halftone dots. According to the fifth embodiment, there is used a plurality of sorts of dot matrixes defining the FM halftone dots each varying in a generating pattern of FM halftone dots and a size for each color. Thus, according to the fifth embodiment, it is possible to vary the arrangement pattern of blanks in the halftone dot image in its entirety for each color.

The fifth embodiment is the same as the second embodiment excepting that the plurality of sorts of dot matrixes is created, and thus hereinafter, there will be explained the plurality of sorts of dot matrixes used in the fifth embodiment and a method of creating the plurality of sorts of dot matrixes.

According to the above-mentioned first to fourth embodiments, the dot matrix is constructed of thresholds from the value "0" to the value "100", which are associated with the dot% values from 0% to 100%, respectively. To the contrary, the dot matrix, which will be explained hereinafter, is constructed of thresholds from the value "0" to the value "255", which are associated with the dot% values from 0% to 100%, respectively. According to this dot matrix, for example, the threshold of the value "128" is associated with the dot% value of 50%.

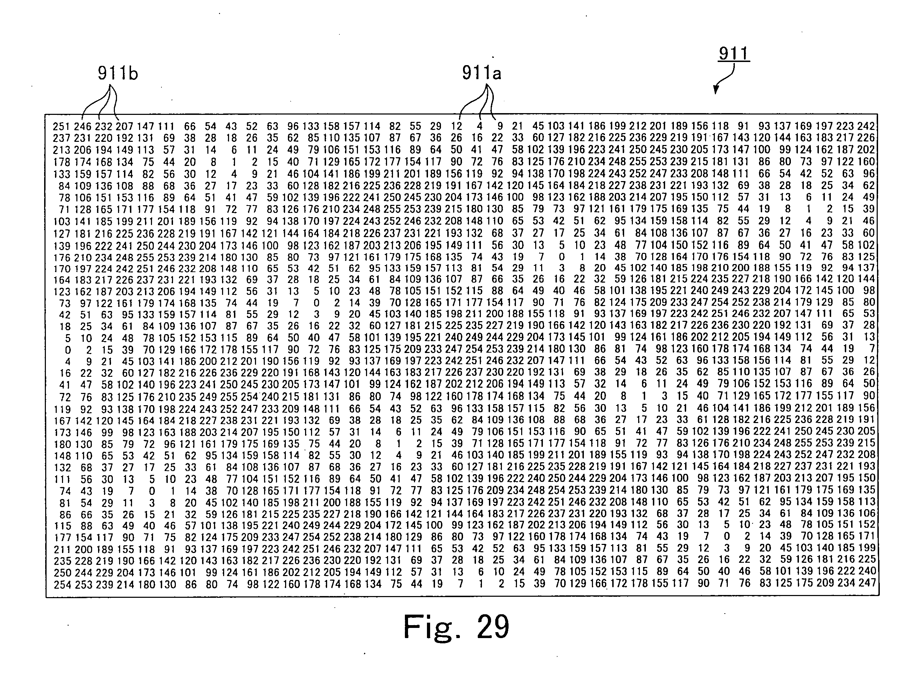

Fig. 29 is a view showing an example of a dot matrix defining AM halftone dots used in cyan (C), on one super cell, in the fifth embodiment.

A dot matrix 911 shown in Fig. 29 is one in which thresholds 911a from the value "0" to the value "255" (partially overlapped), which are to be compared with dot% values, are arranged in form of 40 x 40. The dot matrix 911 defines a plurality of AM halftone dots arranged in an about 15° of arrangement direction in a 40 x 40 size of super cell. According to the fifth embodiment, the dot matrix 911 is used to convert dot% data for cyan into AM binary value image data representative of an image consisting of AM halftone dots in unit of a 40 x 40 size of super cell.

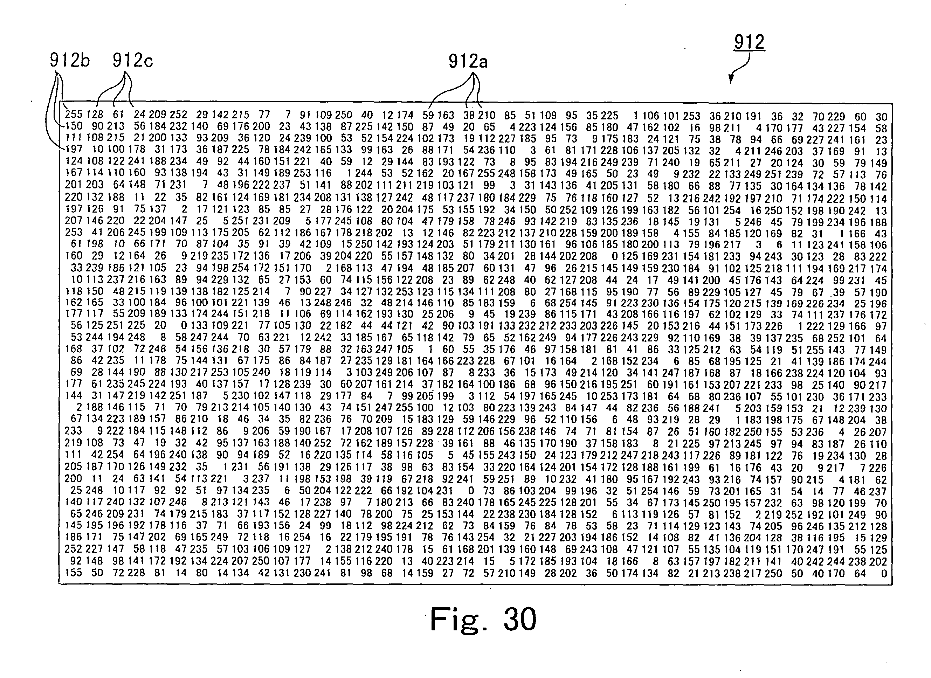

Fig. 30 is a view showing an example of a dot matrix defining FM halftone dots, for defining an arrangement pattern for blanks provided at halftone dots of cyan in the fifth embodiment, on one super cell.

A dot matrix 912 shown in Fig. 30 is also one in which thresholds 912a from the value "0" to the value "255" (partially overlapped), which are to be compared with dot% values, are arranged in form of 40 x 40. The dot matrix 912 defines FM halftone dots in a state that drawing pixels are scattered in a 40 x 40 size of super cell. According to the fifth embodiment, the half of the total thresholds 912a in the dot matrix 912 shown in Fig. 30 is used as the turn-off points. In other words, the thresholds 912b exceeding the value "128" associated with the dot% value of 50% correspond to the turn-off points 661b in the mask 661 shown in Fig. 7, and the thresholds 912c not above than the value "128" correspond to the turn-on points 661a in the mask 661 shown in Fig. 7.

According to the fifth embodiment, the dot matrix 912 shown in Fig. 30 is used to obtain a halftone dot pattern of FM halftone dots associated with the dot% value of 50%. And the filter processing using the halftone dot pattern of FM halftone dots associated with the dot% value of 50% is applied to the AM binary value image data for cyan, so that output use binary value image data representative of an image consisting of halftone dots having blanks of drawing pixels is created. Algorithm for the filter processing at that time is also the same as the algorithm shown in Fig. 8.

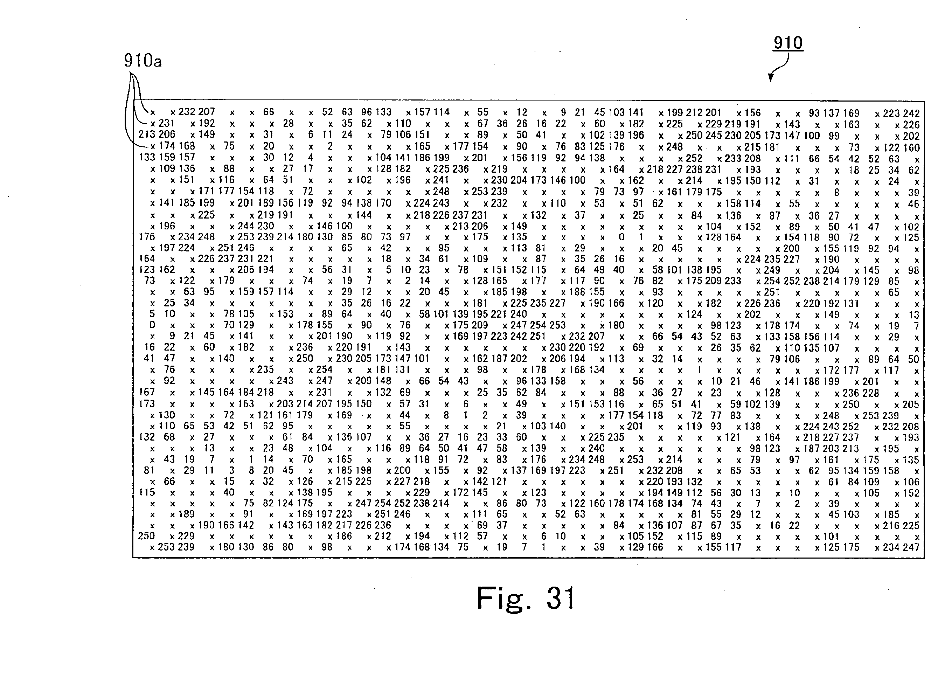

Fig. 31 a view showing an arrangement pattern of halftone dots for cyan provided with blanks, with a dot matrix defining the halftone dots on one super cell, in a fifth embodiment.

Fig. 31 shows a dot matrix 910 in which symbol marks "x" 910a indicative of blanks are described at the positions associated with the thresholds 912b exceeding the value "128" shown in Fig. 30. At the positions other than the blanks there are described the thresholds 911a of the associated positions in the dot matrix shown in Fig. 29 as they are.

With the above description, the explanation of the respective dot matrixes for cyan in the fifth embodiment will be terminated.

Hereinafter, there will be explained about dot matrixes associated with other three colors (magenta (M), yellow (Y), and black (K)) in the fifth embodiment. Here, with respect to a method of creating output use binary value image data for the other three colors using the dot matrix defining the AM halftone dots and the dot matrix defining the FM halftone dots, it is the same as the method of creating output use binary value image data for cyan. And thus the redundant explanation will be omitted. Incidentally, with respect to the respective dot matrixes associated with black, according to the fifth embodiment, sizes of the dot matrix defining the AM halftone dots, the dot matrix defining the FM halftone dots, and the dot matrix defining the halftone dots provided with blanks are too large to be illustrated. Thus the illustration will be omitted.

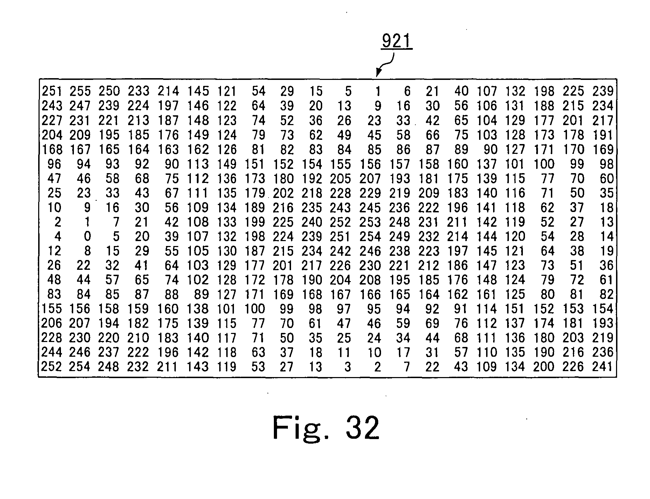

Fig. 32 is a view showing an example of a dot matrix defining AM halftone dots used in magenta, on one super cell, in the fifth embodiment.

A size of a dot matrix 921 shown in Fig. 32 is of 20 x 20 that is different from the size in the case of cyan. An arrangement direction of AM halftone dots defined by the dot matrix 921 is of 45° different from the arrangement direction in the case of cyan.

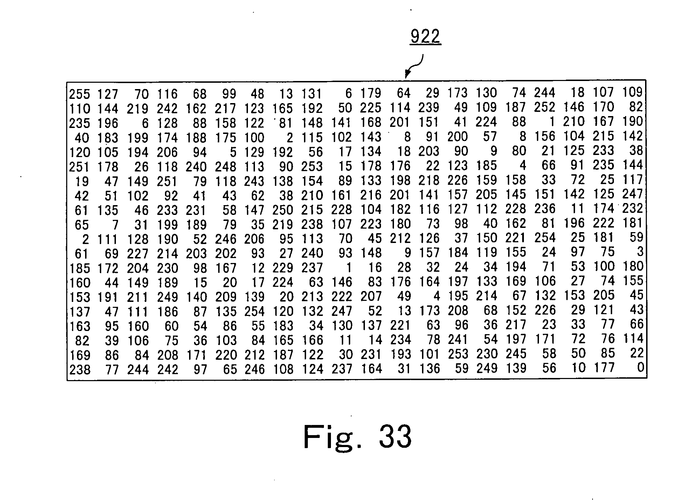

Fig. 33 is a view showing an example of a dot matrix defining FM halftone dots, for defining an arrangement pattern for blanks provided at halftone dots of magenta in the fifth embodiment, on one super cell.

A size of a dot matrix 922 shown in Fig. 33 is also of 20 x 20 that is different from the size in the case of cyan. An arrangement pattern of FM halftone dots defined by the dot matrix 922 is different from the arrangement pattern of FM halftone dots in the case of cyan.

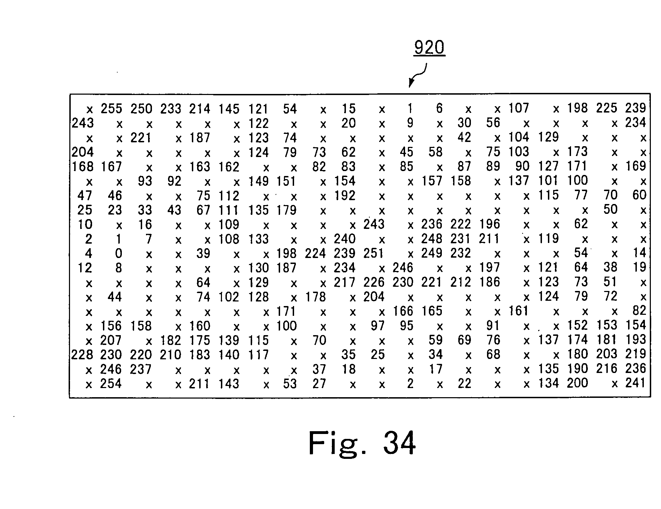

Fig. 34 a view showing an arrangement pattern of halftone dots for magenta provided with blanks, with a dot matrix defining the halftone dots on one super cell, in a fifth embodiment.

Output use binary value image data representative of halftone dots for magenta provided with blanks is created in such a manner that filter processing using a dot pattern of FM halftone dots associated with dot% values of 50%, which is obtained using the dot matrix 922 shown in Fig. 33, is applied to AM binary value image data for magenta, which is obtained using the dot matrix 921 shown in Fig. 32. A dot matrix 920 shown in Fig. 34 represents an arrangement pattern of halftone dots represented by the output use binary value image data for magenta.

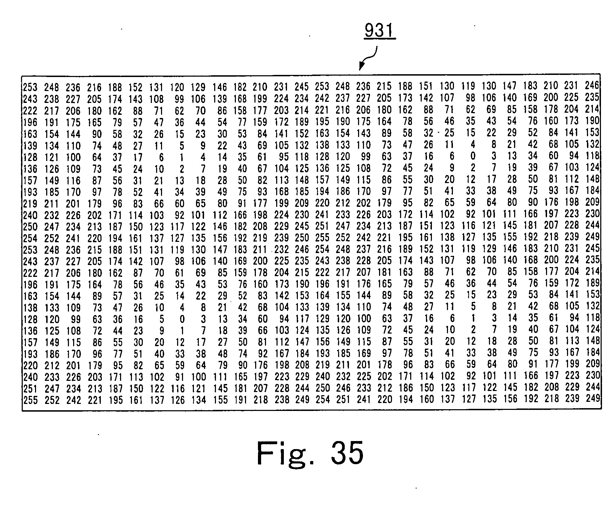

Fig. 35 is a view showing an example of a dot matrix defining AM halftone dots used in yellow, on one super cell, in a fifth embodiment.

A size of a dot matrix 931 shown in Fig. 35 is of 28 x 28 that is different from the sizes in both the cases of cyan and magenta. An arrangement direction of AM halftone dots defined by the dot matrix 931 is of 0° different from the arrangement directions in both the cases of cyan and magenta.

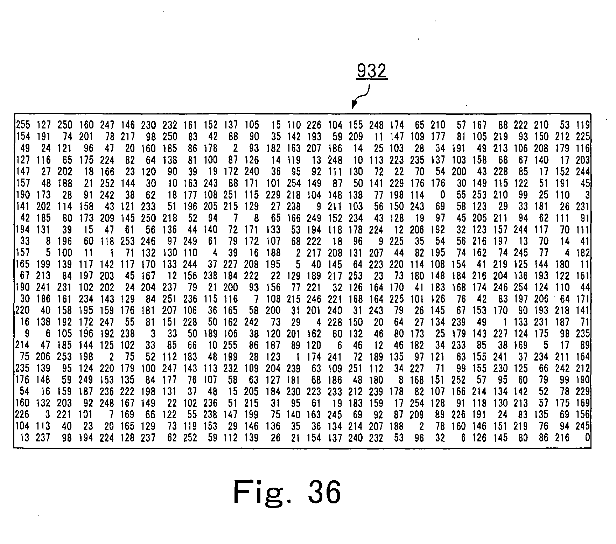

Fig. 36 is a view showing an example of a dot matrix defining FM halftone dots, for defining an arrangement pattern for blanks provided at halftone dots of yellow in the fifth embodiment, on one super cell.

A size of a dot matrix 932 shown in Fig. 36 is also of 28 x 28 that is different from the sizes in both the cases of cyan and magenta. An arrangement pattern of FM halftone dots defined by the dot matrix 932 is different from the arrangement patterns of FM halftone dots in both the cases of cyan and magenta.

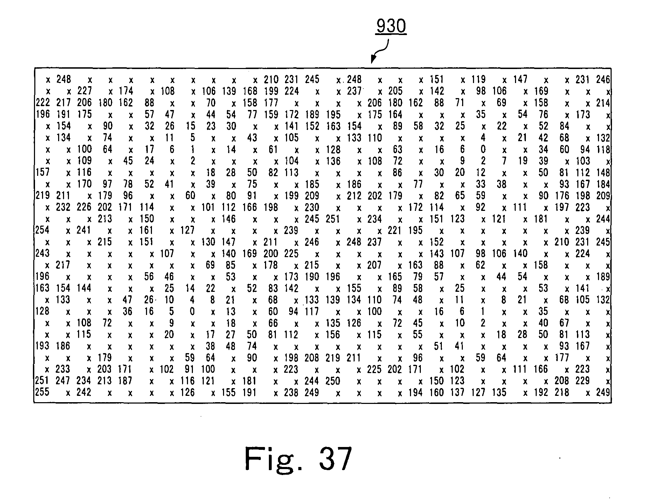

Fig. 37 a view showing an arrangement pattern of halftone dots for yellow provided with blanks, with a dot matrix defining the halftone dots on one super cell, in a fifth embodiment.

A dot matrix 930 shown in Fig. 37 represents an arrangement pattern of halftone dots provided with blanks, which is represented by the output use binary value image data for magenta.

Thus, according to the fifth embodiment, there are dot matrixes for black in addition to the dot matrixes for three colors as explained referring to Fig. 29 to Fig. 37. However, as mentioned above, with respect to the dot matrixes for black, the illustration will be omitted. A size of a dot matrix defining AM halftone dots in black is of 80 x 80 that is different from the sizes in the cases of cyan, magenta and yellow. An arrangement direction of AM halftone dots defined by this dot matrix is of about 75° different from the arrangement directions in the cases of cyan, magenta and yellow.

A size of a dot matrix defining FM halftone dots in black is also of 80 x 80 that is different from the sizes in the cases of cyan, magenta and yellow. An arrangement pattern of FM halftone dots defined by this dot matrix is different from the arrangement patterns of FM halftone dots in the cases of cyan, magenta and yellow.

As described above, sizes of super cells constituting halftone dot images for the respective colors are different from one another among dot images for CMYK colors represented by the output use binary value image data created using the dot matrix defining the AM halftone dots and the dot matrix defining the FM halftone dots, and the arrangement patterns of blanks in the super cells are also different from one another. This feature makes it possible to vary the arrangement patterns of blanks in the halftone dot images for CMYK colors in its entirety for each color. Thus it is possible to suppress image deterioration such as moire or the like in a color image.

According to the fifth embodiment there is raised and explained an example in which blanks are provided for halftone dot images for the whole CMYK four colors. However, as far as a case where blanks are provided for halftone dot images for at least two colors, it is possible to apply the idea of the fifth embodiment.

With the above-mentioned description, the explanation of the fifth embodiment will be terminated.

Incidentally, according to the above-mentioned explanation, there are disclosed the embodiments of the halftone dot conversion apparatus connected to a large scale ink jet printer. However, a halftone dot conversion apparatus of the present invention is not restricted to one connected to an ink jet printer. It is acceptable that a halftone dot conversion apparatus of the present invention is an apparatus independent of a printer, or alternatively one to be connected to a printer other than the ink jet printer.

Further, according to the above-mentioned explanations of the first to fourth embodiments, as the embodiments of a dot matrix of the present invention, there are disclosed the embodiments of the dot matrix defining geometry of one halftone dot. However, it is acceptable that a dot matrix of the present invention is as disclosed in the fifth embodiment, a dot matrix defining geometry of a halftone dot group consisting of a plurality of halftone dots.

Next, there will be explained a sixth embodiment of the present invention.

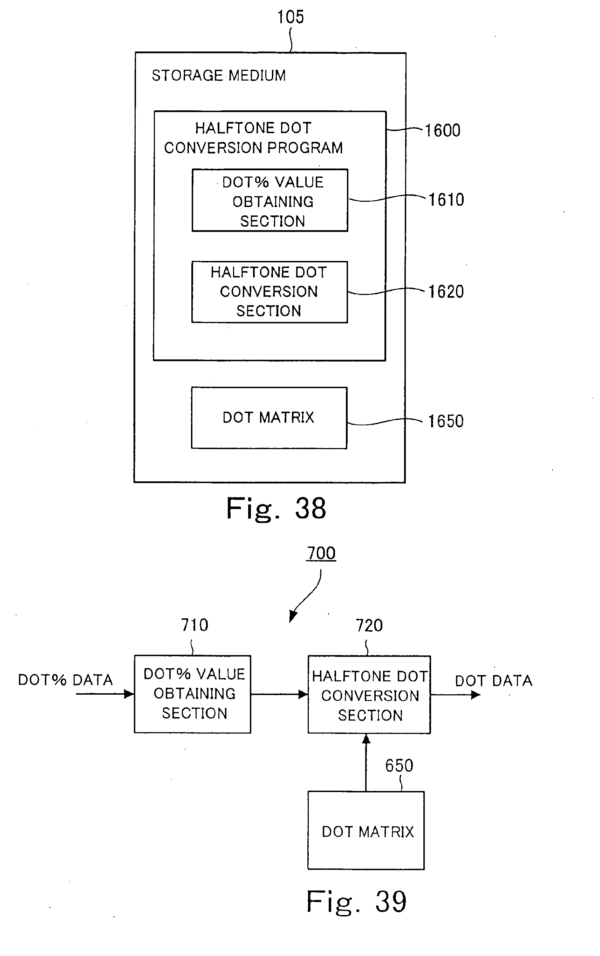

Fig. 38 is a view showing a halftone dot conversion program and a dot matrix according to a sixth embodiment of the present invention.

According to the sixth embodiment, the CD-ROM 105 stores therein a halftone dot conversion program 1600 and a dot matrix 1650. The CD-ROM 105 is simply an example of a storage medium for storing the halftone dot conversion program 1600 and the dot matrix 1650. It is acceptable that a halftone dot conversion program and a'dot matrix of the present invention are stored in another storage medium such as a hard disk (HD), a flexible disk (FD), a magneto-optical (MO) disk and a DVD.

The halftone dot conversion program 1600 shown in Fig. 38 causes the computer system 100 shown in Fig. 1 to serve as a halftone dot conversion apparatus for creating halftone dot data from dot% data using the dot matrix 1650, when the halftone dot conversion program 1600 is executed by the computer system 100. The halftone dot conversion program 1600 comprises a dot% value obtaining section 1610 and a halftone dot conversion section 1620. The dot% value obtaining section 1610 and the halftone dot conversion section 1620 correspond to examples of the tone value obtaining section and the halftone dot conversion section in the halftone dot conversion program related to the present invention, respectively.

Functions of the elements of the halftone dot conversion program 1600 and details of the dot matrix 1650 will be described later.

Fig. 39 is a functional block diagram of a halftone dot conversion apparatus according to the sixth embodiment of the present invention.

A halftone dot conversion apparatus 700 is constructed in such a manner that the halftone dot conversion program 1600 of Fig. 38 is installed into the computer system 100 shown in Fig. 1 and is executed. The halftone dot conversion apparatus 700 comprises a dot% value obtaining section 710 and a halftone dot conversion section 720. The dot% value obtaining section 710 and the halftone dot conversion section 720 correspond to the dot% value obtaining section 1610 and the halftone dot conversion section 1620, respectively, which constitute the halftone dot conversion program 1600 of Fig. 38. The structural elements of the halftone dot conversion apparatus 700 are constructed of the combination of hardware of the computer system 100 shown in Fig. 1 and the OS and the application program which are executed in the personal computer 100. On the other hand, the structural elements of the halftone dot conversion program 1600 of Fig. 38 are constructed of only the application program.

The dot% value obtaining section 710 and the halftone dot conversion section 720 correspond to examples of the tone value obtaining section and the halftone dot conversion section in the halftone dot conversion apparatus of the present invention, respectively.

Hereinafter, there will be explained the structural elements of the halftone dot conversion apparatus 700 shown in Fig. 39 and the structural elements of the halftone dot conversion program 1600 shown in Fig. 38 as well.

The dot% value obtaining section 710, which constitutes the halftone dot conversion apparatus 700 shown in Fig. 39, obtains dot% data via the communication network 300 shown in Fig. 1. The halftone dot conversion section 720 creates halftone dot data in such a manner that a halftone dot conversion is applied to the dot% data obtained by the dot% value obtaining section 710 in accordance with the dot matrix 1650, and outputs the halftone dot data thus created to the large scale ink jet printer 200 shown in Fig. 1.

Hereinafter, there will be explained a method of creating the dot matrix 1650 and the halftone dot conversion processing method based on the dot matrix.

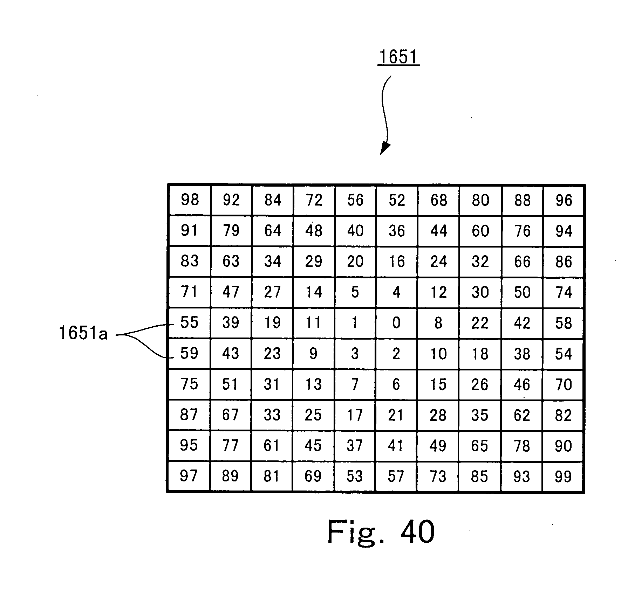

Fig. 40 is a view showing an example of a dot matrix that is a model when a dot matrix 1650, which is used in the halftone dot conversion processing according to the sixth embodiment, is created.

A dot matrix 1651 of a model as shown in Fig. 40 defines geometry of a halftone dot of which a size depends on the dot% value.

The dot matrix 1651 shown in Fig. 40 is one in which thresholds 1651a to be compared with dot% values are arranged in form of 10 x 10. The thresholds 1651a correspond to output points in an output device (here the large scale ink jet printer 200 shown in Fig. 1) for forming an image by a set of a large number of output points, such as ink dots, on a one-for-one basis.

Here, there will be explained a halftone dot conversion processing method according to the dot matrix raising an example in which the dot matrix 1651 shown in Fig. 40 is used in the halftone dot conversion section 720 shown in Fig. 39. The halftone dot conversion section 720 determines one dot% value, which is to be applied to the dot matrix 1651 in its entirety, in accordance with the dot% value represented by the halftone dot data, so that the dot% value thus determined is compared with the values of the respective thresholds 1651a. And as a result, in the event that the dot% value is larger than the value of the threshold 1651a, the position associated with the threshold 1651a is determined as an output point to which ink is ejected by an output device. The output point to which ink is ejected corresponds to an example of the drawing pixel referred to in the present invention, and thus the output point is referred to as the drawing pixel hereinafter. Halftone dots are formed by a set of the drawing pixels.

The dot matrix 1651 shown in Fig. 40 represents a set of drawing pixels each increasing a magnitude as the dot% value increases, and defines the conventional typical halftone dots.

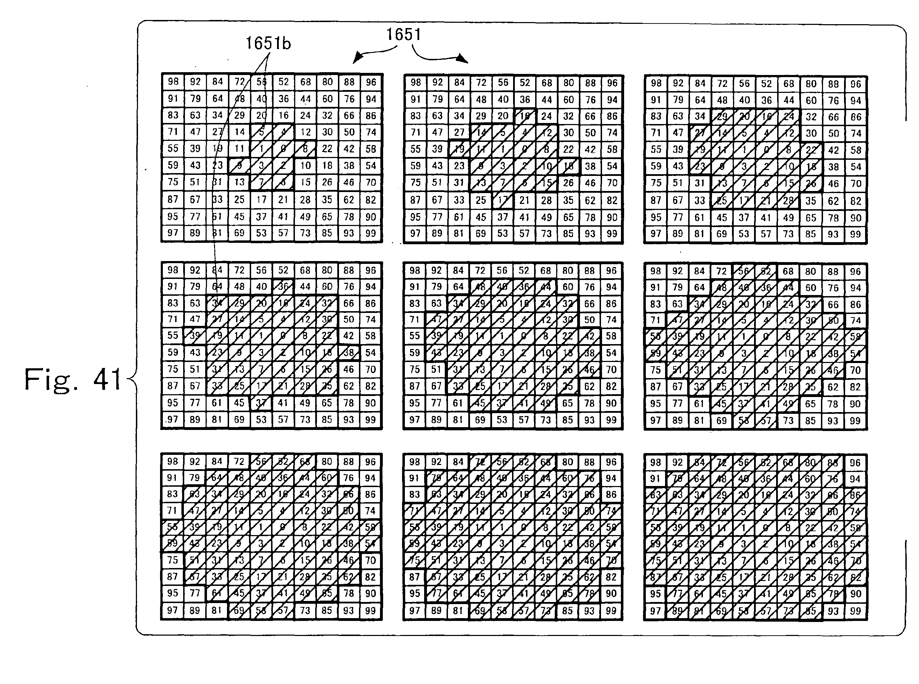

Fig. 41 is a view useful for understanding a state that a set of pixels grows as dot% values are increased.

Fig. 41 shows nine dot matrixes 1651 also shown in Fig. 40. In the dot matrixes 1651, the upper left is associated with the dot% value of 10%, the upper center the dot% value of 20%, the upper right the dot% value of 30%, the middle left the dot% value of 40%, ..., and the lower right the dot% value of 90%. Areas 1651b depicted with slanting lines in the dot matrixes 1651 each represents a set of drawing pixels, that is, the area 1651b represents a geometry of a halftone dot.

The area 1651b associated with the dot% value of 10% indicates a set of ten pieces of drawing pixels. Likely, the areas 1651b associated with the dot% values of 20%, ..., 90% indicate a set of twenty pieces of drawing pixels, ..., and a set of ninety pieces of drawing pixels, respectively.

According to the dot matrixes 1651 of the model as shown in Fig. 41, only the sets of drawing pixels are covered with drawing pixels. On the other hand, according to the dot matrix (the dot matrix 1650) used in the halftone dot conversion processing of the present embodiment, which are created from this model, as will be described hereinafter, there are scattered noise use drawing pixels, which are drawing pixels for noise, on the outside of a set of drawing pixels. In order to create a dot matrix, it is necessary to use the dot matrixes 1651 of the model and a noise use matrix representative of an arrangement structure for noise use drawing pixels. As the noise use matrix, there is applied an FM dot matrix, which applies a so-called FM halftone dot technology, which is well known as technology for outputting a continuous tone of image by ink jet printers and the like. The FM halftone dot technology is concerned with a technology in which drawing pixels are formed so that mutual interval of the drawing pixels broadens as much as possible, at density according to the tone value. In order to distinguish the FM halftone dot from the conventional halftone dot as exemplarily shown in Fig. 41, it may happen that the conventional halftone dot is expressed by AM halftone dot hereinafter.

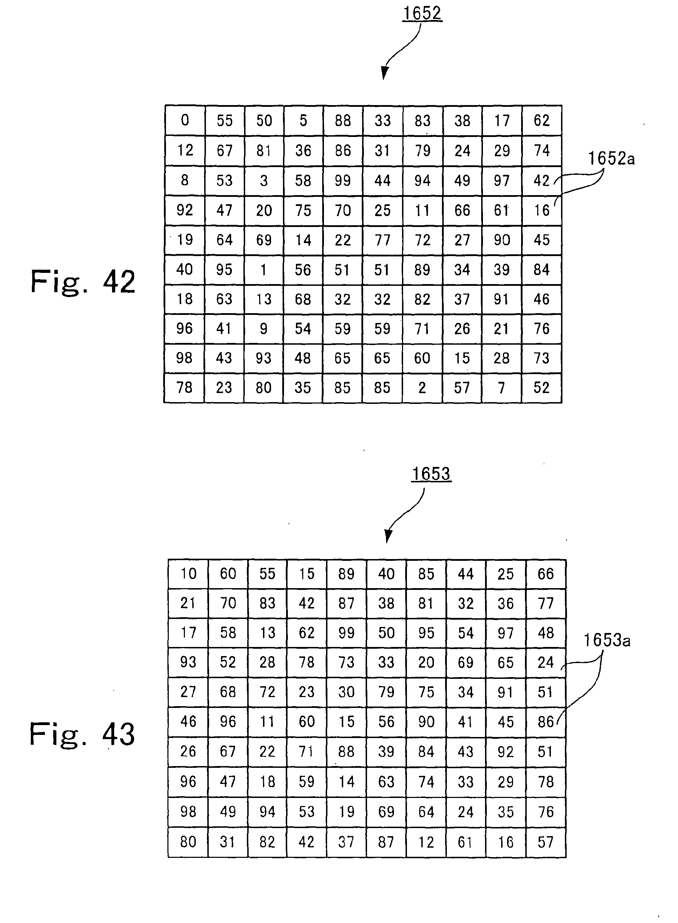

Fig. 42 is an illustration of an example of an FM dot matrix defining FM halftone dots.

An FM dot matrix 1652 shown in Fig. 42 is also one in which thresholds 1652a to be compared with dot% values are arranged in form of 10 x 10, in a similar fashion to that of the dot matrix 1651 of the model as shown in Fig. 40. The FM dot matrix 1652 defines the FM halftone dots in the state that the drawing pixels are scattered.

Fig. 43 is an illustration showing an improved FM dot matrix of the FM dot matrix shown in Fig. 42.

While the FM dot matrix 1652 shown in Fig. 42 is constructed of the thresholds 1652a from the value "0" to the value "99", an FM dot matrix 1653 shown in Fig. 43 is constructed of the thresholds 1653a from the value "10" to the value "99" (partially overlapped).

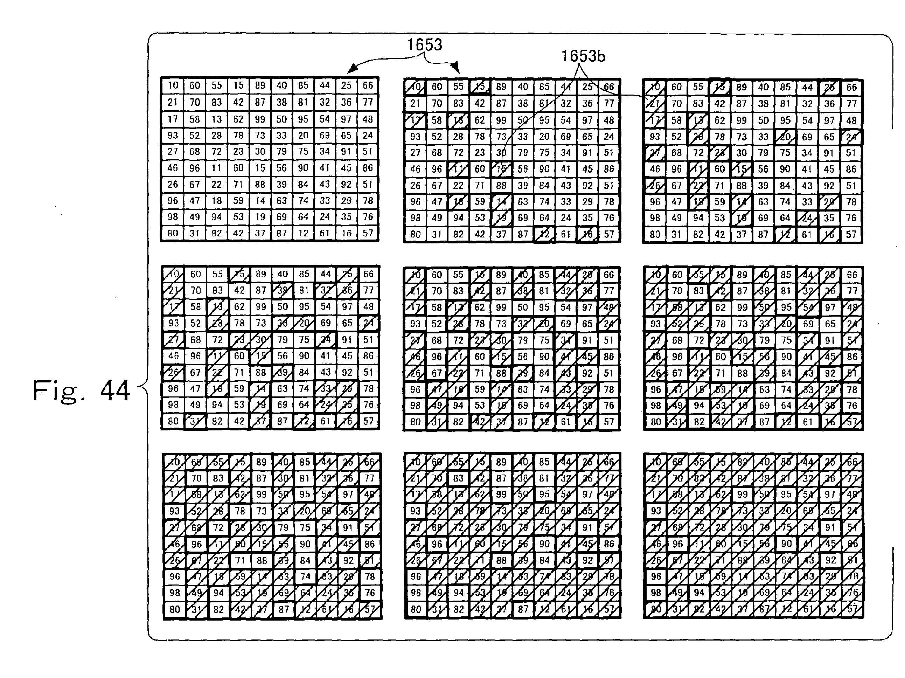

Fig. 44 is a view useful for understanding a state that the pixels of the FM halftone dots defined by the FM dot matrix shown in Fig. 43 are increased as dot% values are increased.

Fig. 44 shows nine FM dot matrixes 1653, each of which is also shown in Fig. 43. The nine FM dot matrixes 1653 are associated with dot% values of 10%, 20%, ..., 90%, respectively. Areas 1653b depicted with slanting lines in the FM dot matrixes 1653 each represents a position of drawing pixels to be applied.

As shown in Fig. 44, the areas 1653b to which the drawing pixels to be applied are absent for the dot% value of 10%, and are increased in the state of scattering as the dot% value is increased. A range of tone values, wherein drawing pixels from 0% to 10% are not applied, represents a highlighting area which is light in density (hereinafter, the range of tone values, wherein drawing pixels are not applied, is referred to as a highlighting range). The highlighting range corresponds to an example of the predetermined range referred to in the present invention. Hereinafter, the FM dot matrixes 1653 are used as the noise use matrix, so that the noise use drawing pixels are scattered out of the halftone dots in accordance with the FM dot matrixes 1653. Here, in the FM dot matrixes 1653, the absence of scattering of drawing pixels in the highlighting range means that the noise use drawing pixels are not applied in the event that the dot% value represents the light color at the highlighting side.

The FM dot matrix 1653 as shown in Fig. 43 is superposed with the dot matrix 1651 of a model as shown in Fig. 40, so that AM and FM synthetic processing and dot matrix correcting processing, which will be explained hereinafter, are performed to obtain a dot matrix used in a halftone dot conversion processing.

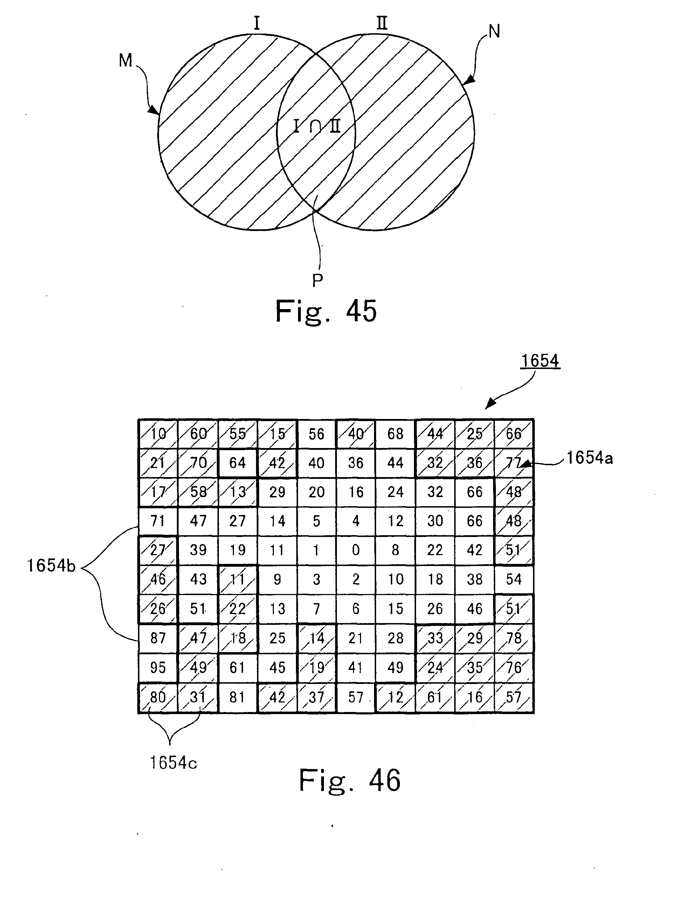

Fig. 45 is a view useful for understanding algorithm for an AM and FM synthetic processing.

A first set M represents, of the thresholds 1651a constituting the dot matrix 1651 of a model as shown in Fig. 40, the thresholds 1651a in the areas 1651b shown in Fig. 41. A second set N represents, of the thresholds 1653a constituting the FM dot matrix 1653 as shown in Fig. 43, the thresholds 1653a in the areas 1653b shown in Fig. 44. The AM and FM synthetic processing corresponds to the determination of union or sum L of the first set M and the second set N. That is, there is created a dot matrix adopting smaller thresholds between the thresholds 1653a constituting the FM dot matrix 1653 and the thresholds 1651a constituting the dot matrix 1651 of a model.

Fig. 46 is a view showing results of the AM and FM synthetic processing.

Fig. 46 shows dot matrix 1654, which is obtained by the AM and FM synthetic processing from the dot matrix 1651 of a model as shown in Fig. 40 and the FM dot matrix 1653 shown in Fig. 43. Of thresholds 1654a shown in Fig. 46, thresholds 1654c depicted with slanting lines are thresholds obtained from the FM dot matrix 1653, and other thresholds 1654b are thresholds obtained from the dot matrix 1651 of a model. A set of the thresholds 1654b obtained from the dot matrix 1651 of a model defines halftone dots, and corresponds to an example of the first threshold group in the dot matrix of present invention. A set of the thresholds 1654c obtained from the FM dot matrix 1653 defines noise use halftone dots, and corresponds to an example of the second threshold group in the dot matrix of present invention.

The thresholds 1654a constituting the dot matrix 1654 shown in Fig. 46 are slightly irregular in which thresholds 1655a are arranged with by far the best of values and overlapping.

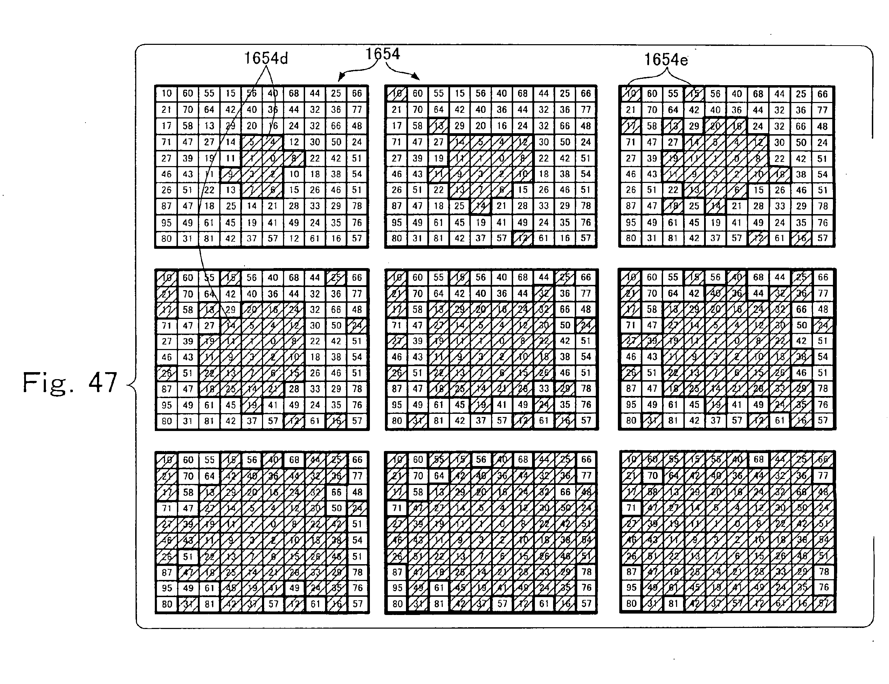

Fig. 47 is an illustration showing drawing pixels formed in accordance with the dot matrix shown in Fig. 46.

Fig. 47 shows nine dot matrixes 1654, each of which is also shown in Fig. 46. In the nine dot matrixes 1654, the upper left represents the state of ten drawing pixels, the upper center twenty drawing pixels, the upper right thirty drawing pixels, the middle left forty drawing pixels, ..., the lower right ninety drawing pixels.

Areas 1654d depicted with slanting lines in the dot matrixes 1654 each represents a position of drawing pixels to be applied. Up to ten drawing pixels is the same geometry as that of the AM halftone dots. When the number of drawing pixels is increased, the area 1654d forms a set of drawing pixels in a block in its entirety in the vicinity of the center. And outside the set of drawing pixels of the block, noise use drawing pixels 1654e are scattered. The number of the noise use drawing pixels 1654e is increased or decreased in accordance with the growth of the set of drawing pixels.

Incidentally, in the dot matrixes 1654 shown in Figs. 46 and 47, the thresholds 1654a are irregular, and thus it is difficult to use the dot matrixes 655 for the halftone dot conversion processing per se. For this reason, according to the present embodiment, the thresholds 1654a constituting the dot matrixes 1654 are allocated over again to the thresholds from the value "0" to the value "99".

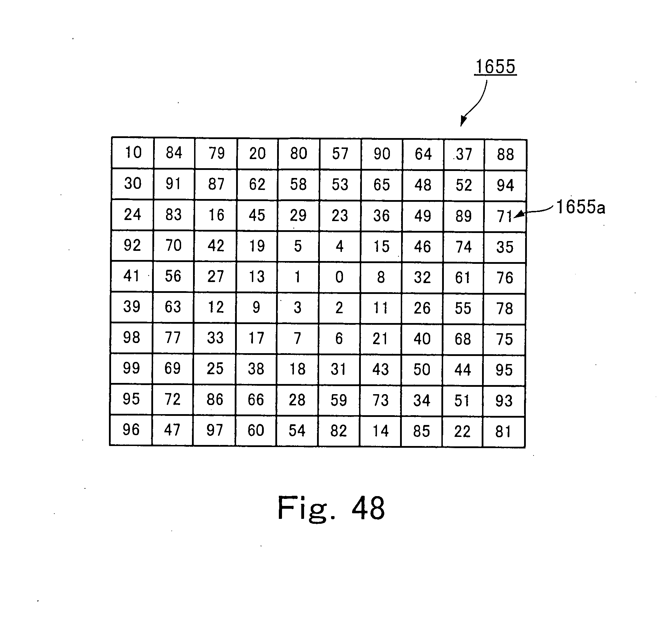

Fig. 48 is an illustration showing a dot matrix in which thresholds are allocated over again.

A dot matrix 1655 shown in Fig. 48 is one in which the thresholds 1654a constituting the dot matrixes 1654 shown in Fig. 46 are allocated over again to the thresholds 1655a from the value "0" to the value "99" in the order of the smaller value. The use of the dot matrix 1655 shown in Fig. 48 causes the drawing pixels to increase with the pattern shown in Fig. 47 to dot% values of 10%, 20%, ..., 90%. According to the present invention, the dot matrix 1655, in which the thresholds are allocated over again, is used as the dot matrix 1650 shown in Fig. 39. When the dot matrix 1655 is used, the dot% values may take values within the highlighting range. In the event that a color represented by the dot% value is concerned with a light color at the highlight side, no noise use drawing pixels is scattered. Thus, the use of the dot matrix 1655 makes it possible to avoid graininess at the highlight side. Performing the halftone dot conversion processing using the dot matrix makes it easy to perform an arithmetic operation for formation of the halftone dots, so that the associated apparatuses and programs are simplified in their structure. The dot matrix 1655 corresponds to an embodiment of a dot matrix of the present invention.

The above-mentioned description is concerned with an explanation in which one color of CMYK four colors is taken into consideration, and it is acceptable that the above-mentioned halftone dot conversion processing is applied to dot% data for each of CMYK four colors. However, according to the halftone dot conversion section of the present embodiment, as will be explained hereinafter, the halftone dot conversion processing is varied in accordance with colors.

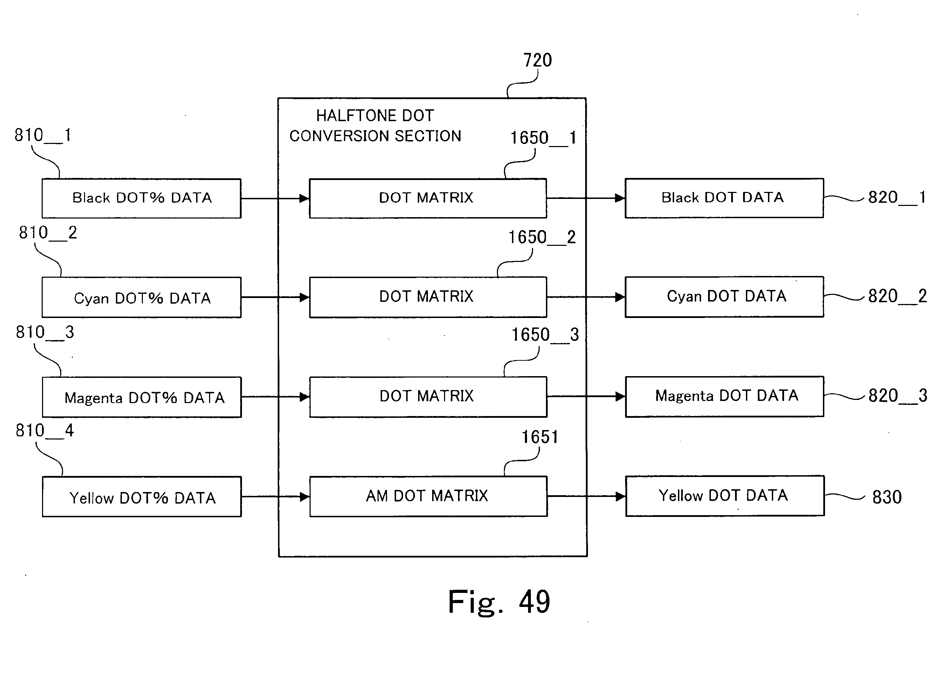

Fig. 49 is an explanatory view useful for understanding how the halftone dot conversion is varied in accordance with colors.

A halftone dot conversion section 720 receives dot% data 810_1, 810_2, 810_3, and 810_4 for CMYK four colors to apply the halftone dot conversion processing to the respective dot% data. According to the halftone dot conversion processing for dot% data 810_1, 810_2, and 810_3 for CMK three colors, of the CMYK four colors, there are used dot matrixes 1650_1, 1650_2, and 1650_3, with which noise use drawing pixels are scattered outside a set of drawing pixels, similar to dot matrixes 1655 shown in Fig. 48. On the other hand, according to the halftone dot conversion processing for dot% data 810_4 for Y color, of the CMYK four colors, there is used dot matrix 1651 defining the AM halftone dot, as shown in Fig. 40.

As the halftone dot conversion processing is varied in accordance with colors by the halftone dot conversion section 720, halftone dot data 820_1, 820_2, and 820_3 for CMK three colors, which are representative of images constituted of halftone dots and noise use drawing pixels scattered out of the halftone dots, can be obtained, and halftone dot data 830 for Y color, which is representative of an image constituted of AM halftone dots, can be obtained.

As compared with density of CMK three colors, density of Y color is lower, and thus the interference between the periodical noises occurred on ink jet printers and the like and the periodical structure of halftone dots is hard to occur on Y color. And it is possible for Y color to use AM halftone dots to be essentially reproduced as it is. Accordingly, it is preferable that the above-mentioned use of different halftone dot conversion processing according to colors is performed.

Next, there will be explained a modification as to how the halftone dot conversion processing is varied in accordance with colors.

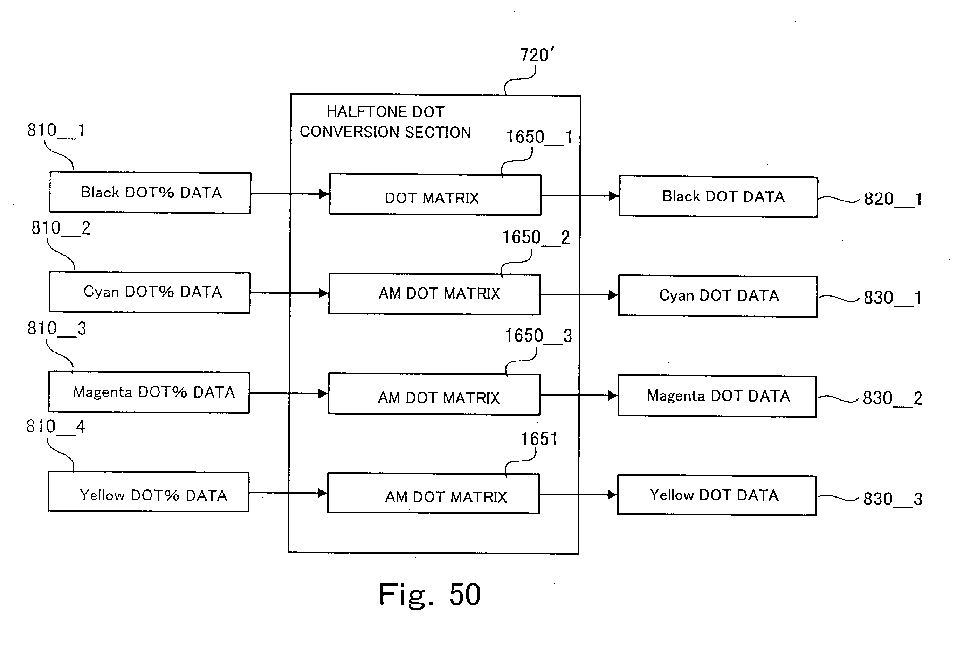

Fig. 50 is an explanatory view useful for understanding a modification as to how the halftone dot conversion is varied in accordance with colors.

Here, it is assumed that the halftone dot conversion section 720 shown in Fig. 49 is replaced by a halftone dot conversion section 720' for performing another use of different halftone dot conversion processing according to colors. The halftone dot conversion section 720' also receives dot% data 810_1, 810_2, 810_3, and 810_4 for CMYK four colors to apply the halftone dot conversion processing to the respective dot% data. According to the halftone dot conversion processing for dot% data 810_1 for K color, of the CMYK four colors, there is used dot matrixes 1650 in which noise use drawing pixels are scattered outside a set of drawing pixels, similar to dot matrixes 1655 shown in Fig. 48. On the other hand, according to the halftone dot conversion processing for dot% data 810_2, 810_3, and 810_4 for CMY three colors, of the CMYK four colors, there are used dot matrixes 1651_1, 1651_2, and 1651_3, which are similar to dot matrixes 1651 defining the AM halftone dot, as shown in Fig. 40.

As the halftone dot conversion processing is varied in accordance with colors by the halftone dot conversion section 720', halftone dot data 820_1 for K color, which is representative of an image constituted of halftone dots in which noise use drawing pixels are scattered, can be obtained, and halftone dot data 830_1, 830_2, and 830_3 for CMY three colors, which are representative of images constituted of AM halftone dots, can be obtained.

As compared with density of CMY three colors, density of K color is lower, and thus the interference between the periodical noises occurred on ink jet printers and the like and the structure of halftone dots occurs extremely on K color. Thus, it is preferable that the above-mentioned use of different halftone dot conversion processing according to colors is performed in such a manner that the halftone dots, in which noise use drawing pixels are scattered, are used for only the halftone dot conversion processing for K color, of the CMYK four colors, and the AM halftone dots to be essentially reproduced are used for halftone dot conversion processing for CMY three colors.

Hereinafter, there will be explained a seventh embodiment different from the above-mentioned sixth embodiment.

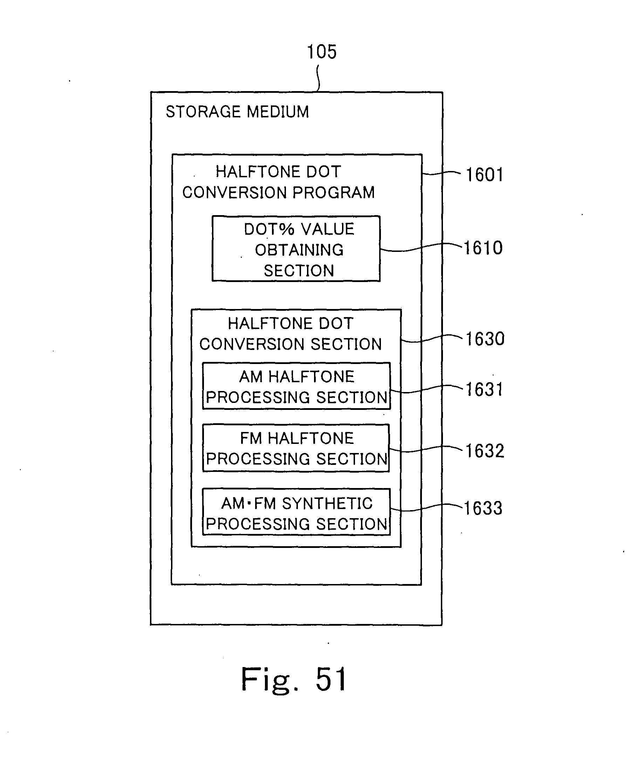

Fig. 51 is a view showing a halftone dot conversion program stored in a seventh embodiment of a halftone dot conversion program storage medium of the present invention.

The CD-ROM 105 stores therein a halftone dot conversion program 1601.

The halftone dot conversion program 1601 shown in Fig. 51 has, instead of the halftone dot conversion section 1620 of the halftone dot conversion program 1600 shown in Fig. 38, a halftone dot conversion section 1630 comprising an AM halftone processing section 1631, an FM halftone processing section 1632, and an AM and FM synthetic processing section 1633. The AM halftone processing section 1631, the FM halftone processing section 1632, and the AM and FM synthetic processing section 1633 correspond to examples of the set geometry determination section, the scattering position determination section, and the synthesizing section referred to in the present invention, respectively.

When the halftone dot conversion program 1601 is executed in the computer system 100 shown in Fig. 1, the computer system 100 serves as the halftone dot conversion apparatus according to the seventh embodiment of the preset invention.

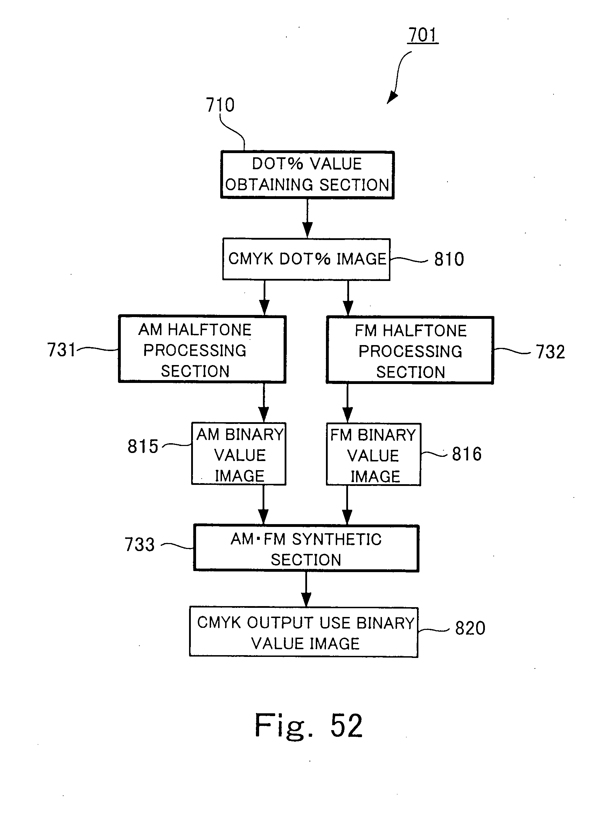

Fig. 52 is a functional block diagram of the seventh embodiment of a halftone dot conversion apparatus of the present invention.

A halftone dot conversion apparatus 701 shown in Fig. 52 comprises a dot% value obtaining section 710, an AM halftone processing section 731, an FM halftone processing section 732, and an AM and FM synthetic processing section 733. The dot% value obtaining section 710, the AM halftone processing section 731, the FM halftone processing section 732, and the AM and FM synthetic processing section 733 correspond to the dot% value obtaining section 1610, the AM halftone processing section 1631, the FM halftone processing section 1632, and the AM and FM synthetic processing section 1633, as shown in Fig. 51, respectively. The structural elements of the halftone dot conversion apparatus 701 are constructed of the combination of hardware of the computer system 100 shown in Fig. 1 and the OS and the application program which are executed in the personal computer 100. On the other hand, the structural elements of the halftone dot conversion program 1601 of Fig. 51 are constructed of only the application program.

Hereinafter, there will be explained the structural elements of the halftone dot conversion apparatus 701 shown in Fig. 52 and the structural elements of the halftone dot conversion program 1601 shown in Fig. 51 as well.

The dot% value obtaining section 710, which constitutes the halftone dot conversion apparatus 701 shown in Fig. 52, obtains dot% data 810 via the communication network 300 shown in Fig. 1 and transmits the thus obtained dot% data 810 to both the AM halftone processing section 731 and the FM halftone processing section 732.

Upon receipt of the dot% data 810, the AM halftone processing section 731 converts the dot% data 810 into AM binary value image data 815 representative of an image consisting of AM halftone dots using a dot matrix of AM halftone dots, such as the dot matrix 651 shown in Fig. 40.

Upon receipt of the dot% data 810, the FM halftone processing section 732 converts the dot% data 810 into FM binary value image data 816 representative of an image consisting of FM halftone dots using a dot matrix of FM halftone dots in which drawing pixels are not scattered within the highlighting range, such as the FM dot matrix 1653 shown in Fig. 43.

The AM and FM synthetic processing section 733 adds noise use drawing pixels to drawing pixels represented by the AM binary value image data 815 in accordance with the FM binary value image data 816. The algorithm of the processing in the FM binary value image data 816 is the same as the algorithm used in synthesis of the dot matrix in the sixth embodiment. In this manner, the AM and FM synthetic processing section 733 adds the noise use drawing pixels, there are created and outputted output use binary value image data 820 in which in a case where it is within the highlighting range, halftone dots are represented, and in a case where it is outside the highlighting range, an image wherein noise use drawing pixels are scattered outside halftone dots is represented.

As described above, according to the seventh embodiment of the present invention, the synthesis of geometry of the AM halftone dots and the positions of the noise use drawing pixels scattered outside the AM halftone dots is executed in the halftone dot conversion section without creating the dot matrixes as in the sixth embodiment.

Here, there will be shown examples of the AM binary value image data 815, the FM binary value image data 816, and the output use binary value image data 820 which is the synthesis of the AM binary value image data 815 and the FM binary value image data 816.

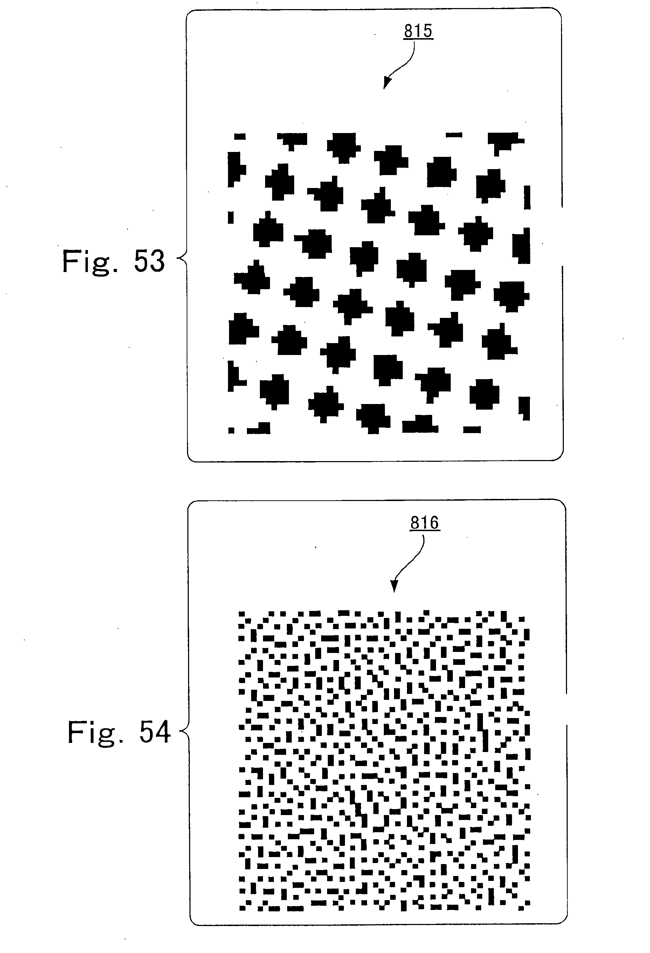

Fig. 53 is an illustration showing an example of AM binary value image data. The AM binary value image data 815 represents an image constructed of AM halftone dots periodically arranged.

Fig. 54 is an illustration showing an example of FM binary value image data. The FM binary value image data 816 represents an image of FM halftone dots irregularly arranged.

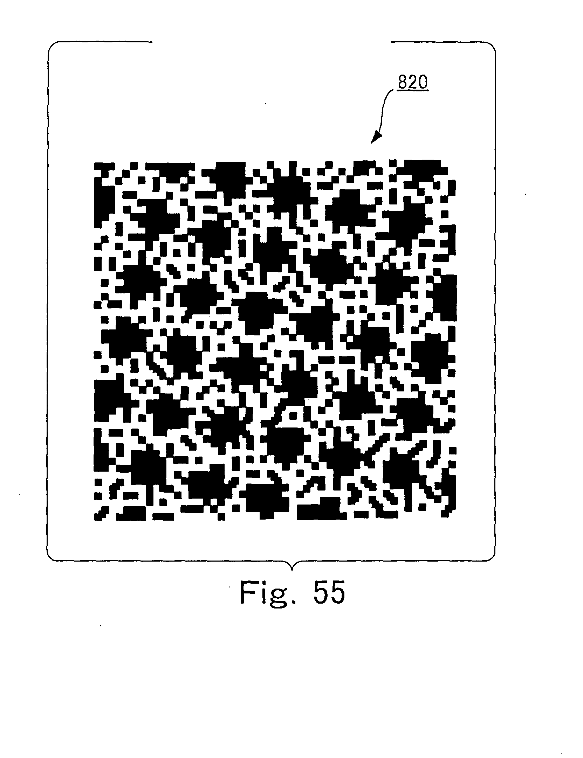

Fig. 55 is an illustration showing an example of output use binary value image data. The output use binary value image data 820 represents an image in which noise use drawing pixels are scattered around halftone dots. The output use binary value image data 820 represents an output use binary value image data outside the highlighting range. In case inside the highlighting range, the output use binary value image data represents AM halftone dots as shown in Fig. 53. An ink jet printer or the like actually outputs an image in accordance with the output use binary value image data 820.

In this manner, it is acceptable that the halftone dot conversion processing is performed without creation of the dot matrix corresponding to the dot matrix 1650 of Fig. 39.

With the above-mentioned description, the explanation of the sixth and seventh embodiments will be terminated.

Incidentally, according to the above-mentioned explanation, there are disclosed the embodiments of the halftone dot conversion apparatus connected to a large scale ink jet printer. However, a halftone dot conversion apparatus of the present invention is not restricted to one connected to an ink jet printer. It is acceptable that a halftone dot conversion apparatus of the present invention is an apparatus independent of a printer, or alternatively one to be connected to a printer other than the ink jet printer.

According to the above-mentioned explanation, there is disclosed an example of a halftone dot conversion section in which noise use drawing pixels are scattered outside halftone dots in accordance with the FM halftone dots in which the drawing pixels are increased or decreased in accordance with tone values. However, it is acceptable that the halftone dot conversion section referred to in the present invention is one in which noise use drawing pixels, which are fixed in number, regardless of the tone value, are scattered outside halftone dots.

Further, according to the above-mentioned explanations of the embodiments, as the embodiments of a dot matrix of the present invention, there are disclosed the embodiments of the dot matrix defining geometry of one halftone dot. However, it is acceptable that a dot matrix of the present invention is a dot matrix defining geometry of a halftone dot group consisting of a plurality of halftone dots.

Next, there will be explained an eighth embodiment of the present invention.

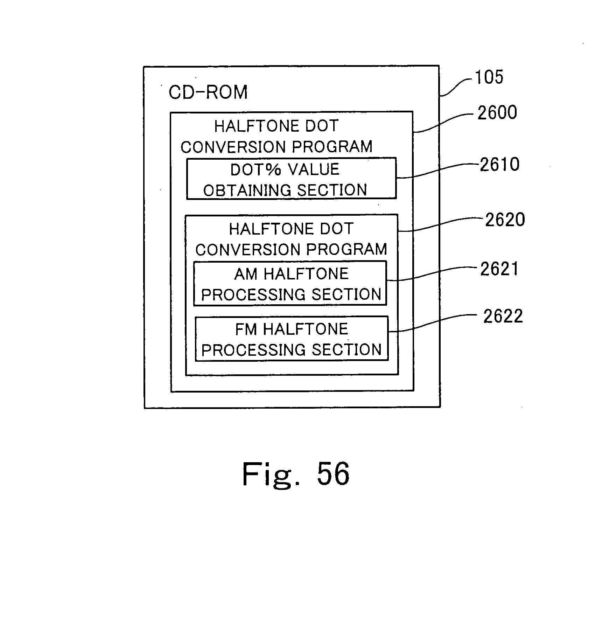

Fig. 56 is a view showing a halftone dot conversion program according to an eighth embodiment of the present invention.

According to the eighth embodiment, the CD-ROM 105 stores therein a halftone dot conversion program 2600. The CD-ROM 105 is simply an example of a storage medium for storing the halftone dot conversion program 2600. It is acceptable that a halftone dot conversion program of the present invention are stored in another storage medium such as a hard disk (HD), a flexible disk (FD), a magneto-optical (MO) disk and a DVD.

The halftone dot conversion program 2600 shown in Fig. 56 causes the computer system 100 shown in Fig. 1 to serve as a halftone dot conversion apparatus for creating halftone dot data from dot% data, when the halftone dot conversion program 2600 is executed by the computer system 100. The halftone dot conversion program 2600 comprises a dot% value obtaining section 2610 and a halftone dot conversion section 2620. The halftone dot conversion section 2620 comprises an AM halftone processing section 2621 and a FM halftone processing section 2622. The dot% value obtaining section 2610 and the halftone dot conversion section 2620 correspond to examples of the tone value obtaining section and the halftone dot conversion section in the halftone dot conversion program related to the present invention, respectively.

Functions of the elements of the halftone dot conversion program 2600 will be described later.

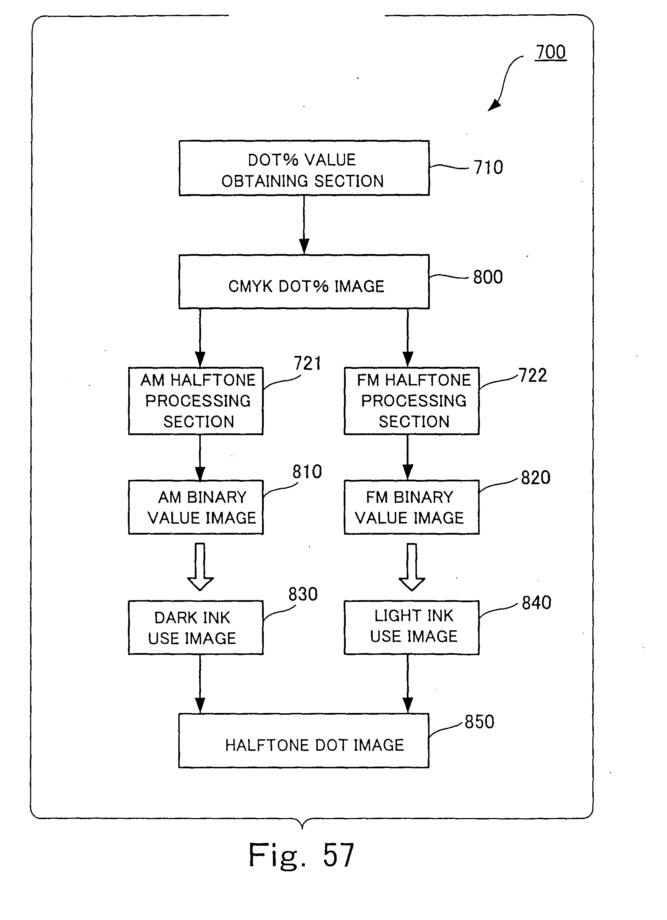

Fig. 57 is a functional block diagram of a halftone dot conversion apparatus according to the eighth embodiment of the present invention.

A halftone dot conversion apparatus 700 is implemented in such a manner that the halftone dot conversion program 2600 of Fig. 56 is installed into the computer system 100 shown in Fig. 1 and is executed. The halftone dot conversion apparatus 700 comprises a dot% value obtaining section 710, an AM halftone processing section 721 and a FM halftone processing section 722. The dot% value obtaining section 710, the AM halftone processing section 721 and the FM halftone processing section 722 correspond to the dot% value obtaining section 2610, the AM halftone processing section 2621 and the FM halftone processing section 2622, respectively, which constitute the halftone dot conversion program 2600 of Fig. 56. The structural elements of the halftone dot conversion apparatus 700 are constructed of the combination of hardware of the computer system 100 shown in Fig. 1 and the OS and the application program which are executed in the personal computer 100. On the other hand, the structural elements of the halftone dot conversion program 1600 of Fig. 56 are constructed of only the application program.

The dot% value obtaining section 710 corresponds to an example of the tone value obtaining section in the halftone dot conversion apparatus of the present invention. A combination of the AM halftone processing section 721 and the FM halftone processing section 722 corresponds to an example of the halftone dot conversion section in the halftone dot conversion apparatus of the present invention.

Hereinafter, there will be explained the structural elements of the halftone dot conversion apparatus 700 shown in Fig. 57 and the structural elements of the halftone dot conversion program 2600 shown in Fig. 56 as well.

The dot% value obtaining section 710, which constitutes the halftone dot conversion apparatus 700 shown in Fig. 57, obtains dot% data 800 via the communication network 300 shown in Fig. 1. The AM halftone processing section 721 and the FM halftone processing section 722 apply halftone dot conversion processing to the dot% data 800 obtained by the dot% value obtaining section 710, so that halftone dot data is created. A halftone dot image represented by the halftone dot data thus created comprises a so-called image portion of halftone dots having a set geometry, and a fragment image portion scattered outside of the halftone dots. The AM halftone processing section 721 creates halftone dot data (AM binary value data 810 in Fig. 57) representative of the image portion of halftone dots, of the halftone dot data. The FM halftone processing section 722 creates halftone dot data (FM binary value data 820 in Fig. 57) representative of the fragment image portion scattered outside of the halftone dots, of the halftone dot data. Those types of halftone dot data thus created are outputted to an output device such as the large scale ink jet printer 200 shown in Fig. 1. The large scale ink jet printer 200 creates a halftone dot image in which the image portion of halftone dots is formed with dark inks of CMYK, and the fragment image portion scattered outside of the halftone dots is formed with light inks of LC, LM, LY, G having lighter colors than CMYK colors.

The halftone dot conversion apparatus 700 is basically constructed with the above-mentioned structure.

Hereinafter, there will be explained in detail the halftone dot conversion processing by the AM halftone processing section 721 and the FM halftone processing section 722.

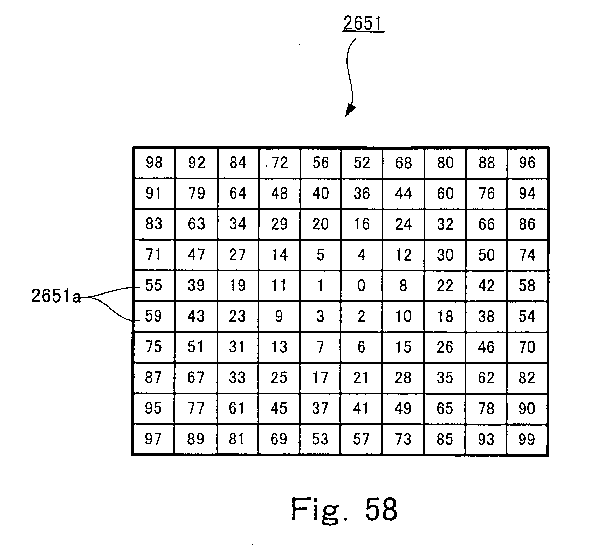

Fig. 58 is a view showing an example of a dot matrix, which is used in the AM halftone processing section.

A dot matrix 2651 as shown in Fig. 58 defines geometry of a halftone dot of which a size depends on the dot% value. The dot matrix 2651 shown in Fig. 58 is one in which thresholds 2651a to be compared with dot% values are arranged in form of 10 x 10. The thresholds 2651a correspond to output points in an output device (here the large scale ink jet printer 200 shown in Fig. 1) for forming an image by a set of a large number of output points, such as ink dots, on a one-for-one basis.

The AM halftone processing section 721, as shown in Fig. 57, determines one dot% value, which is to be applied to the dot matrix 2651 in its entirety, in accordance with the dot% value represented by the halftone dot data, so that the dot% value thus determined is compared with the values of the respective thresholds 2651a. And as a result, in the event that the dot% value is larger than the value of the threshold 2651a, the position associated with the threshold 2651a is determined as an output point to which ink is ejected by an output device. The output point to which ink is ejected corresponds to an example of the drawing pixel referred to in the present invention, and thus the output point is referred to as the drawing pixel hereinafter. Halftone dots are formed by a set of the drawing pixels. The dot matrix 1651 shown in Fig. 40 represents a set of drawing pixels each increasing a magnitude as the dot% value increases, and defines the conventional typical halftone dots.

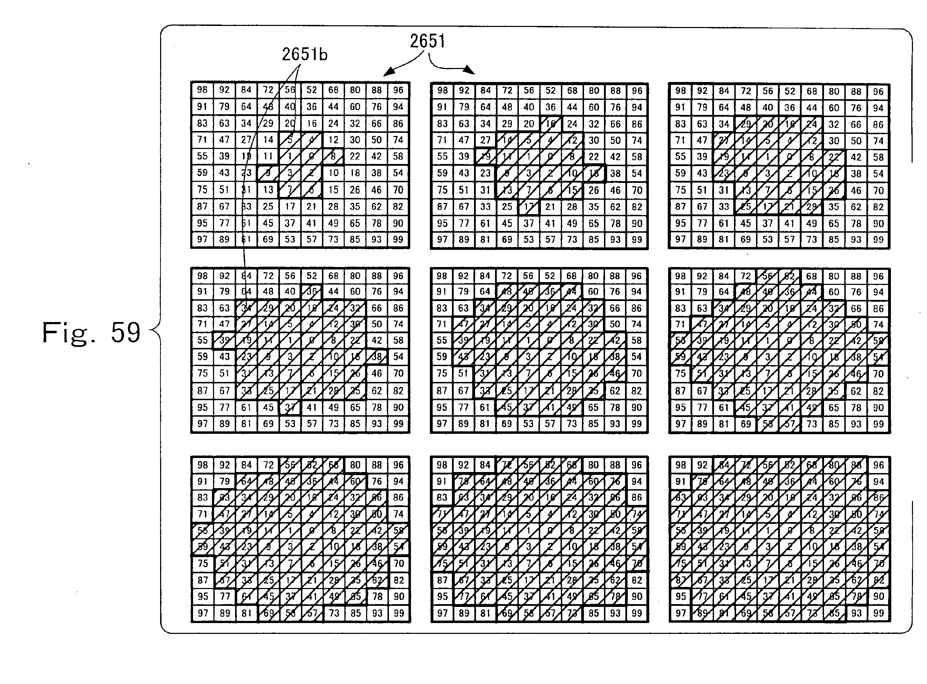

Fig. 59 is a view useful for understanding a state that a set of pixels grows as dot% values are increased.

Fig. 59 shows nine dot matrixes 2651 also shown in Fig. 58. In the dot matrixes 2651, the upper left is associated with the dot% value of 10%, the upper center the dot% value of 20%, the upper right the dot% value of 30%, the middle left the dot% value of 40%, ..., and the lower right the dot% value of 90%. Areas 2651b depicted with slanting lines in the dot matrixes 2651 each represents a set of drawing pixels, that is, the area 2651b represents a geometry of a halftone dot.

The area 2651b associated with the dot% value of 10% indicates a set of ten pieces of drawing pixels. Likely, the areas 2651b associated with the dot% values of 20%, ..., 90% indicate a set of twenty pieces of drawing pixels, ..., and a set of ninety pieces of drawing pixels, respectively. Of the drawing pixels, particularly drawing pixels forming halftone dot geometry are referred to as halftone dot use drawing pixels. As will be described later, the halftone dot use drawing pixel is formed with dark inks for CMYK colors in an output device. The halftone dot use drawing pixel corresponds to an example of the first drawing pixel.

The AM halftone processing section 721, as shown in Fig. 57, creates the AM binary value data 810 representative of the halftone dots formed by a set of the halftone dot use drawing pixels, in accordance with the processing as mentioned above.

According to the dot matrixes 2651 as shown in Fig. 59, only the halftone dots formed by areas 2651b are covered with drawing pixels. The FM halftone processing section 722 scatters noise use drawing pixels, which are drawing pixels for noise, about the outside of halftone dots. In order to scatter the noise use drawing pixels, it is necessary to use a noise use matrix representative of an arrangement structure for noise use drawing pixels. As the noise use matrix, there is applied an FM dot matrix, which applies a so-called FM halftone dot technology, which is well known as technology for outputting a continuous tone of image by ink jet printers and the like. The FM halftone dot technology is concerned with a technology in which drawing pixels are formed so that mutual interval of the drawing pixels broadens as much as possible, at density according to the tone value. In order to distinguish the FM halftone dot from the conventional halftone dot as exemplarily shown in Fig. 41, it may happen that the conventional halftone dot is expressed by AM halftone dot hereinafter.

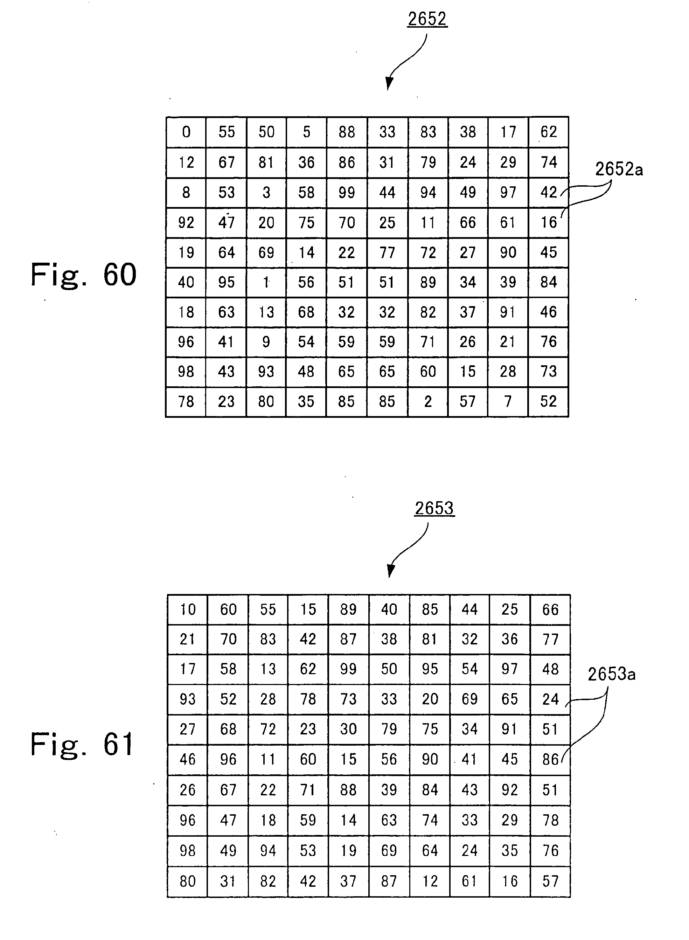

Fig. 60 is an illustration of an example of a dot matrix defining FM halftone dots.

An FM dot matrix 2652 shown in Fig. 60 is also one in which thresholds 2652a to be compared with dot% values are arranged in form of 10 x 10, in a similar fashion to that of the dot matrix 2651 of the model as shown in Fig. 58. The FM dot matrix 2652 defines the FM halftone dots in the state that the drawing pixels are scattered.

Fig. 61 is an illustration showing an improved FM dot matrix of the FM dot matrix shown in Fig. 60.

While the FM dot matrix 2652 shown in Fig. 60 is constructed of the thresholds 2652a from the value "0" to the value "99", an FM dot matrix 2653 shown in Fig. 43 is constructed of the thresholds 2653a from the value "10" to the value "99" (partially overlapped).

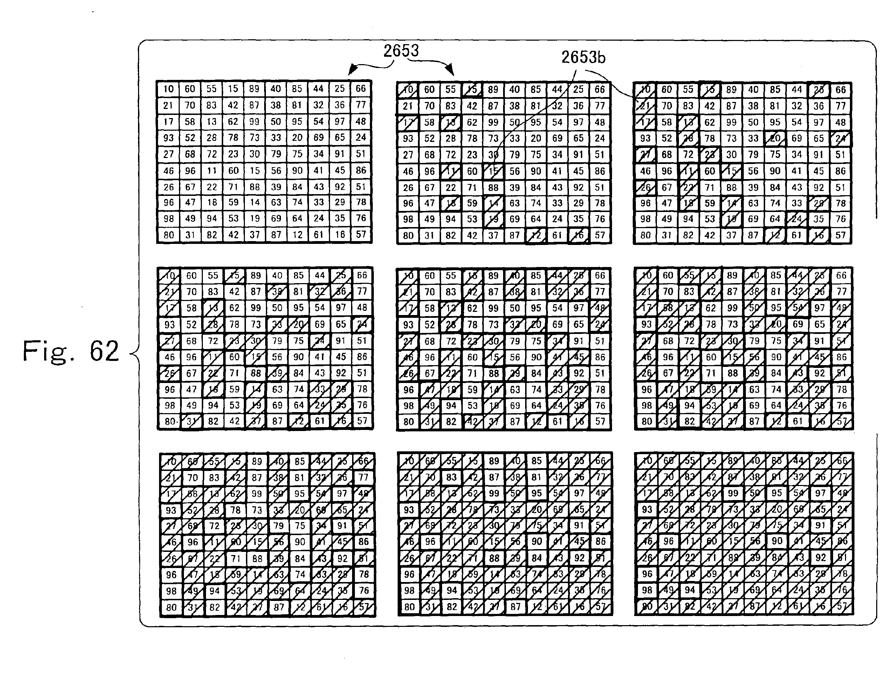

Fig. 62 is a view useful for understanding a state that the pixels of the FM halftone dots defined by the dot matrix shown in Fig. 61 are increased as dot% values are increased.

Fig. 62 shows nine FM dot matrixes 2653, each of which is also shown in Fig. 60. The nine FM dot matrixes 2653 are associated with dot% values of 10%, 20%, ..., 90%, respectively. Areas 2653b depicted with slanting lines in the FM dot matrixes 2653 each represents a position of drawing pixels to be applied.

As shown in Fig. 62, the areas 2653b to which the drawing pixels to be applied are absent for the dot% value of 10%, and are increased in the state of scattering as the dot% value is increased. A range of tone values, wherein drawing pixels from 0% to 10% are not applied, represents a highlighting area which is light in density (hereinafter, the range of tone values, wherein drawing pixels are not applied, is referred to as a highlighting range). The highlighting range corresponds to an example of the predetermined range referred to in the present invention. Hereinafter, the FM dot matrixes 2653 are used as the noise use matrix, so that the noise use drawing pixels are scattered out of the AM halftone dots in accordance with the FM dot matrixes 2653. As will be described later, noise use drawing pixels are formed with light inks of LC, LM, LY, G having lighter colors than CMYK colors. The noise use drawing pixel corresponds to an example of the second drawing pixel. Here, in the FM dot matrixes 2653, the absence of scattering of drawing pixels in the highlighting range means that the noise use drawing pixels are not applied in the event that the dot% value represents the light color at the highlighting side.

The FM halftone processing section 722 shown in Fig. 57 performs the same processing as in creation of the AM binary value data 810 by the AM halftone processing section 721, using the FM dot matrixes 2653, so that FM binary value data 820 representative of FM halftone dots formed by the noise use drawing pixels is created. The FM binary value data 820 is transmitted to an output device such as the large scale ink jet printer 200 shown in Fig. 1.

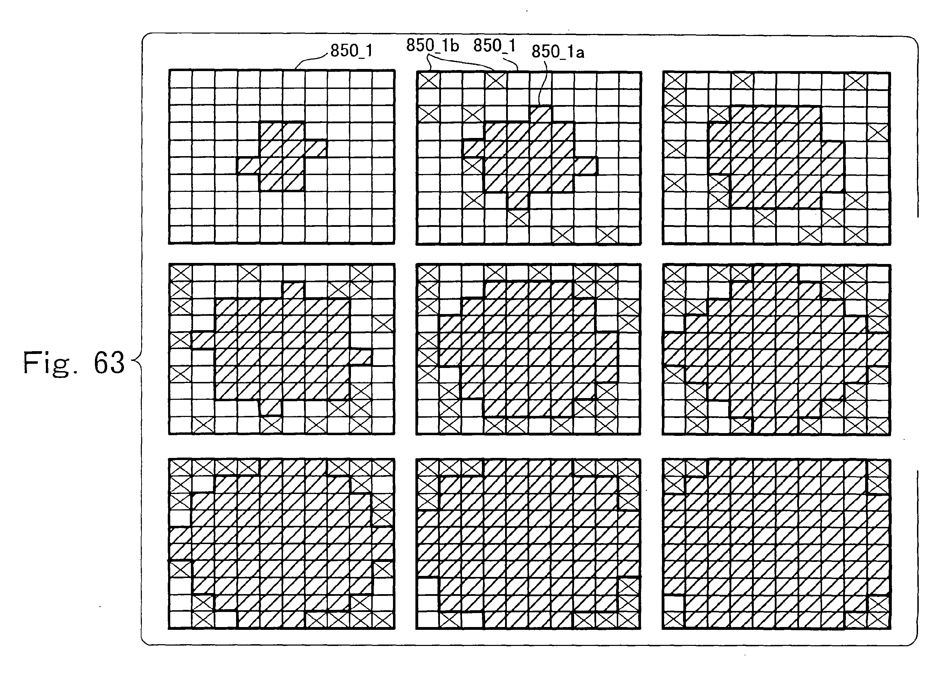

Fig. 63 is a view showing a result in which AM halftone dots represented by AM binary value data and FM halftone dots represented by FM binary value data are outputted.

Fig. 63 shows nine pieces of a pixel of halftone dot portion 850_1 wherein there are outputted AM halftone dots represented by the areas 2651b of the dot matrixes 2651 in Fig. 59, which are associated with dot% values of 10%, 20%, ..., 90%, respectively, and FM halftone dots represented by the areas 2653b of the dot matrixes 2653 in Fig. 62.

Image portions 850_1a depicted with slanting lines in the halftone dot portions 850_1 are associated with the areas 2651b of the matrixes 2651 shown in Fig. 59, and form AM halftone dots by halftone dot use drawing pixels. Image portions 850_1b depicted with symbol marks "x" in the halftone dot portions 850_1 are associated with the areas 2653b of the matrixes 2653 shown in Fig. 62, and form FM halftone dots by noise use drawing pixels.

When the large scale ink jet printer 200 in Fig. 1 receives the AM binary value data 810 from the AM halftone processing section 721 shown in Fig. 57 and the FM binary value data 820 from the FM halftone processing section 722, the large scale ink jet printer 200 outputs the image portions 850_1a of the halftone dot portions 850_1 in Fig. 63 using dark inks for CMYK colors, and forms dark ink use image 830. Further, the large scale ink jet printer 200 outputs the image portions 850_1b of the halftone dot portions 850_1 in Fig. 63 using light inks for LC, LM, LY, G colors corresponding to CMYK colors, respectively, and forms light ink use image 840, so that the large scale ink jet printer 200 creates a halftone dot image 850 in which the dark ink use image 830 is superposed on the light ink use image 840. Therefore, according to the halftone dot conversion apparatus 700 of the present embodiment, even if periodical noises occur at the time of output, it is possible to suppress interference between the periodical noises and the periodical structure of halftone dots. Further, formation of noise use drawing pixels with light inks light in color makes it possible to avoid graininess in its entirety.

In the halftone dot portions 850_1 in Fig. 63, the number of halftone dot use drawing pixels is increased as the halftone dot% value is increased as 10%, 20%, ... 90%, so that the image portions 850_1a becomes large, and the number of noise use drawing pixels is also increased and the image portions 850_1b are scattered out of the image portions 850_1a. However, the noise use drawing pixel does not appear on the halftone dot portion 850_1 at the upper left, which is the highlighting range (0% to 10% in dot% ) value). The noise use drawing pixel is formed by the light ink, and thus it is possible originally to avoid graininess. However, according to the halftone dot conversion apparatus 700 of the present embodiment, in the event that the density at the highlight side is of light color, it is possible to suppress graininess more effectively.

With the above description, the embodiments have been explained in conjunction with Fig. 58 to Fig. 63 illustrating the AM halftone dot and the noise use drawing pixels scattered outside of the AM halftone dot. Hereinafter, there will be explained a halftone dot image formed by the AM halftone dot and the noise use drawing pixels.

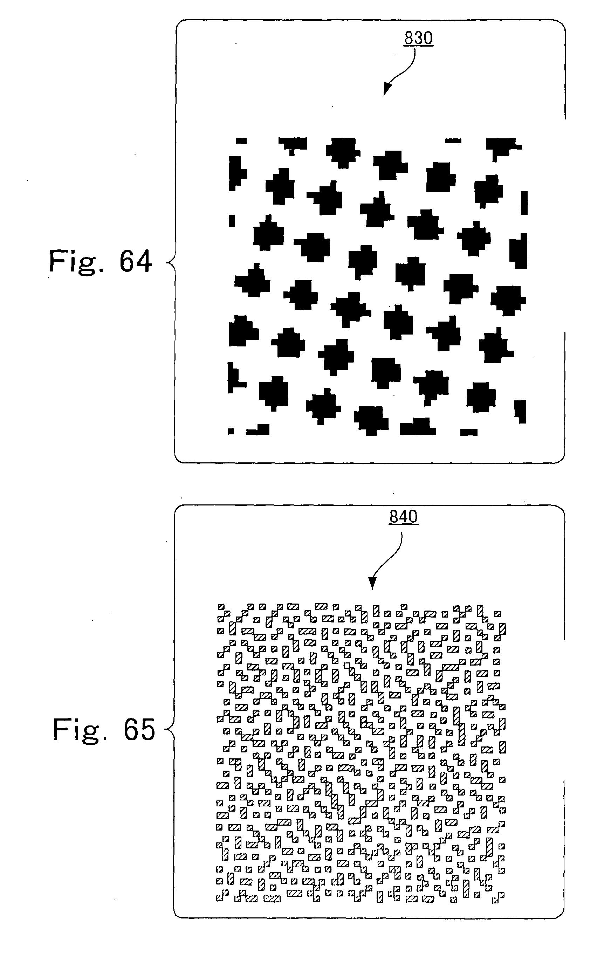

Fig. 64 is a view showing an example of an image for dark ink. The dark ink use image 830, which is also shown in Fig. 57, represents an image constructed of AM halftone dots periodically arranged.

Fig. 65 is a view showing an example of an image for light ink. The light ink use image 840, which is also shown in Fig. 57, represents an image of FM halftone dots irregularly arranged.

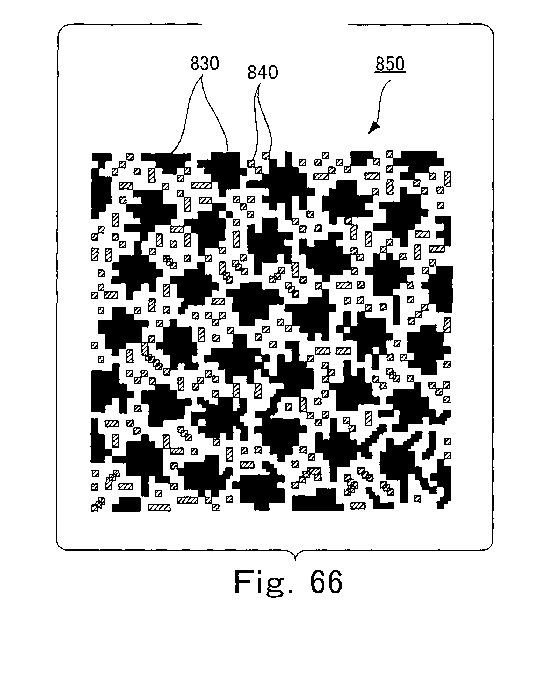

Fig. 66 is a view showing an example of a halftone dot image. The halftone dot image 850, which is also shown in Fig. 57, represents an image in which the light ink use images 840 or noise use drawing pixels are scattered around the dark ink use images 830 constituting the halftone dot. An output device, such as the large scale ink jet printer 200 shown in Fig. 1, creates the halftone dot image 850 in such a manner that the dark ink use images 830 are outputted with dark inks for CMYK colors, and further the light ink use images 840 are outputted with light inks for LC, LM, LY, G colors corresponding to CMYK colors so as to be superposed on the dark ink use images 830.

The above-mentioned description is concerned with an explanation in which one color of CMYK four colors is taken into consideration, and it is acceptable that the above-mentioned halftone dot conversion processing is applied to dot% data for each of CMYK four colors. However, according to the halftone dot conversion section of the present embodiment, as will be explained hereinafter, the halftone dot conversion processing is varied in accordance with colors.

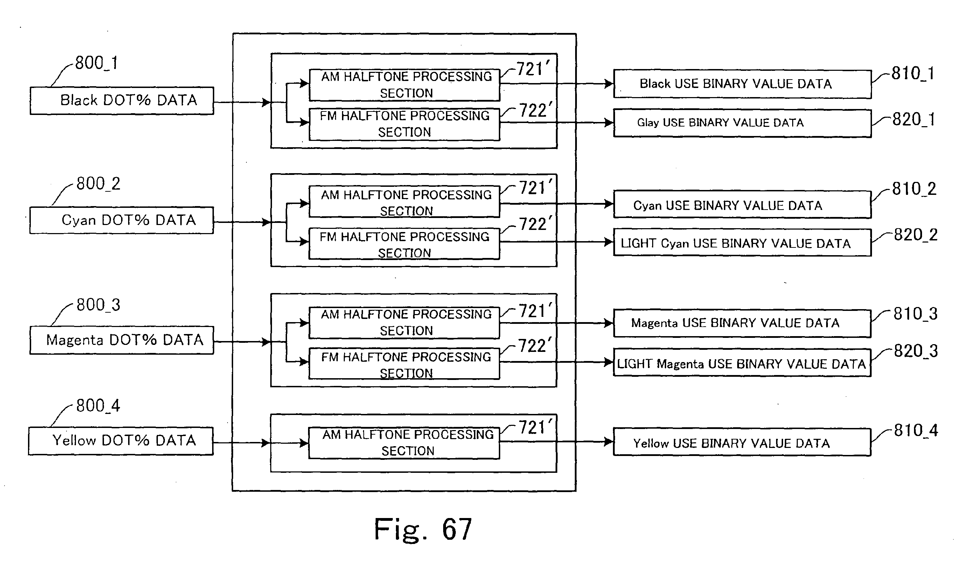

Fig. 67 is an explanatory view useful for understanding how the halftone dot conversion is varied in accordance with colors.

Here, it is assumed that instead of the AM halftone processing section 721 and the FM halftone processing section 722, there are used an AM halftone processing section 721' and a FM halftone processing section 722' for another way as to how the halftone dot conversion is varied in accordance with colors.

The AM halftone processing section 721' and the FM halftone processing section 722' receive dot% data 810_1, 810_2, 810_3, and 810_4 for CMYK four colors to apply the halftone dot conversion processing to the respective dot% data. To the dot% data 810_1, 810_2, and 810_3 for CMK three colors, of the CMYK four colors, the AM halftone processing section 721' and the FM halftone processing section 722' apply the halftone dot conversion processing, and to the dot% data 810_4 for Y color, of the CMYK four colors, only the AM halftone processing section 721' applies the halftone dot conversion processing, and the FM halftone processing section 722' does not apply the halftone dot conversion processing.

As the halftone dot conversion processing is varied in accordance with colors by the AM halftone processing section 721' and the FM halftone processing section 722', AM binary value data (810_1, 810_2, and 810_3) for CMK three colors, which are representative of AM halftone dots, and FM binary value data (820_1, 820_2, and 820_3) for CMK three colors, which are representative of noise use drawing pixels scattered out of the AM halftone dots, can be obtained, and only AM binary value data (810_4) for Y color, which is representative of AM halftone dots, can be obtained.

As compared with density of CMK three colors, density of Y color is lower, and thus the interference between the periodical noises occurred on ink jet printers and the like and the periodical structure of halftone dots is hard to occur on Y color. And it is possible for Y color to use AM halftone dots to be essentially reproduced as it is. Accordingly, it is preferable that the above-mentioned use of different halftone dot conversion processing according to colors is performed.

Next, there will be explained a modification as to how the halftone dot conversion processing is varied in accordance with colors.

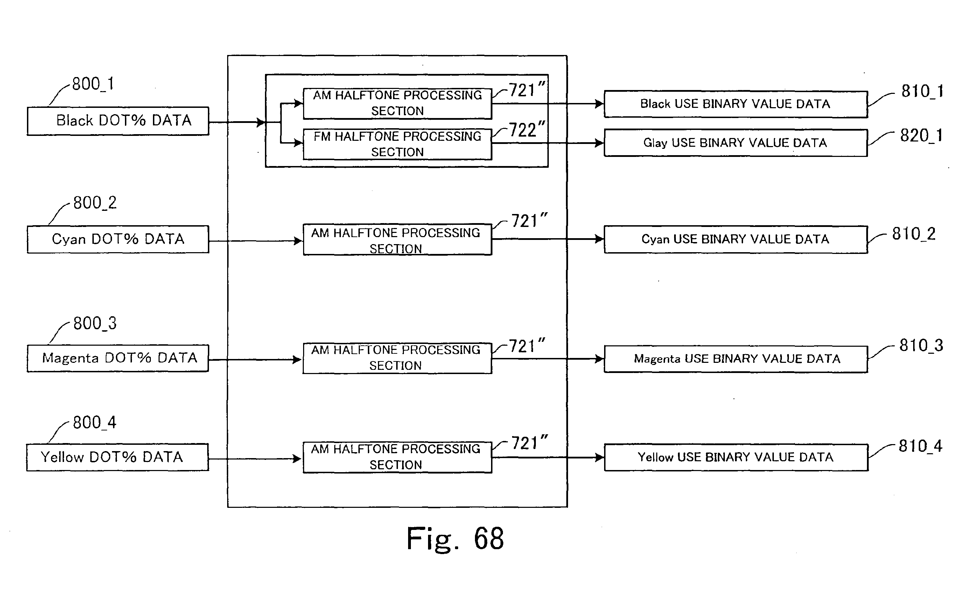

Fig. 68 is an explanatory view useful for understanding a modification as to how the halftone dot conversion is varied in accordance with colors.

Here, it is assumed that the AM halftone processing section 721' and the FM halftone processing section 722' shown in Fig. 67 are replaced by an AM halftone processing section 721" and an FM halftone processing section 722" for performing another use of different halftone dot conversion processing according to colors. The AM halftone processing section 721" and the FM halftone processing section 722" also receives dot% data 800_1, 800_2, 800_3, and 800_4 for CMYK four colors to apply the halftone dot conversion processing to the respective dot% data. To dot% data 800_1 for K color, of the CMYK four colors, the AM halftone processing section 721" and the FM halftone processing section 722" apply the halftone dot conversion processing. And to the dot% data 800_2, 800_3, and 800_4 for CMY three colors, of the CMYK four colors, only the AM halftone processing section 721" applies the halftone dot conversion processing, and the FM halftone processing section 722" does not apply the halftone dot conversion processing.

As the halftone dot conversion processing is varied in accordance with colors by the AM halftone processing section 721" and the FM halftone processing section 722", AM binary value data 810_1 and FM binary value data 820_1 for K color can be obtained, and AM binary value data 810_2, 810_3, and 810_4 for CMY three colors can be obtained.

As compared with density of CMY three colors, density of K color is lower, and thus the interference between the periodical noises occurred on ink jet printers and the like and the structure of halftone dots occurs extremely on K color. Thus, it is preferable that the above-mentioned use of different halftone dot conversion processing according to colors is performed in such a manner that the halftone dots, in which noise use drawing pixels are scattered, are used for only the halftone dot conversion processing for K color, of the CMYK four colors, and the AM halftone dots to be essentially reproduced are used for halftone dot conversion processing for CMY three colors.

With the above description, the explanation for eighth embodiment will be terminated, and there will be explained a ninth embodiment different from the above-mentioned eighth embodiment. A halftone dot conversion apparatus of the ninth embodiment has the same structure as the halftone dot conversion apparatus 700 shown in Fig. 57, but be different from that in processing to be performed in the AM halftone processing section and the FM halftone processing section. Hereinafter, there will be explained only different points from the eighth embodiment.

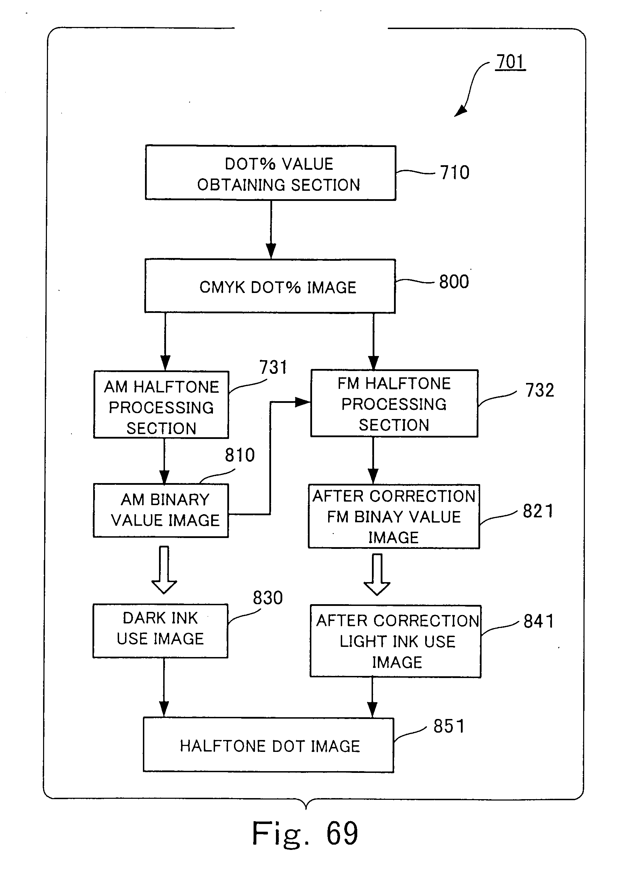

Fig. 69 is a functional block diagram of the ninth embodiment of a halftone dot conversion apparatus of the present invention.

A halftone dot conversion apparatus 701 shown in Fig. 69 comprises the dot% value obtaining section 710, the AM halftone processing section 731, and the FM halftone processing section 732. The halftone dot conversion apparatus 701 is different from the halftone dot conversion apparatus 700 shown in Fig. 57 only in functions of the AM halftone processing section 731 and the FM halftone processing section 732.

The dot% value obtaining section 710 obtains dot% data 800 for CMYK colors via the communication network 300 shown in Fig. 1 and transmits the thus obtained dot% data 800 to both the AM halftone processing section 731 and the FM halftone processing section 732.

The AM halftone processing section 731 creates AM binary value data 810 representative of halftone dots in accordance with dot% data 800 transmitted from the dot% value obtaining section 710, by the same processing as the eighth embodiment. The AM binary value data 810 thus created is transmitted to an output device such as the large scale ink jet printer 200 shown in Fig. 1, and also to the FM halftone processing section 732 different from the eighth embodiment.

The FM halftone processing section 732 first creates FM binary value data 820 (cf. Fig. 57) representative of noise use drawing pixels in accordance with dot% data 800 transmitted from the dot% value obtaining section 710, by the same processing as the eighth embodiment.

Here, the FM binary value data 820 created by the FM halftone processing section 732 is transmitted directly to the output device, so that the halftone dots and the noise use drawing pixels are formed on a recording paper in accordance with the AM binary value data 810 and the FM binary value data 820. As a result, in an image portion in which the halftone dots are superposed on the noise use drawing pixels, many droplets of ink are superposed on one another. Superposition of many droplets of ink on a recording paper may bring about a possibility of occurrence of inconveniences such as an overflow of ink on the recording paper, a distortion of the recording paper due to absorption of a large amount of inks, a crack when inks have dried, and coming off of inks. In order to solve those inconveniences, the FM halftone processing section 732 according to the ninth embodiment performs processing for omitting noise use drawing pixels on an image portion in which halftone dots are superposed on the noise use drawing pixels.

The FM halftone processing section 732 thins out from the created FM binary value data 820 an image portion overlapping with the AM binary value data 810 transmitted from the AM halftone processing section 731, and creates after correction FM binary value data 821. The thus created after correction FM binary value data 821 is transmitted to an output device such as the large scale ink jet printer 200 shown in Fig. 1.

The large scale ink jet printer 200 outputs a dark ink use image 830 based on the AM binary value data 810 using dark inks for CMYK colors, and outputs a light ink use image 841 based on the after correction FM binary value data 821 using light inks for LC, LM, LY, G colors, so that a halftone dot image 851 is created. The halftone dot image 851 is an image corrected in such a manner that an image portion, in which the dark ink use image 830 of the halftone dot image 850 shown in Fig. 66 is superposed on the light ink use image 840, is corrected to omit the light ink. However, the halftone dot image 851 is the same as the halftone dot image 850 shown in Fig. 57 and Fig. 66 on a visual basis. In this manner, in the image portion in which the halftone dots are superposed on noise use drawing pixels, when the noise use drawing pixels are omitted, it is possible to prevent inconveniences such as coming off of inks, and further it is possible to suppress consumption of useless inks.

With the above-mentioned description, the explanation of the eighth and ninth embodiments will be terminated.

Incidentally, according to the above-mentioned explanation, there are disclosed the embodiments of the halftone dot conversion apparatus connected to a large scale ink jet printer. However, a halftone dot conversion apparatus of the present invention is not restricted to one connected to an ink jet printer. It is acceptable that a halftone dot conversion apparatus of the present invention is an apparatus independent of a printer, or alternatively one to be connected to a printer other than the ink jet printer.

According to the above-mentioned explanation, there is disclosed an example of a halftone dot conversion section in which noise use drawing pixels are scattered outside halftone dots in accordance with the FM halftone dots in which the drawing pixels are increased or decreased in accordance with tone values. However, it is acceptable that the halftone dot conversion section referred to in the present invention is one in which noise use drawing pixels, which are fixed in number, regardless of the tone value, are scattered outside halftone dots.

Further, according to the above-mentioned explanations of the embodiments, as the embodiments of a dot matrix of the present invention, there are disclosed the embodiments of the dot matrix defining geometry of one halftone dot. However, it is acceptable that a dot matrix of the present invention is a dot matrix defining geometry of a halftone dot group consisting of a plurality of halftone dots.

As mentioned above, according to the present invention, there are provided a halftone dot conversion apparatus, a halftone dot program storage medium storing a halftone dot program, and a dot matrix, which are capable of reducing an interference between the periodical noises and the periodical structure of halftone dots, and of avoiding graininess and preventing a distortion of geometry of halftone dots.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. A halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters blanks of the drawing pixels about the halftone dots, on at least a predetermined range of tone values.

2. A halftone dot conversion apparatus according to claim 1, wherein the halftone dot conversion section always scatters the blanks of the drawing pixels about the halftone dots, at associated positions, respectively, regardless of the tone values.

3. A halftone dot conversion apparatus according to claim 1, wherein the halftone dot conversion section increases or decreases the number of blanks scattered about the halftone dots in accordance with the tone values.

4. A halftone dot conversion apparatus according to claim 1, wherein the halftone dot conversion section determines geometry of halftone dots using a dot matrix defining halftone dots by an arrangement of thresholds to be compared with the tone values.

5. A halftone dot conversion apparatus according to claim 1, wherein the halftone dot the halftone dot conversion section further comprises:
a set geometry determination section that determines geometry of the sets in accordance with the tone values obtained by the tone value obtaining section;
a blank position determination section that determines candidate positions for blanks scattered about the sets; and
a synthesizing section that synthesizes the geometry of the sets determined by the set geometry determination section with the candidate positions determined by the blank position determination section.

6. A halftone dot conversion apparatus according to claim 5, wherein the tone image data represents with the tone values a plurality of color separation images in which a color image is color-separated with a plurality of colors, and
wherein the blank position determination section determines candidate positions for blanks in the color separation images, by means of using a blank position definition in which the candidate positions for blanks are defined on a unit area on an image and are repeatedly utilized on the image, and as the blank position definition, mutually different sizes of unit areas being applied for the plurality of color separation images.

7. A halftone dot conversion apparatus according to claim 1, wherein the tone image data represents with the tone values a plurality of color separation images in which a color image is color-separated with a plurality of colors, and
wherein the halftone dot conversion section scatters blanks, in which arrangement patterns are mutually different from one another, about the halftone dots, for the plurality of color separation images.

8. A halftone dot conversion apparatus according to claim 1, wherein the halftone dot conversion section has a plurality of halftone dot conversion systems including a first halftone dot conversion system that forms the halftone dots by sets of drawing pixels number of which is associated with the tone values obtained by the tone value obtaining section, and scatters blanks of the drawing pixels about the halftone dots, on at least predetermined range of tone values, and wherein the halftone dot conversion section uses the first halftone dot conversion system of the plurality of halftone dot conversion systems, on image data for an ink jet printer.

9. A halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters drawing pixels out of the halftone dots, on tone values except for a predetermined range in highlight.

10. A halftone dot conversion apparatus according to claim 9, wherein the tone image data represents an image with tone values representative of dot% density of 0% to 100%, and
wherein the halftone dot conversion section uses, as the predetermined range, a range between lower limit 0% of the tone values and upper limit 5% to 15%.

11. A halftone dot conversion apparatus according to claim 9, wherein the halftone dot conversion section determines geometry of the halftone dots using a dot matrix defining halftone dots by an arrangement of thresholds to be compared with the tone values.

12. A halftone dot conversion apparatus according to claim 9, wherein the halftone dot the halftone dot conversion section further comprises:
a set geometry determination section that determines geometry of the sets in accordance with the tone values obtained by the tone value obtaining section;
a scattering position determination section that determines candidate positions for drawing pixels scattered out of the sets; and
a synthesizing section that synthesizes the geometry of the sets determined by the set geometry determination section with the candidate positions determined by the scattering position determination section.

13. A halftone dot conversion apparatus according to claim 9, wherein the halftone dot conversion section increases or decreases the number of drawing pixels scattered out of the halftone dots in accordance with the tone values.

14. A halftone dot conversion apparatus according to claim 9, wherein the tone image data represents images of four colors of cyan, magenta, yellow, and black, and
wherein the halftone dot conversion section scatters drawing pixels out of the halftone dots, only when the color of the image is black.

15. A halftone dot conversion apparatus according to claim 9, wherein the tone image data represents images of four colors of cyan, magenta, yellow, and black, and
wherein the halftone dot conversion section scatters drawing pixels out of the halftone dots, only when the color of the image is another color except yellow.

16. A halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of a first drawing pixels number of which is associated with the tone values obtained by the tone value obtaining section, and scatters a second drawing pixels having a color lighter than a color of the first drawing pixels out of the halftone dots.

17. A halftone dot conversion apparatus according to claim 16, wherein the halftone dot conversion section scatters the second drawing pixels out of the halftone dots, on tone values except for a predetermined range in highlight.

18. A halftone dot conversion apparatus according to claim 17, wherein the tone image data represents an image with tone values representative of dot% density of 0% to 100%, and
wherein the halftone dot conversion section uses, as the predetermined range, a range between lower limit 0% of the tone values and upper limit 5% to 15%.

19. A halftone dot conversion apparatus according to claim 16, wherein the halftone dot conversion section increases or decreases the number of the second drawing pixels scattered out of the halftone dots in accordance with the tone values.

20. A halftone dot conversion apparatus according to claim 16, wherein the tone image data represents images of four colors of cyan, magenta, yellow, and black, and
wherein the halftone dot conversion section scatters the second drawing pixels out of the halftone dots, only when the color of the image is black.

21. A halftone dot conversion apparatus according to claim 16, wherein the tone image data represents images of four colors of cyan, magenta, yellow, and black, and
wherein the halftone dot conversion section scatters the second drawing pixels out of the halftone dots, only when the color of the image is another color except yellow.

22. A halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters blanks of the drawing pixels about the halftone dots, on at least a predetermined range of tone values.

23. A halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of drawing pixels number of which is associated with the tone values obtained by the tone value obtaining section, and scatters drawing pixels out of the halftone dots, on tone values except for a predetermined range in highlight.

24. A halftone dot conversion program storage medium for storing a halftone dot conversion program which causes a computer system to operate, when the halftone dot conversion program is executed in the computer system, as a halftone dot conversion apparatus for converting tone image data representative of an image with tone values into halftone dot image data representative of an image with halftone dots having sizes according to the tone values, the halftone dot conversion apparatus comprising:
a tone value obtaining section that obtains tone values of the tone image data; and
a halftone dot conversion section that forms the halftone dots by sets of a first drawing pixels number of which is associated with the tone values obtained by the tone value obtaining section, and scatters a second drawing pixels having a color lighter than a color of the first drawing pixels out of the halftone dots.

25. A dot matrix defining halftone dots consisting of sets of drawing pixels number of which is associated with tone values by an arrangement of thresholds to be compared with the tone values, the dot matrix comprising:
a first threshold group defining a set geometry according to the tone values; and
a second threshold group defining blanks scattering inside the set geometry defined by the first threshold group on tone values in at least a predetermined range.

26. A dot matrix defining halftone dots consisting of sets of drawing pixels number of which is associated with tone values by an arrangement of thresholds to be compared with the tone values, the dot matrix comprising:
a first threshold group defining a set geometry according to the tone values; and
a second threshold group defining drawing pixels scattering outside the set geometry defined by the first threshold group on tone values except for a predetermined range in highlight.
